# EUROPEAN PATENT APPLICATION

(11) **EP 2 700 528 A2**
(43) Date of publication of application: **26.02.2014**
(21) Application number: 13192331.0
(22) Date of filing: 18.03.2009
(51) Int. Cl.: B60K 37/06, B60R 11/02, G01C 21/36, G06F 3/0488, G06F 3/01, G06F 3/03, G06F 3/042, B60R 1/12, B60R 11/00

(54) **Vehicular manipulation input apparatus**

(30) Priority: 19.03.2008 JP 2008071467; 19.03.2008 JP 2008071468; 19.03.2008 JP 2008071470; 14.11.2008 JP 2008291592; 30.01.2009 JP 2009021003; 30.01.2009 JP 2009021004; 30.01.2009 JP 2009021005
(62) Divisional of application: 09723615.2
(71) Applicant: Denso Corporation, Kariya-city, Aichi 448-8661 (JP)
(72) Inventor: Aoki, Takashi, Kariya-city, Aichi-pref., 448-8661 (JP); Akahori, Ichiro, Kariya-city, Aichi-pref., 448-8661 (JP); Niwa, Shinji, Kariya-city, Aichi-pref., 448-8661 (JP); Itoh, Masahiro, Kariya-city, Aichi-pref., 448-8661 (JP); Kawashima, Takeshi, Kariya-city, Aichi-pref., 448-8661 (JP); Nagata, Takashi, Kariya-city, Aichi-pref., 448-8661 (JP)
(74) Representative: Klingseisen, Franz

(57) **Abstract**

A vehicular manipulation input apparatus for a vehicle includes a manipulation panel (12a), and a display device (15) which displays a position indication image (200H) for displaying an indication position on the manipulation panel (12a) It is specified whether a finger state of a hand opposing the manipulation panel (12a) is a manipulation intention expression-use finger state. In a condition that the vehicle is in a travel state, a display of the position indication image (200H) is permitted when the finger state is specified as the manipulation intention expression-use finger state whereas a display of the position indication image (200H) is prohibited when the finger state is not specified as the manipulation intention expression-use finger state.

## Description

### Cross Reference To Related Application

The present application is based on and incorporates herein by reference Japanese Patent Application No. 2008-71467 filed on March 19, 2008, Japanese Patent Application No. 2008-71468 filed on March 19, 2008, Japanese Patent Application No. 2008-71470 filed on March 19, 2008, Japanese Patent Application No. 2008-291592 filed on November 14, 2008, Japanese Patent Application No. 2009-21003 filed on January 30, 2009, Japanese Patent Application No. 2009-21004 filed on January 30, 2009, and Japanese Patent Application No. 2009-21005 filed on January 30, 2009.

### Technical Field

The present invention relates to a vehicular manipulation input apparatus

### Background Art

[Patent document 1] JP-2000-6687 A

In recent years, there is developed a manipulation input apparatus, which manipulates a device remotely, such as a prompter-type manipulation input apparatus (Patent document 1). In such a manipulation input apparatus, separately of a display device to display a manipulation display window (main display window), a remote manipulation section is provided at a reach of a hand of a manipulator. Furthermore, the image of the hand manipulating the remote manipulation section is captured and extracted. Thus obtained hand image and hand's manipulation are reflected in the manipulation display window (main display window) of the display device. Thus, the display control can be made as if the hand directly touched the manipulation display window. The manipulation input apparatus can be provided in a vehicle. In such a case, to improve the manipulability, a remote manipulation section is arranged within a reach of a hand of a user who is seated on a seat. The remote manipulation section is often configured to be a manipulation section of a touch manipulation type having a touch manipulation area.

The remote manipulation section of the above manipulation input apparatus is arranged at the reach of the use's hand, thus posing a problem that the manipulation section is touched without user's intention, thereby causing an incorrect manipulation input. In particular, in case that the manipulation section is a touch manipulation type such as a touch panel, an input may be executed by unintentionally touching it.

Furthermore, in case that the hand manipulation to the remote manipulation section is actually displayed on the manipulation display window in the above manipulation input apparatus, only a finger is displayed when the hand is close to the remote manipulation section. However, some users perform a touch manipulation input by the five fingers of one hand in order to input earlier. Herein, the several fingers aligning in a row are displayed in the manipulation display window; thereby, the correspondence relation between the displayed fingers and the finger that the manipulator actually wants to use for position indication is not clear anymore. The mis-manipulation may be caused. In particular, a driver under vehicle driving may not look at the manipulation display window carefully; thus, it is difficult for the driver to perform a manipulation input using the several fingers while driving the vehicle, often causing the mis-manipulation.

### Disclosure of the Invention

It is an object of the present invention to provide a vehicular manipulation input apparatus to help prevent a mis-manipulation in a remote manipulation section.

Furthermore, it is an object of the present invention to further provide a display method for displaying a position indication image to easily specify a finger used for position indication in a display in which an image for indicating positions corresponding to fingers is superimposed on or combined to another image. Further, providing of a display apparatus using the above display method, and a manipulation input apparatus having the foregoing display apparatus is another object of the present invention.

As an example of the present invention, a vehicular manipulation input apparatus is provided as follows. A display section is configured to have a display window for executing an operation, etc., of a device provided in a vehicle. A remote manipulation section is provided at a position separated from the display window, the remote manipulation section having a remote manipulation area for remotely executing the manipulation input in the display window. An input reception section is configured to receive an input corresponding to a press manipulation position based on a press manipulation to the remote manipulation area. A hand image capture section is configured to capture an image of a hand that opposes the remote manipulation area. A position indication image display section is configured to display a position indication image, which is generated based on the captured image of the hand, at a position on the display window, the position being indicated by the hand. A predetermined finger state specification section is configured to specify whether a finger state of the hand opposing the remote manipulation area is a predetermined finger state. A display mode assignment section is configured to execute a display mode switch-over control of a display mode assigned to the position indication image display section. The display mode assignment section assigns the display mode with a display permission mode to permit a display of the position indication image when the predetermined finger state is specified, and assigns the display mode with a display prohibition mode to prohibit a display of the position indication image when the predetermined finger state is not specified.

As an example of the present invention, a display method for a display apparatus is provided as follows. The display apparatus includes a display section to have a display window, and a remote manipulation section to have a remote manipulation area used to remotely perform a manipulation to the display window. The display method is for displaying a position indication image in the display apparatus. As a finger opposes in front of the remote manipulation section, the position indication image is displayed at an on-window position on the display window corresponding to a position of the finger in such a manner to be combined to or superimposed on an image of a background. The method further comprises: a predetermined finger state specification step of specifying whether a finger state of the hand opposing the remote manipulation area is a predetermined finger state; a step of assigning the display mode with a display permission mode to permit a display of the position indication image when the predetermined finger state is specified; and a step of assigning the display mode with a display prohibition mode to prohibit a display of the position indication image when the predetermined finger state is not specified.

As another example of the present invention, a display method for a display apparatus is provided as follows. The display apparatus includes a display section to have a display window, and a remote manipulation section to have a remote manipulation area used to remotely perform a manipulation to the display window. The display method is for displaying a position indication image in the display apparatus. As a finger opposes in front of the remote manipulation section, the position indication image is displayed at an on-window position on the display window corresponding to a position of the finger in such a manner to be combined to or superimposed on an image of a background. The display method further comprises: a finger specification step of specifying a finger in a hand opposing in front of the remote, manipulation section; a manipulation target finger assignment step of assigning, from the specified finger, a manipulation target finger, which is used or estimated to be used for a manipulation to the remote manipulation section; a display step of displaying the position indication image indicating an indication position of the specified finger in such a manner to be combined to or superimposed on an image of a background on the display window; and a position indication image highlight step of executing a highlight display of a position indication image corresponding to the assigned manipulation target finger among the displayed position indication image so as to relatively highlight in comparison with a position indication image corresponding to a finger different from the manipulation target finger.

### Brief Description of the Drawings

The above and other objects, features, and advantages of the present invention will become more apparent from the following detailed description made with reference to the accompanying drawings.
In the drawings:
FIG. 1 is a block diagram illustrating a configuration of a vehicular navigation apparatus using a manipulation input apparatus of an example of a touch type input apparatus of the first embodiment of the present invention;
FIG. 2 is a perspective view of a main portion of a vehicle compartment for explaining an outline of the vehicular manipulation input apparatus;
FIG. 3 is a sectional view illustrating the first configuration of a manipulation information input section;
FIG. 4 is a first diagram for explaining an image capture and display of a hand opposing a manipulation panel in the first example of the first embodiment;
FIG. 5 is the second diagram for explaining an image capture and display of a hand opposing a manipulation panel in the first example of the first embodiment;
FIG. 6 is the third diagram for explaining an image capture and display of a hand opposing a manipulation panel in the first example of the first embodiment;
FIG. 7 is the fourth diagram for explaining an image capture and display of a hand opposing a manipulation panel in the first example of the first embodiment;
FIG. 8 is a view illustrating an example of an image captured to specify a manipulator;
FIG. 9 is a flowchart illustrating a position indication image display process in the first example of the first embodiment;
FIG. 10 is a flowchart illustrating a touch manipulation input process in the first example of the first embodiment;
FIG. 11 is a flowchart illustrating a position indication image display process in the second example of the first embodiment;
FIG. 12 is a flowchart illustrating a position indication image display process in the third example of the first embodiment;
FIG. 13 is a flowchart illustrating a position indication image display process in the fourth example of the first embodiment;
FIG. 14 is a flowchart illustrating a touch manipulation input process in the fifth example of the first embodiment;
FIG. 15 is a perspective view of a main portion of a vehicle compartment for explaining an outline (the sixth example) of a vehicular manipulation input apparatus different from FIG. 2;
FIG. 16 is an example of set-up of a vehicle velocity threshold value in the second example up to the fourth example:
FIG. 17 is a flowchart illustrating a position indication image display process in the seventh example of the first embodiment;
FIG. 18 is a diagram illustrating an example of a display permission period for which a set-up is permitted in the first embodiment;
FIG. 19 is a diagram illustrating a display permission period for which a set-up is permitted in the seventh example of the first embodiment;
FIG. 20 is a diagram illustrating a display permission period for which a set-up is permitted in the eighth example of the first embodiment;
FIG. 21 is a flowchart illustrating a highlight display process for a position indication image in the ninth example of the first embodiment;
FIG. 22 is an example of a manipulation display window in the first embodiment;
FIG. 23 is an example of a manipulation display window in the first embodiment;
FIG. 24 is an example of a manipulation display window in the first embodiment;
FIG. 25 is a flowchart illustrating a highlight display process for a position indication image in the tenth example of the first embodiment;
FIG. 26 is a flowchart illustrating the first modification of a specification process for a manipulation target finger in the tenth example of the first embodiment;
FIG. 27 is the first diagram for explaining an image capture and display of a hand opposing a manipulation panel in the tenth example of the first embodiment;
FIG. 28 is the second diagram for explaining an image capture and display of a hand opposing a manipulation panel in the tenth example of the first embodiment;
FIG. 29 is diagrams explaining a specification method of a fingertip;
FIG. 30 is diagrams explaining the first example of a method to specify a manipulation target finger in the example of FIG. 26;
FIG. 31 is diagrams explaining the second example of a method to specify a manipulation target finger in the example of FIG. 26;
FIG. 32 is diagrams explaining the third example of a method to specify a manipulation target finger in the example of FIG. 26;
FIG. 33 is a flowchart illustrating an example of a time-basis change in a highlight display process for a position indication image in the tenth example of the first embodiment;
FIG. 34 is a flowchart illustrating the second modification of a specification process for a manipulation target finger in the tenth example of the first embodiment;
FIG. 35 is diagrams explaining the first example of a method to specify a manipulation target finger in the second modification of the tenth example of the first embodiment;
FIG. 36 is diagrams explaining the second example of a method to specify a manipulation target finger in the second modification of the tenth example of the first embodiment;
FIG. 37 is a flowchart illustrating the third modification of a specification process for a manipulation target finger in the tenth example of the first embodiment;
FIG. 38 is diagrams explaining an example of a method to specify a manipulation target finger in the third modification of the tenth example of the first embodiment;
FIG. 39 is a flowchart illustrating the fourth modification of a specification process for a manipulation target finger in the tenth example of the first embodiment;
FIG. 40 is a flowchart illustrating the fifth modification of a specification process for a manipulation target finger in the tenth example of the first embodiment;
FIG. 41 is diagrams explaining an example of a method to specify a manipulation target finger in the fifth modification of the tenth example of the first embodiment;
FIG. 42 is a flowchart illustrating the sixth modification of a specification process for a manipulation target finger in the tenth example of the first embodiment;
FIG. 43 is diagrams explaining an example of a method to specify a manipulation target finger in the sixth modification of the tenth example of the first embodiment;
FIG. 44 is a flowchart illustrating the seventh modification of a specification process for a manipulation target finger in the tenth example of the first embodiment;
FIG. 45 is diagrams explaining the first example of a method to specify a manipulation target finger in the seventh modification of the tenth example of the first embodiment;
FIG. 46 is diagrams explaining the second example of a method to specify a manipulation target finger in the seventh modification of the tenth example of the first embodiment;
FIG. 47 is a flowchart illustrating a display example of a highlight display for a position indication image in the tenth example of the first embodiment;
FIG. 48 is a flowchart illustrating a display example of a highlight display for a position indication image in the tenth example of the first embodiment;
FIG. 49 is a perspective view for schematically illustrating a manipulation section which requires a pinch manipulation in the eleventh modification of the tenth example of the first embodiment;
FIG. 50 is examples of capture images from the x direction, y direction, and z direction illustrated in FIG. 49;
FIG. 51 is an example of a display image based on FIG. 50;
FIG. 52 is an example, different from FIG. 51, of a display image based on FIG. 50;
FIG. 53 is a diagram explaining an example of a method to specify a manipulation target finger in the eleventh modification of the tenth example of the first embodiment;
FIG. 54 is a flowchart showing a flow of a finger trace process;
FIG. 55 is a flowchart following FIG. 54;
FIG. 56 is a diagram explaining trace information stored in a control circuit to predict a fingertip position;
FIG. 57 is a diagram explaining a basic algorithm to trace a fingertip between moving image firames;
FIG. 58 is diagrams illustrating a computation method for an appearance prediction position of a fingertip (finger);
FIG. 59 is a diagram explaining a computation method for an appearance prediction position in a next frame of a fingertip which newly appeared in a previous frame;
FIG. 60 is a diagram explaining a new appearance of a fingertip, and a disappearance of a fingertip;
FIG. 61 is a flowchart illustrating an example of a time-basis change in a highlight display process for a position indication image in the tenth example of the first embodiment;
FIG. 62 is a flowchart illustrating an example of a time-basis change in a highlight display process for a position indication image in the tenth example of the first embodiment;
FIG. 63 is a flowchart illustrating a display example of a highlight display for a position indication image in the tenth example of the first embodiment;
FIG. 64 is a flowchart illustrating a display example of a highlight display for a position indication image in the tenth example of the first embodiment;
FIG. 65 is a flowchart illustrating a display example of a highlight display for a position indication image in the tenth example of the first embodiment;
FIG. 66 is a diagram of a display example to display a position indication image using a false finger image in the first embodiment;
FIG. 67 is a diagram of a display example to display a position indication image using a fingertip position image in the first embodiment;
FIG. 68 is a diagram explaining the second example of a predetermined finger state;
FIG. 69 is a perspective view of a main portion of a vehicle compartment for explaining an outline (sixth example) of a vehicular manipulation input apparatus different from FIG. 2 and FIG. 15;
FIG. 70 is a diagram explaining the third example of a predetermined finger state;
FIG. 71 is a diagram explaining the fourth example of a predetermined finger state;
FIG. 72 is a diagram explaining the fifth example of a predetermined finger state;
FIG. 73 is a diagram illustrating an example of a display window condition of an execution target for a display mode switchover control;
FIG. 74 is a flowchart showing a flow of a touch manipulation input process; and
FIG. 75 is examples of a predetermined finger state.

### Best Modes for Carrying Out the Invention

### 1. First embodiment

### 1.1 First example

Hereinafter, the first example of a manipulation input apparatus according to the first embodiment of the present invention is explained with reference to the drawings.

### (Configuration)

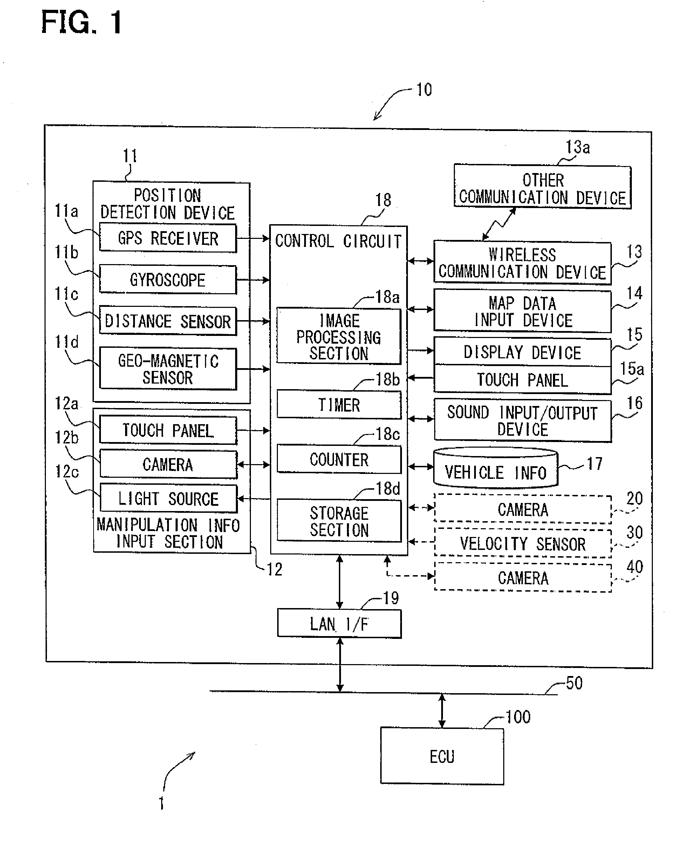

FIG. 1 is a block diagram illustrating a configuration of a vehicular navigation apparatus using a manipulation input apparatus of the present embodiment. Under the present example, in the manipulation input apparatus 1, a display device 15 and a manipulation panel 12a are arranged respectively at different positions. The display device 15 can display an image for manipulation inputs, such as a switch image for touch manipulation (manipulation icon), on a display window. The manipulation panel 12a is used for executing touch manipulation to the display window remotely. It is noted that the touch type manipulation input apparatus of the present example can operate, as an operation target, not only the navigation function, but also functions of other in-vehicle electronic devices which are controlled by an ECU 100 connected via an in-vehicle LAN 50. Those functions include an audio, air-conditioning, power window, and seat adjustment functions.

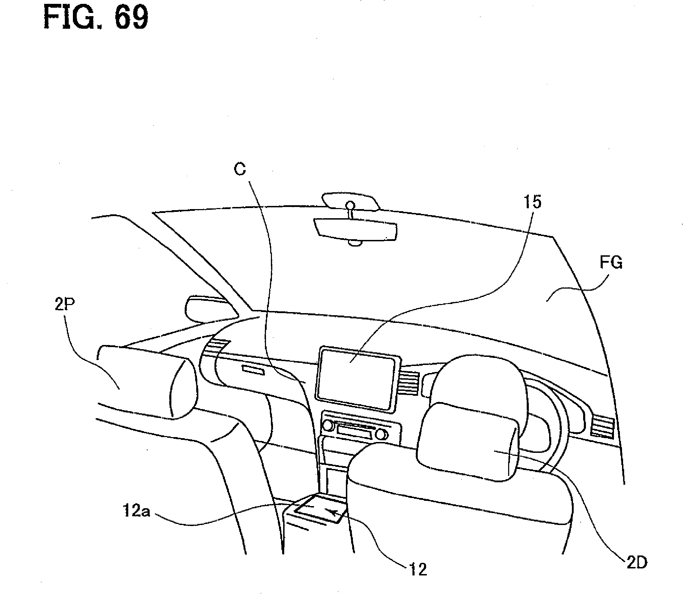

The navigation apparatus 10 includes the following: a position detection device 11 for detecting a present position of the vehicle; a manipulation information input section 12 for inputting the various instructions from a manipulator such as a driver; a map data input device 14 for inputting map data etc. from an outside storage medium recording map data and various kinds of information; a display device 15 for performing various displays such as a map display window or TV (Television) window; a sound input/output device 16 for outputting various kinds of guidance sounds, or inputting sounds of a manipulator such as a driver; a hard disk storage device 17 for storing various kinds of data such as vehicle information; a vehicle I/F (Interface) section 19 for transmitting and receiving vehicle information; a wireless communication device 13 for executing short range wireless communications with another communication device 13a; and a control circuit 18 connected with the above 11 to 19. In addition, the control circuit 18 is also connectable with cameras 20 and 40, and a vehicle velocity sensor 30. In the present example, as shown in FIG. 69, only a camera 12b, which will be explained, may be included.

The position detection device 11 includes the following sensors or the like: a GPS receiver 11a, which receives via a GPS antenna electric waves from satellites for GPS (Global Positioning System) and is used for detecting a position, orientation, or velocity of the vehicle; a gyroscope 11b which detects rotational movement exerted over the vehicle; a distance sensor 11c which detects a travel distance of the vehicle from an acceleration in a front-and-back direction of the vehicle; and a geo-magnetic sensor 11d which detects a heading orientation of the vehicle by geomagnetism. The individual sensors or the like 11a to 11d have different types of detection errors from each other; therefore, they are used to complement each other. In addition, only a part of the sensors or the like may be used depending on the required detection accuracy. Further, another sensor or the like (unshown) such as a revolution sensor of steering and a wheel sensor of a following wheel may be used.

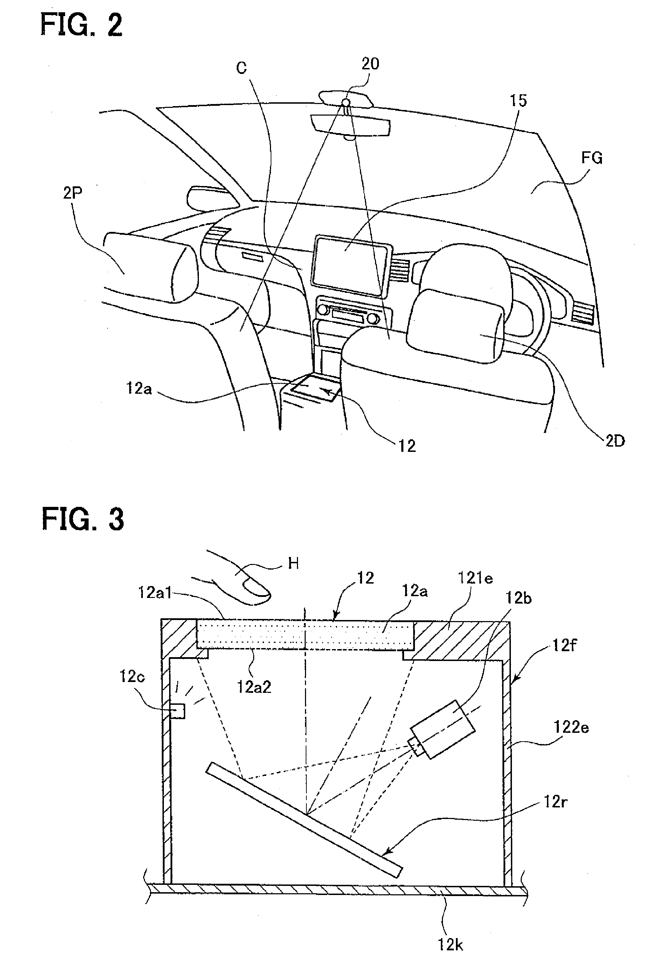

The manipulation information input section 12, as illustrated in FIG. 3, includes a light source 12c which radiates a light of a predetermined wavelength band; a manipulation panel 12a which has translucency and arranged so that the light radiated from the light source 12c may pass through from the side of a rear face 12a2 to the side of a front face 12a1; and a camera (an approaching target image capture section or means) 12b which captures an image from the side of the rear face 12a2 so as to cover the manipulation panel 12a as an image capture range.

The manipulation information input section 12 of the present example, as illustrated in FIG. 2, is arranged, e.g., in a center console portion C, under the lower edge of a vehicular windshield so as to be manipulated from adjacent right and left seats. Furthermore, the manipulation information input section 12 is arranged under the display device 15 and in front of an intermediate position between the both the right and left seats. It is noted that the adjacent right and left seats of the present example signify a driver's seat 2D and a passenger seat 2P in FIG. 2; alternatively, they may be rear-row right and left seats, for example. Furthermore, the manipulation information input section 12 may be arranged not only in the position which can be manipulated from both the right and left seats, but also in any position easily manipulated by a manipulator such as at the steering wheel or door.

The manipulation panel 12a includes a panel having at least translucency relative to the light radiated from the light source 12c. The manipulation panel 12a of the present example is configured as a known touch panel of a resistance film type, which has a lengthwise direction translucent electrode and a transverse direction translucent electrode. An output of the manipulation panel 12a is inputted into the control circuit 18.

As illustrated in FIG. 3, the manipulation panel 12a is inserted in a front end opening of a housing 12f having an inside space. The face 12a1 serves as a touch manipulation area (remote manipulation area). The front end opening is defined by a front end portion 121e of the housing. From an outer edge of the front end portion 121e, a cylindrical wall portion 122e is formed towards a rear side. The rear end of the cylindrical wall portion 122e is fixed to a circuit board 12k. The housing 12f is fixedly arranged at a predetermined position in the vehicle compartment while having a camera 12b and a light source 12c inside.

The light source 12c radiates the light so as to transmit the manipulation panel 12a from the rear face 12a2 to the front face 12a1, as illustrated in FIG. 3. Unless there is an approaching object (for example, a hand etc.) located to cover the touch manipulation area 12a1, the light (irradiation light) from the light source 12c passes outwardly via the touch manipulation area 12a1. In contrast, when there is an approaching object H approaching the touch manipulation area 12a1 so as to oppose the touch manipulation area 12a1, the light is reflected by the approaching object H. A part of the light (reflected light) is thus returned to the side of the rear face 12a2 and captured by the camera 12b.

The light radiated by the light source 12c is reflected by the approaching object H and the reflected light is captured by the camera 12b. The camera 12b thus captures an image of the approaching object H from the side of the rear face 12a2 of the manipulation panel 12a. The camera 12b is fixed to the vehicle body so as to image-capture a predetermined image capture range. Specifically, a reflective member 12r is arranged so that the image capture range can be image-captured by the camera 12b. The camera 12b captures a reflection image. When there is no reflective member 12r, the image capture range is directly image-captured by the camera 12b, thereby requiring an image posterior to image capture to undergo a right-left reversal process.

Under the present example, the light source 12c is an infrared light source. The camera 12b is an infrared camera suitable even for an image capture in a dark place (an unshown infrared filter for shutting out the visible light is provided and an image capture is performed through the filter). The light (infrared light) radiated by the infrared light source 12c is reflected by the approaching object H and the reflection light is captured by the camera 12b, thereby achieving an image capture. The camera 12b is fixedly arranged on a substrate fixed to the vehicle body. An image capture range is designated so as to cover the touch manipulation area 12a1. Moreover, the infrared light source 12c is an LED located at back of the side of the rear face of the manipulation panel 12a. Moreover, the manipulation panel 12a in the present example is configured by a material having a characteristic of transmitting only the light of the light source 12c; thus, the infrared filter in the camera 12b can be unnecessary, and the interior of the housing 12f cannot be seen from an outside.

The camera 12b in the present example functions as an image capture section or means. The camera 12b functions as an approaching object image capture section or means to capture an image of an approaching object which approaches so as to oppose the manipulation panel 12a. If it takes into consideration that a hand is included in an approaching object, the camera 12b may also function as a hand image capture section or means to capture an image of a hand, and furthermore, a finger image capture section or means to capture an image of a finger of a hand.

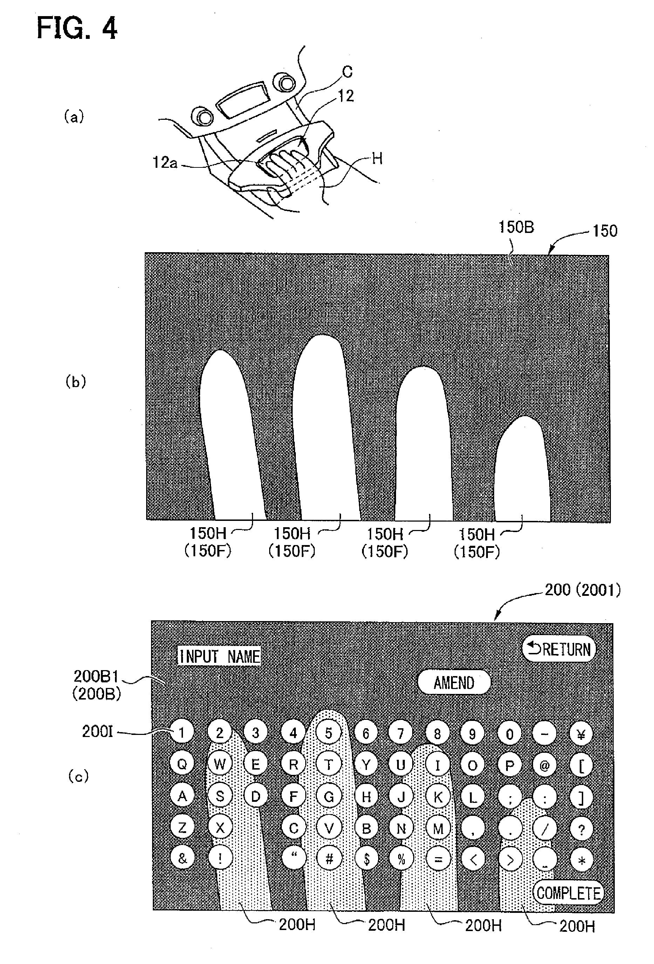

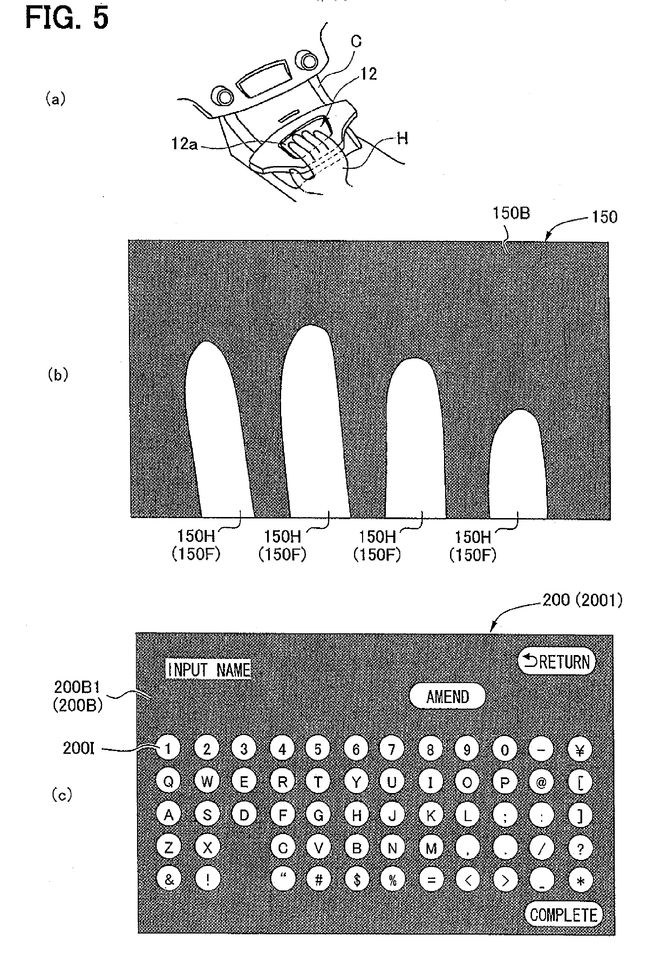

FIGs. 4 to 7 are drawings for explaining image captures of a hand (finger) H which opposes the manipulation panel 12a. Herein, (a) of each drawing illustrates a state of a hand (a state of a finger) opposing the manipulation panel 12a and the front face 12a1. Further, (b) of each drawing is an image 150 which is obtained by the camera 12b to capture an image of the hand in the state in (a), and an image which is captured in a condition that the image capture range is the whole of the manipulation panel 12a. It is noted that the image 150 in (b) in the present example is obtained by the binarization relative to the image posterior to the image capture. In (b), the signs 150H are regions in which an approaching object H is reflected, and the sign 150B is a region in which no image is reflected. Although the region of the sign 150B is actually a region in which the manipulation panel 12a is reflected, the manipulation panel 12a has translucency relative to the light of the light source 12c and is, thereby, not reflected. Moreover, even if the manipulation panel 12a is not reflected, it is not strange that the background (a vehicle compartment ceiling of the vehicle etc.) is reflected over the manipulation panel 12a; however, such a background is removed The background elimination can be performed by using an image of different lighting condition, as described in JP-2007-272596 A. In this connection, (c) of each drawing is an example of a window display in the display device 15 when the image 150 of (b) is captured. It is noted that FIG. 4 (c) shows an example of a window display in a conventional prompter type manipulation input apparatus. In the present example, when the image 150 is as reflected in FIG. 4 (b), a window display becomes as illustrated in FIG. 5 (c).

Returning to FIG. 1, the display device 15 is a color display arranged at a vehicle front side of the driver's seat 2D of FIG. 2 so as to be visible from a driver. The display window is, from the driver, more distant than the touch manipulation area 12a1 is. The display device 15 can use one of a liquid crystal display, plasma display, and organic electroluminescence display. The display device 15 displays a map and associated data in superimposition in a display window. The associated data include a present position mark indicating a present position of the vehicle, which is specified from a present position detected by the position detection device 11 and the map data inputted from the map data input device 14; a guidance route to a destination; names, landmarks, facility marks, etc., further displaying guidance of the facilities. The display device 15 functions as an example of a display section or means.

In addition, the display device 15 has a display window for executing operation of a device which the vehicle is provided with. In the present example, a touch panel 15a is arranged on the display window. The touch panel 12a of the already described manipulation information input section 12 is a remote manipulation section arranged so as to remotely manipulate the touch panel 15a at the position closer to the driver or an occupant in the passenger seat than the position of the touch panel 15a. Based on the touch manipulation applied to the touch manipulation area 12a1, an input is accepted which aims at an on-window position (a position of the touch manipulation area of the touch panel 15a) of the display device 15 corresponding to a touch manipulation position. In detail, there is predetermined a unique correspondence relation between the two-dimensional coordinate system defined on the display window of the display device 15 (two-dimensional coordinate system defined on the touch manipulation area of the touch panel 15a) and the two-dimensional coordinate system defined on the touch manipulation area 12a1 of the manipulation panel 12a. An on-window position on one area can be specified uniquely by an on-window position on the other area. When a touch manipulation is made to the touch manipulation area 12a1, based on the correspondence relation, the manipulation input to the position coordinate on the display window of the display device 15 is accepted so as to correspond to the position coordinate to which the touch manipulation is made.

That is, when a touch manipulation is applied to the touch manipulation area 12a1, the control circuit 18 specifies the position coordinate on the touch manipulation area 12a1 where the touch manipulation was made. Furthermore, the control circuit 18 specifies the position coordinate on the display window of the display device 15 corresponding to the position coordinate on the specified touch manipulation area 12a1. The control circuit 18 thereby outputs a control signal which executes a control content corresponding to the specified position coordinate on the display window. For example, suppose that when a switch image (manipulation icon etc.) 200I is displayed on the display window of the display device 15, a touch manipulation is applied to, on the touch manipulation area 12a1, a position corresponding to the switch image 200I. The control circuit 18 thereby determines that a touch manipulation is made to the switch image 200I, thereby accepting the input. The control circuit 18 executes a control content corresponding to the switch image 200I. Suppose that when a display-scroll map window (map manipulation-use image) is displayed on the display window of the display device 15, a touch manipulation is applied to, on the touch manipulation area 12a1, a position on the map. The control circuit 18 thereby accepts an input to the touch manipulation position and, in connection, executes a display-scroll control so as to newly display the map such that the map is centered at the touch manipulation position.

It is noted that the display device 15 need not be restricted to be arranged in the center console C as illustrated in FIG. 2; it may be arranged at a position upper than the lower edge of the windshield FG. In detail, a head-up display (HUD) which displays the above-mentioned image/data on the windshield FG of the vehicle, or a meter display device located at the back of the steering wheel, etc. can be exemplified.

Returning to FIG. 1, the map data input device 14 is used for inputting various kinds of data containing road data as network data, map data such as map matching data for improving accuracy of specifying a position of the vehicle, mark data in which facilities are illustrated, and images or audio data for guidance. Storage media for storing the above data include a CD-ROM, DVD-ROM, hard disk, memory, and memory card.

The sound input and output device 16 can output sounds of guidance for facilities inputted from the map data input device 14, and output read-out sounds of information acquired via the I/F 19. Further, the sound input and output device 16 contains a microphone and a well-known speech recognition unit, which are unshown the sound input and output device 16 can input, to the control circuit 18, a command or the like of a speech by a manipulator such as a driver.

The wireless communication device 13 is for executing narrow band communications with another communication device 13a. For example, DSRC (Dedicated Short Range Communications), Bluetooth (registered trademark), wireless LAN (Local Area Network), UWB (Ultra Wideband), etc. are used.

The LAN I/F 19 is an interface circuit for communicating data with another in-vehicle electronic device or a sensor through the in-vehicle LAN 50. In addition, the LAN I/F 19 may be used for executing data acquisition from other ECUs (ECU 100 of FIG. 1,etc.).

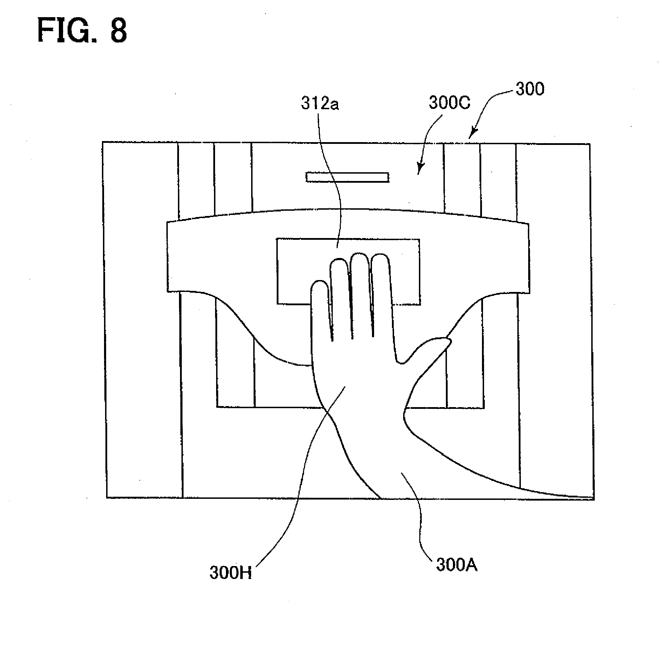

The camera 20 is arranged in a proximity to a rearview mirror in an upper portion of the vehicle front. The camera 20 captures an image of a surrounding region including the touch manipulation area 12a of the manipulation panel 12a. In detail, the capture image 300 illustrated in FIG. 8 is captured, for example. The image capture range is defined as being image-captured up to the arm connected with the hand of the manipulator of the manipulation panel 12a instead of the hand alone. The control circuit 18, which acquires the captured manipulation panel peripheral image, specifies the direction of the arm extended from the hand using the image processing section 18a, thereby determining whether the manipulator is the driver. See the capture image 300 of FIG. 8. The sign 300H indicates an image of a hand while the sign 300A indicates an image of an arm connected with the hand. The sign 312a indicates a region in which the manipulation panel 12a is image-captured. The arm of the manipulator of the manipulation panel 12a is extended from the right side of the capture image, i.e., the driver side, thereby specifying the manipulator to be the driver. In the present example, the camera 20 together with the control circuit 18 (image processing section 18a) functions as a manipulator specification section or means. The method of specifying whether the manipulator of the manipulation panel 12a is the driver may be another method. For example, an approaching object detection device (for example, a reflection type optical sensor such as an infrared reflection sensor) which detects an approaching object may be arranged in each of both vehicle-right and vehicle-left sides of the touch manipulation area 12a, thereby specifying the manipulator.

The vehicle velocity sensor 30 includes a rotation detection unit such as a well-known rotary encoder, and detects rotation of a wheel near a wheel installation portion. The detected rotation is sent to the control circuit 18 as a pulse signal. The control circuit 18 converts the rotation number of the wheel into a velocity of the vehicle (vehicle velocity) to thereby compute an estimated travel time from a present position of the vehicle to a predetermined place or an average vehicle velocity for every travel road section. In the present example, the vehicle velocity sensor 30 is a vehicle velocity detection section or means. The control circuit 18 functions as a travel state specification section or means which specifies whether the travel state of the vehicle is a predetermined low velocity travel state based on the detection result.

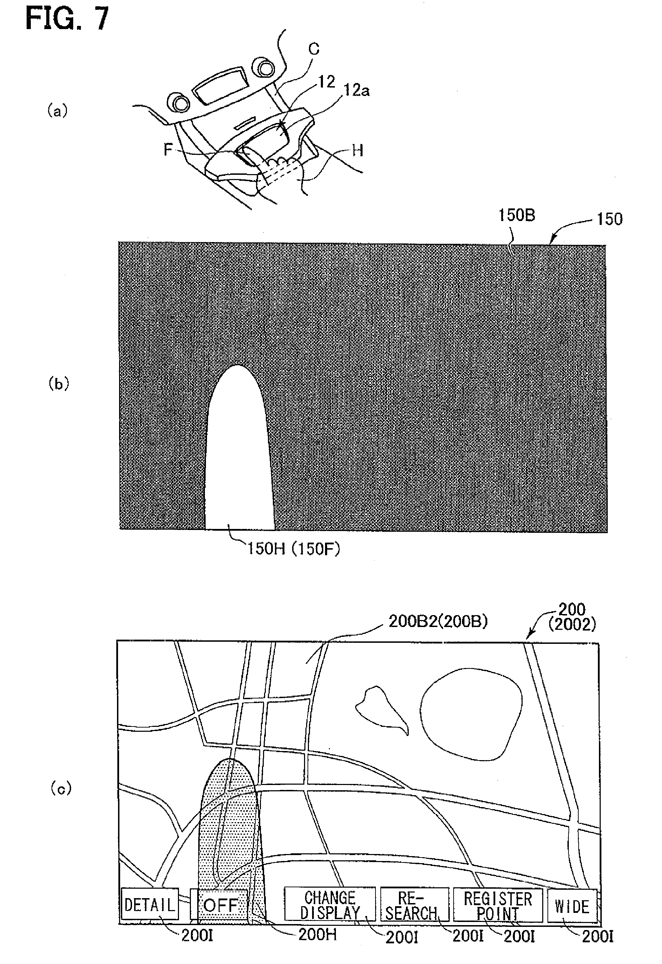

The control circuit 18 includes mainly a known microcomputer having an unshown known CPU, ROM, RAM, I/O (Input/Output), and bus line connecting the foregoing components or the like. Based on the program stored by the storage section 18d such as the ROM, a map display process is executed. In the map display process, the present position of the vehicle is computed as a set of the coordinate and heading direction based on each detection signal from the position detection device 11; the map around the present position read via the map data input device 14, the map of the range indicated by the manipulation of the manipulation information input section 12, etc., are displayed as the main image 200B (containing a moving image and static image) in the display window in the display device 15 as illustrated in FIG. 7. Based on point data stored in the map data input device 14, the control circuit 18 selects a facility as a destination according to manipulation of the manipulation information input section 12, and performs a route computation to automatically obtain an optimal route from a present position to a destination, thereby executing a route guidance process to perform a route guidance. The technique of automatically designating the optimal route uses, for instance, the known Dijkstra method.

Further, the control circuit 18 includes the image processing section 18a which displays sub-images with the main image 200B (map manipulation-use image etc.) in combination or in superimposition based on the program stored in the storage section 18d such as ROM. The sub-images include the switch image (manipulation icon) 200I, and the processed image 200H based on the approaching object image 150H acquired from the manipulation information input section 12. In the present example, when the approaching object image 150H is an image of a hand exhibiting a finger etc., the processed image 200H generated based on the captured image 150H of the hand is defined as a position indication image and displayed in superimposition on the position on the display window indicated by the hand. That is, the processed image 200H is displayed in superimposition as the position indication image 200H which indicates the position on the display window in which position indication is made by the finger of the hand.

It is noted that the processed image 200H based on the approaching object image 150H signifies as follows under the present example. It is an approaching object outer shape reflection image 200H which is processed and generated so that the outer shape (outline) of the approaching object image 150H is reflected at least. The image 200H is displayed in superimposition on the main image 200B. Instead of the display by the superimposition, the image 200H may be combined with the main image 200B to be thereby displayed. Thus, the following is enabled. When a manipulator such as a driver moves a finger of a hand in a manner to oppose the touch manipulation area 12a1 of the manipulation panel 12a, for example, the processed image 200H reflecting a hand shape (finger shape) simultaneously moves in the display on the display window of the display device 15. The manipulator can manipulate with a feeling as if the manipulation panel 12a exists in the display window of the display device 15.

In addition, the position indication image 200H does not need to reflect the outline of the image-captured hand shape/ finger shape. It is at least necessary to be an image which indicates a position indicated by the image-captured finger of the hand. For example, it may be only a portion of the finger of the hand, a fingertip, or a symbol image such as a pointer image. In addition, there is no problem that the image (or image of the finger) 150H of the hand image-captured by the camera 12b is displayed (in superimposition or in combination) as the position indication image 200H, without being processed. When it takes into consideration that a part of the main image 200B disappears in the display by the superimposition at the position where the superimposition is made, it is more desirable to perform processing (for example, semi transmission combination) to help facilitate manipulation more. Otherwise, it may be processed to become a false finger image thinner than the image of the actual finger.

In addition, the storage section 18d of the control circuit 18 such as ROM stores switch image data for displaying the switch image 200I. The switch image data is used for the superimposition display or combination display of the switch image 200I. In contrast, the storage section 18d of the control circuit 18 such as ROM stores control contents which are executed respectively by the manipulation inputs (the touch input applied to a corresponding region on the touch manipulation area 12a1) in correspondence with the respective switch images 200I. Suppose that the control circuit 18 displays the switch image 200 in superimposition on the main image 200 displayed on the display window. Herein, a manipulation input acceptance range (manipulation input position) is designated to a region corresponding to the display position of the switch image 200I on the touch manipulation area of both the touch panels 12a and 15a (a manipulation input position designation section or means). In addition, suppose that a display-scroll map window (image for map manipulation) 200 B2 is displayed as the main image 200B. Herein, a manipulation input acceptance range (manipulation input position) is designated as being the whole map area currently displayed (a manipulation input position designation section or means).

In addition, the control circuit 18 can activate an own timer 18b and count up a counter 18c, thereby executing clock timing. These are used when executing the clock timing in the process to be described later.

Further, the control circuit 18 functions as an example of the following section or means of: an input acceptance, a position indication image display, a manipulator specification, a travel state specification, a predetermined finger state specification, a simple manipulation-use finger state specification, a manipulation intention expression-use finger state specification, a display mode assignment, and a manipulation input control. It is noted that the image processing section 18a also functions as an example of a part of a section or means of a position indication image display and a manipulator specification.

### (Display process of position indication image)

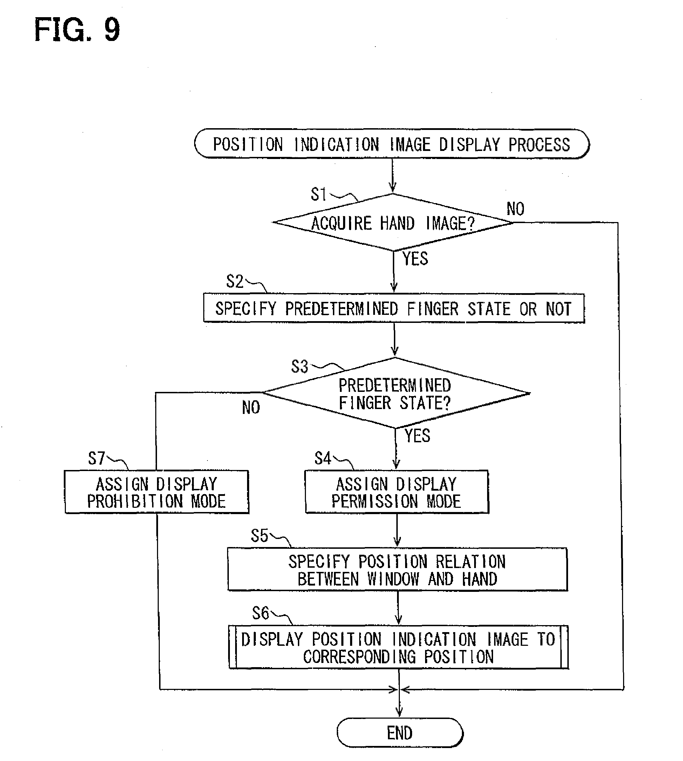

Next, a display process of a position indication image in the display device 15 is explained using FIG. 9. It is noted that the present process is executed in a manner that the CPU executes a program stored in the storage section 18d in the control circuit 18.

In S1, the control circuit 18 determines whether to acquire an image of a manipulator's hand based on a capture image captured by the camera 12b. The camera 12b constantly captures an image of an approaching object H (for example, a hand of a manipulator such as a driver), which approaches the touch manipulation area (front face) 12a1, via the manipulation panel 12a from the side of the rear face 12a2 of the manipulation panel 12a (an image capture step). The capture image is always inputted into the image processing section 18a of the control circuit 18. When an approaching object H enters a position opposing the touch manipulation area 12a1, the capture image 150 which naturally contains the approaching object H is inputted into the image processing section 18a. The inputted capture image 150 is analyzed by a well-known image analysis technique in the image processing section 18a. Based on the difference in colors etc., the approaching object image 150H is extracted. And it is determined whether the image 150H is an image of a person's hand from the shape of the extracted approaching object image 150H. The determination result is outputted to the control circuit 18. When it is determined that the hand image is recognized, the processing proceeds to S2. When it is not determined, the present process is ended.

It is noted that in the present example, the light source 12c is arranged and the camera 12b captures an image by capturing a reflection light of the light source 12c. Therefore, the reflection light intensity is reflected on the gradation of the color which appears in the capture image 150. In the place which captures the reflection light with a high intensity, the gradation level appears high. The capture image 150 captured by the camera 12b of the present example is a capture image of multi gradation levels (a black-and-white capture image in the present example). The image processing section 18a applies binarization to the gradation levels of each pixel using a predetermined gradation threshold value. As shown in (b) of FIG. 4 to FIG. 7, a region which exceeds the gradation threshold value is extracted as an approaching object image 150H. In addition, the image processing section 18a specifies an image of a person's hand from the extracted approaching object image 150H. For that purpose, the shape of the approaching object image 150H is compared with hand shape patterns stored in the storage section 18d of the control circuit 18. The approaching object image 150H according with the patterns is recognized as an image of a hand (a hand image recognition section or means, or a hand shape recognition section or means).

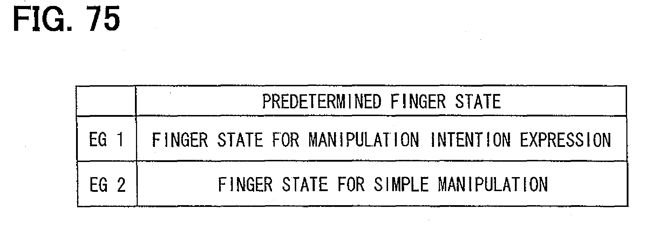

In S2, based on the acquired image of the hand, it is specified whether the state of the hand is a predetermined finger state or not (a predetermined finger state specification section or means). In the present embodiment or the present example, the predetermined finger state adopts a simple manipulation-use finger state included in the example 2 in FIG. 75. Therefore, in detail, it is specified whether it is a simple manipulation-use finger state (a simple manipulation-use finger state specification section or means). The simple manipulation-use finger state signifies, for instance, a state in which the number of fingers serving as a manipulation target, i.e., fingers extending approximately along the touch manipulation area 12a,is a small number such as one or two. If adding remarks, the manipulation using the five fingers to input early is a finger state where the difficulty is high. The above mentioned simple manipulation-use finger state is different from such a finger state. Under the present example, the simple manipulation-use finger state is specified as one finger manipulation state where the number of appearing fingers which are extended to the area direction of the touch manipulation area 12a (direction where the area spreads) is only one in the acquired image of the hand. In detail, in S1, the image processing section 18a extracts the image of the hand and discerns an approximately linear cylindrical image pattern having an axis line more than a predetermined length from the whole shape of the hand image. When such a cylindrical image pattern exists, it is recognized and specified as a finger image 150F (a finger specification section or means). The specified result is outputted to the control circuit 18. The cantrol circuit 18 specifies the number of finger images 150F (a finger number specification section or means: hand shape recognition section or means). In case that the number is one, the above state is specified as the simple manipulation-use finger state (a simple manipulation-use finger shape).

In next S3, it is determined whether the present finger state is a simple manipulation-use finger state based on the output result. When it is determines that it is a simple manipulation-use finger state, the processing proceeds to S4. In S4, the display mode is assigned with a display permission mode in which the display of the position indication image is permitted. The processing then proceeds to S5. It is noted that the assigned display mode is stored in a predetermined storage region (display mode storage section) provided in the storage section 18d of the control circuit 18. In S4, the display permission mode is stored in the storage region.

In S5, the control circuit 18 specifies the position relation between the display window of the display device 15 and the image-captured hand. That is, the control circuit 18 specifies which position on the display window the image H of the image-captured hand opposes (refer to FIG. 3). In the present example, the manipulation panel image region in which the touch manipulation area 12a is located is specified on the capture image captured by the camera 12b. The manipulation coordinate system of the touch manipulation area 12a is designated on the manipulation panel image region. The position of the captured hand image H is then specified on the designated manipulation coordinate system. In the display coordinate system defined on the display window of the display device 15, the position corresponding to the position of the hand image H specified on the manipulation coordinate system is specified. In the present example, the capture images (binarized images) 150 illustrated in (b) of FIG. 5 to FIG. 7 serve as a manipulation panel image region which captures the whole touch manipulation area 12a1.

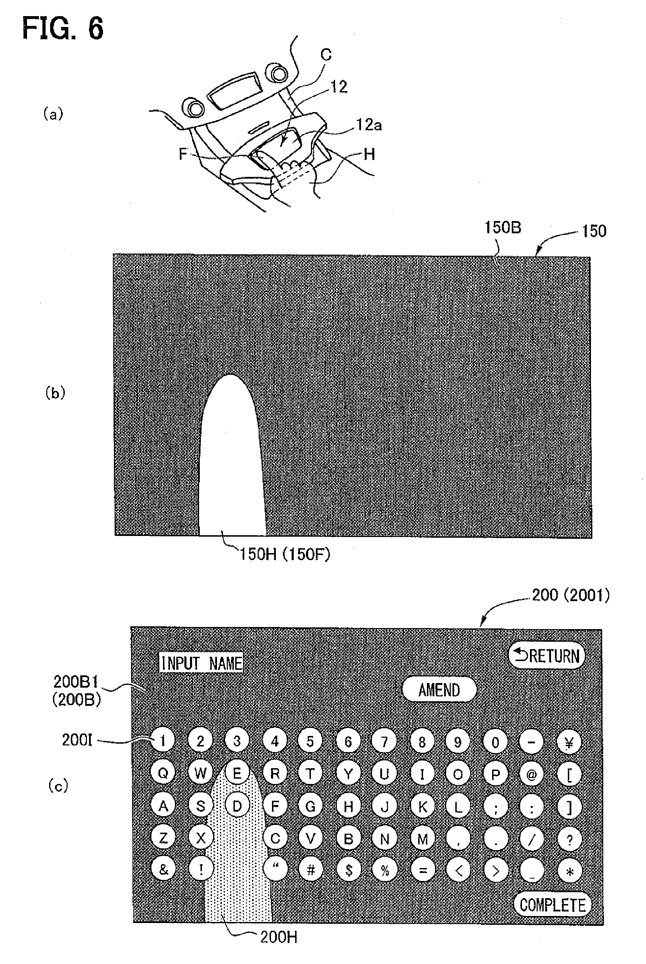

Furthermore, in S6, as illustrated in (c) of FIG. 6 and FIG. 7, the position indication image 200H is displayed on the position corresponding to the hand image H specified on the above manipulation panel image region of the display window of the display device 15 (a position indication image display section or means). In the present example, the outer shape of the hand image 150H is displayed clearly. The processed image 200H in which the inside of the outline is changed into the semi transmission state is generated and superimposed on the coordinate position corresponding to the displayed main image 200B on the display window of the display device 15.

In contrast, when it is determined in S3 that the present finger state is not a simple manipulation-use finger state, the processing proceeds to S7. In S7, the display mode is assigned with a display prohibition mode in which the display of the position indication image is prohibited. Thereby, the display of the position indication image is not executed in S5 or S6. As illustrated in FIG. 5 (c), for example, the position indication image 200H is not displayed on the display window of the display device 15. It is noted that the display prohibition mode is stored in a predetermined storage region (display mode storage section) provided in the storage section 18d of the control circuit 18.

S6 and S7 end; then, the present process is ended. It is noted that even after the end of the present process, the present process is repeatedly executed with predetermined intervals. As the hand in the simple manipulation-use finger state which opposes the manipulation panel 12a moves, the display position of the position indication image (processed image) 200H displayed on the display window of the display device 15 is also moved.

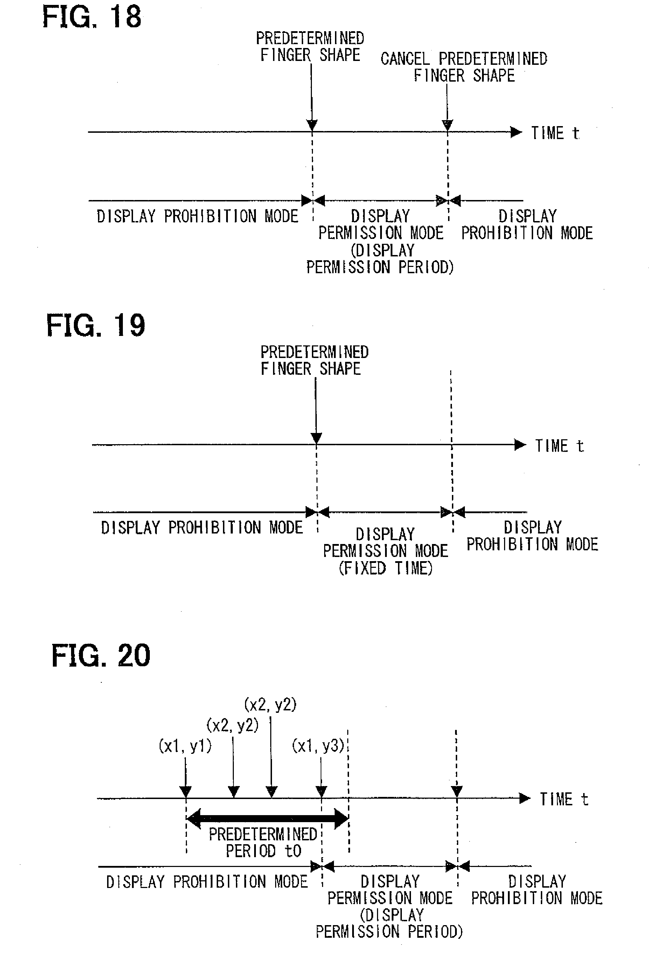

In the display process of the position indication image, as illustrated in FIG. 18, a display permission period is defined as a period up to the time when the predetermined finger shape state (simple manipulation-use finger state in the present embodiment) becomes not specified. That is, in the display process, when the simple manipulation-use finger state is specified, the display permission mode is assigned; when the simple manipulation-use finger state is not specified, the display prohibition mode is assigned. It is noted that the control circuit 18 functions as an example of a display mode assignment section or means by executing the display process of the position indication image.

### (Touch manipulation input process)

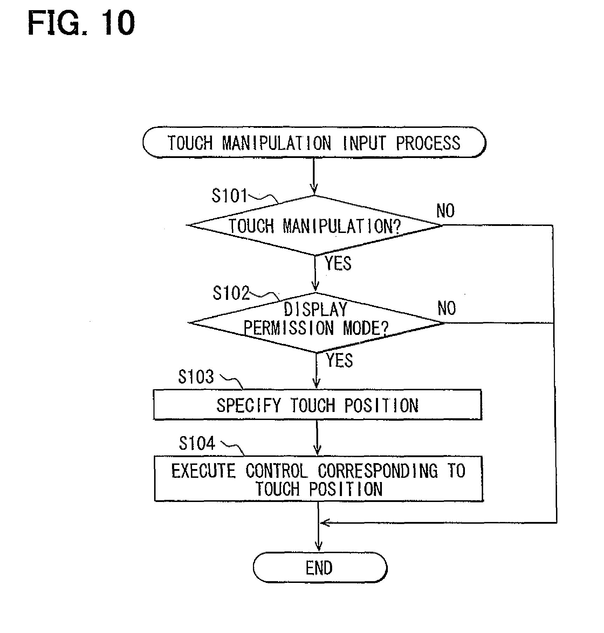

Finally, a touch manipulation input process to the manipulation panel 12a of the manipulation information input section 12 is explained using FIG. 10. It is noted that the present process is also executed in a manner that the CPU executes a program stored in the storage section 18d in the control circuit 18.

The present touch manipulation input process includes a manipulation input acceptance control in which the acceptance of a touch manipulation input to the manipulation panel 12a is permitted when the display permission mode is assigned (the control circuit 18 assigns an input permission mode); the acceptance of a touch manipulation input to the manipulation panel 12a is prohibited when the display prohibition mode is assigned (the control circuit 18 assigns an input prohibition mode). It is noted that the control circuit 18 functions as an example of a manipulation input control section or means by executing the touch manipulation input process.

In S101, the control circuit 18 determines the presence or absence of the touch manipulation to the manipulation panel 12a. The manipulation panel 12a is configured as a touch panel. When a touch manipulation occurs, a manipulation signal is inputted into the control circuit 18. The control circuit 18 determines the presence or absence based on the input. When the touch manipulation to the manipulation panel 12a occurs, the processing proceeds to S102. When no touch manipulation occurs, the present process is ended.

In S102, the control circuit 18 determines whether the present display mode is a display permission mode. The present display mode is stored in the predetermined storage region (display mode storage section) provided in the storage section 18d of the control circuit 18. Thus, it is determined based on the stored information on display mode. When it is determined that the present display mode is the display permission mode, the processing proceeds to S103. When it is determined that the present display mode is not the display permission mode, i.e., when it is determined that it is the display prohibition mode, the present process is ended.

In S103, the touch manipulation position to the manipulation panel 12a, i.e., the touch manipulation position on the touch manipulation area 12a1, is specified. The manipulation panel 12a is configured as a touch panel. When a touch manipulation occurs, a manipulation signal is inputted into the control circuit 18. The manipulation signal reflects the touch manipulation position as coordinate information on manipulation coordinate system defined on the touch manipulation area 12a1. The control circuit 18 specifies the touch manipulation position based on this manipulation signal.

In subsequent S1041, the control circuit 18 executes a control corresponding to the touch manipulation position on the manipulation panel 12a. In detail, each position on the touch manipulation area 12a1 of the manipulation panel 12a corresponds to a position on the display window of the display device 15. The control content determined at the position on the display window of the display device 15 corresponding to the position on the touch manipulation area 12a1 specified in S103 is executed. In detail, the control circuit 18 outputs the control signal for executing the control content. Suppose that the position on the touch manipulation area 12a1 specified in S103 corresponds to the switch image 200I displayed on the display window of the display device 15. Herein, the control circuit 18 outputs a control signal for executing a control content assigned to the switch image.

S104 ends; then, the present process is ended. It is noted that even after the end of the present process, the present process is repeatedly executed with predetermined intervals. The control circuit 18 executes the control content according to the position at which the touch manipulation is made. Otherwise, another control circuit (for example, ECU 100) executes the control content accordingly.

In the present touch manipulation input process, the acceptance of a touch manipulation input to the manipulation panel 12a is permitted when the display permission mode is assigned (input permission mode); the acceptance of a touch manipulation input to the manipulation panel 12a is prohibited when the display prohibition mode is assigned (input prohibition mode). It is noted that in the position indication image display process in FIG. 9, when the predetermined finger state (the simple manipulation-use finger state in the present embodiment) is specified, the display permission mode is assigned; when the predetermined finger state is not specified, the display prohibition mode is assigned. As a result, when the user's finger state is not in the predetermined finger state, the touch manipulation input to the manipulation panel 12a is not accepted. In the above example, when the user's finger state is not the simple manipulation-use finger state, the touch manipulation input to the manipulation panel 12a is not accepted.

The example of the present embodiment is explained in the above; however, such an example is only one example. The present embodiment need not be limited to the above example, and can be varied in various manners based on the knowledge of a person skilled in the art unless deviating from the scope of the claims. The above example is regarded as the first example and another example different from it is explained below. The identical configuration is assigned with an identical sign, thereby eliminating the explanation.

### 1.2 Second example

The following explains the second example of the present embodiment

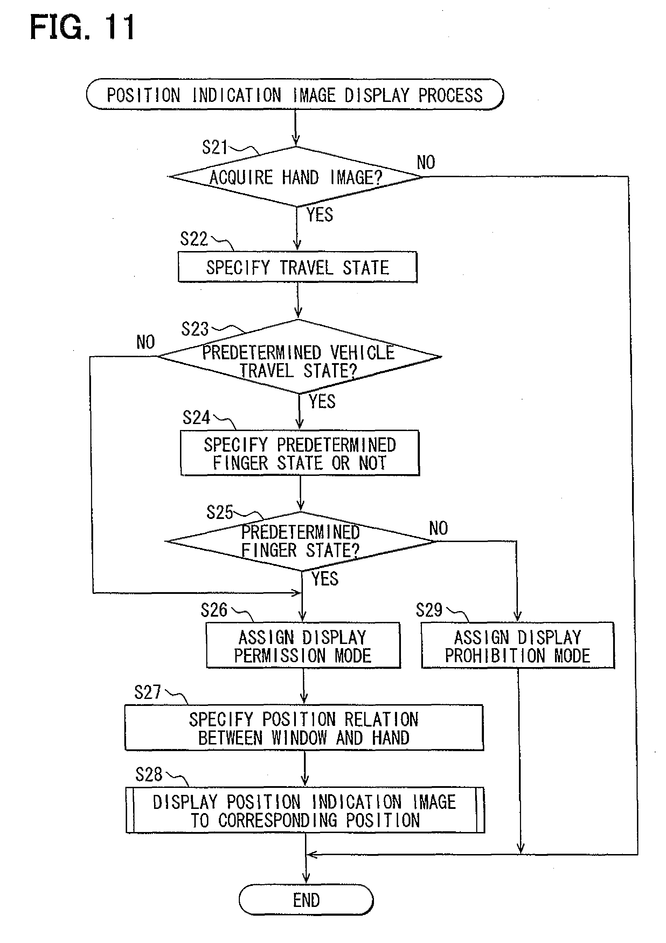

The first example is configured as follows. When the simple manipulation-use finger state is specified as the predetermined finger state, the display permission mode is assigned which permits the display of the position indication image; when the simple manipulation-use finger state is not specified, the display prohibition mode is assigned which prohibits the display of the position indication image. Such display mode switchover control may be configured as follows. When the vehicle is in a predetermined travel state, the control is made. When it is not in the predetermined travel state, the display permission mode is assigned to the display mode. In such cases, a vehicle travel state detection section or means need to be included. FIG. 11 shows an example of such a process. Herein, the configuration includes a vehicle velocity sensor 30 (vehicle velocity detection section or means) which detects a vehicle velocity of the vehicle connected to the control circuit 18. The control circuit 18 executes the following. When the vehicle is in the vehicle travel state exceeding a predetermined vehicle velocity level (vehicle velocity threshold value), the display mode switchover control is executed. When the vehicle is not in the above vehicle travel state, the display permission mode is assigned to the display mode regardless of the finger state.

In detail, in S21, the control circuit 18 determines whether the image of the manipulator's hand is acquired. This is similar to the processing in S1 of FIG. 9. When the image of the manipulator's hand is acquired, the processing proceeds to S22. When the image of the manipulator's hand is not acquired, the present process is ended.

In S22, the present travel state of the vehicle is specified. That is, it is determined whether the vehicle is in the travel state which exceeds the predetermined vehicle velocity level. The control circuit 18 previously stores the vehicle velocity threshold value in the predetermined storage section 18d such as ROM. It is determined whether the vehicle velocity which the vehicle velocity sensor 30 detects exceeds the vehicle velocity threshold value. When exceeding, the above vehicle travel state is specified. When not exceeding, a low velocity travel state (including a stop state) is specified. Herein, the above vehicle velocity threshold value is fixedly defined as being, for instance, 5 km/h. In S23, it is determined whether the vehicle is presently in the above vehicle travel state. When it is determines that it is in the above vehicle travel state, the processing proceeds to S24. In contrast, when it is determined whether the vehicle is not in the above travel state (when it is determined that the vehicle is in the low velocity state including the stop state), the processing proceeds to S26.

In S24, it is specified whether the manipulator's hand (manipulation hand) is in the predetermined finger state (simple manipulation-use finger state in the present embodiment). The specification of the predetermined finger state is executed by the processing similar to that in S2 of FIG. 9. When it is determined in subsequent S25 that the present finger state is the predetermined finger state, the processing proceeds to S26. When it is determined that it is not the predetermined finger state, the processing proceeds to S29.

In S26, the display mode is assigned with the display permission mode in which the display of the position indication image is permitted. It is noted that the display permission mode is stored in a predetermined storage region (display mode storage section) provided in the storage section 18d of the control circuit 18. In subsequent S27, the control circuit 18 specifies the position relation between the display window of the display device 15 and the image-captured hand. This processing is similar to the processing in 85 of FIG. 9. In subsequent S28, the position indication image 200H is displayed in superimposition on the main image 200B currently displayed in the display window of the display device 15 (a position indication image display section or means). This processing is similar to that in S6 of FIG. 9.

For example, when it is determined that the vehicle is not in the predetermined travel state (when it is determined that the vehicle is in the low velocity state including the stop state), the position indication image 200H based on the finger state is displayed regardless of the finger state of the manipulator through the processing in S27 and S28 (refer to (c) of FIG. 4, FIG. 6, and FIG. 7). When it is determined in S22 that the vehicle is in the vehicle travel state and it is determined in S25 that the present manipulator's finger state is in the predetermined finger state (namely, simple manipulation-use finger state), The position indication image 200H based on the simple manipulation-use finger state which the manipulator executes is displayed through the processing in S27 and S28 (refer to (c) of FIG. 6 and FIG. 7).

In contrast, when it is determined in S25 that the present finger state is not a simple manipulation-use finger state, the processing proceeds to S29. In S29, the display mode is assigned with a display prohibition mode in which the display of the position indication image is prohibited. This is stored in the predetermined storage region (display mode storage section) in the storage section 18d of the control circuit 18. Thereby, the display of the position indication image 200H executed in S27 and S28 is not carried out. As illustrated in FIG. 5 (c), for example, the position indication image 200H is not displayed on the display window of the display device 15.

S28 and S29 end; then, the present process is ended. It is noted that the present process is thereafter repeatedly executed with predetermined intervals.

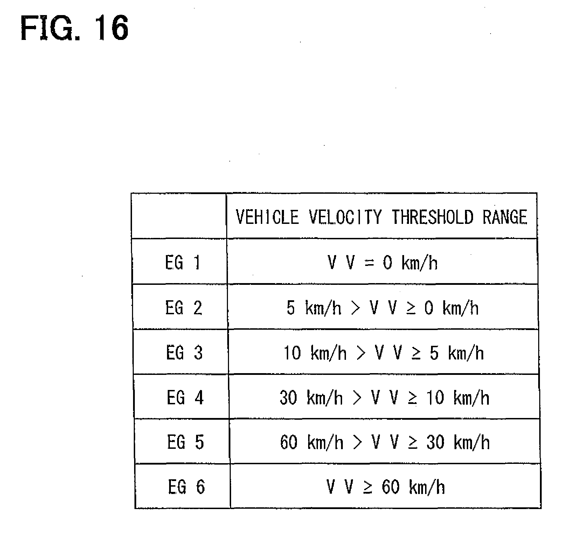

In the present example, the above predetermined vehicle velocity level (vehicle velocity threshold value) is defined as being 5 km/h. In the slow travel state of the vehicle which does not exceed the above vehicle velocity level, the display permission mode is always assigned. However, this vehicle velocity level may be changed to one of the ranges shown in FIG. 16: in the vehicle velocity threshold range from 0 km/h to less than 5 km, or in the vehicle velocity threshold range from 5 km/h to less than 10 km (vehicle's reduced velocity travel state). The vehicle velocity level may be defined as 0 km/h; thus, the display permission mode may be constantly assigned in the vehicle stop state. Further, the vehicle velocity level may be defined in the vehicle velocity range from 10 km/h to less than 30 km/h (vehicle low velocity travel state), in the vehicle velocity range from 30 km/h to less than 60 km/h (vehicle middle velocity travel state), or in the vehicle velocity range from 60 km/h (vehicle high velocity travel state).

In addition, in the processing of FIG. 11, when the vehicle is in the predetermined vehicle travel state (velocity greater than the vehicle velocity threshold value), the above display mode switchover control is executed. When the vehicle is not in the predetermined vehicle travel state (when the vehicle has a velocity less than the vehicle velocity threshold value), the display permission mode is fixedly assigned. Such configuration may be modified as follows. When the vehicle is in the predetermined vehicle travel state (velocity greater than the vehicle velocity threshold value), the display prohibition mode may be fixedly assigned. When the vehicle is not in the predetermined vehicle travel state (when the vehicle has a velocity less than the vehicle velocity threshold value), the above display mode switchover control may be executed.

### 1.3 Third example

The following describes the third example of the present embodiment.

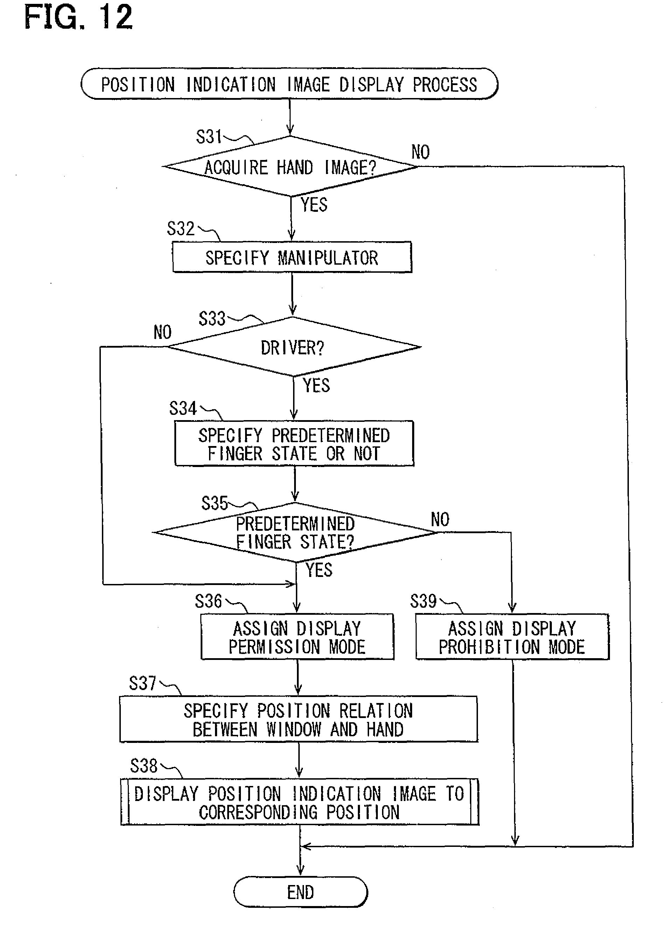

Under the above example, when the simple manipulation-use figner state is specified, the display permission mode to permit a display of the position indication image is assigned; when the simple manipulation-use figner state is not specified, the display prohibition mode to prohibit a display of the position indication image is assigned. In contrast, such a configuration may be changed as follows. When the driver is specified as a manipulator of the touch manipulation area 12a1, the display mode switchover control may be executed. When the driver is not specified, the display permission mode may be assigned to the display mode, regardless of the finger state. In the third example, the position indication image display process illustrated in FIG. 9 in the above first example is replaced by the position indication image display process of FIG. 12. Hereinafter, the specific flow of the process is explained using FIG. 12.

In detail, in S31, the control circuit 18 determines whether the image of the manipulator's hand is acquired. This is similar to the processing in S1 of FIG. 9. When the image of the manipulator's hand is acquired, the processing proceeds to S32. When the image of the manipulator's hand is not acquired, the present process is ended.

In S32, it is specified whether the manipulator whose hand opposes the manipulation panel 12a is a driver (a manipulator specification section or means). The specification of the manipulator can be executed based on the capture image (FIG. 8) by the camera 20 illustrated in FIG. 2, for example. In detail, the direction from which the arm is extended is specified from the capture image of the camera 20, and it is determined whether the direction is extended from the driver's seat 2D side, thereby specifying whether the manipulator is the driver. In S33, it is determined whether the manipulator of the manipulation panel 12a is the driver. When it is determined that the manipulator is the driver, the processing proceeds to S34. In contrast, when it is determined in S33 that the manipulator of the manipulation panel 12a is a person other than the driver, the processing proceeds to S36.

In S34, it is specified whether the hand of the driver being the manipulator (manipulation hand) is in the predetermined finger state, i.e., simple manipulation-use finger state in the present embodiment. The specification of the simple manipulation-use finger state is executed by the processing similar to that in S2 of FIG. 9. In next S35, it is determined whether the present finger state is a simple manipulation-use finger state. When it is determined that it is a simple manipulation-use finger state, the processing proceeds to S36. When it is determined that it is not a simple manipulation-use finger state, the processing proceeds to S39.

In S36, the display mode is assigned with the display permission mode in which the display of the position indication image is permitted. It is noted that the display permission mode is stored in a predetermined storage region (display mode storage section) provided in the storage section 18d of the control circuit 18. In next S37, the control circuit 18 specifies the position relation between the display window of the display device 15 and the image-captured hand. This processing is similar to the processing in S5 of FIG. 9. In subsequent S38, the position indication image 200H is displayed in superimposition on the main image 200B currently displayed in the display window of the display device 15 (a position indication image display section or means). This processing is similar to the processing in S6 of FIG. 9.

In detail, when a person other than the driver is specified as a manipulator of the manipulation panel 12a in S33, in the processing in S37 and S38, the position indication image 200H based on the finger state is displayed regardless of the finger state of the manipulator (refer to (c) of FIG. 4, FIG. 6, and FIG. 7). In contrast, when the driver is specified as a manipulator of the manipulation panel 12a in S32 and the finger state is determined to be the simple manipulation-use finger state in S35, the position indication image 200H based on the simple manipulation-use finger state which the driver executes is displayed through the processing in S37 and S38 (refer to (c) of FIG. 6 and FIG. 7).

In contrast, when it is determined in S35 that the present finger state is the simple manipulation-use finger state, the processing proceeds to S39. In S39, the display mode is assigned with the display prohibition mode in which the display of the position indication image is prohibited. This is stored in the predetermined storage region (display mode storage section) in the storage section 18d of the control circuit 18. Thereby, the display of the position indication image 200H executed in S37 and S38 is not carried out. As illustrated in FIG. 5 (c), for example, the position indication image 200H is not displayed on the display window of the display device 15.

S38 and S39 end; then, the present process is ended. It is noted that even after the end of the present process, the present process is repeatedly executed with predetermined intervals

### 1.4 Fourth example

The following describes the fourth example of the present embodiment

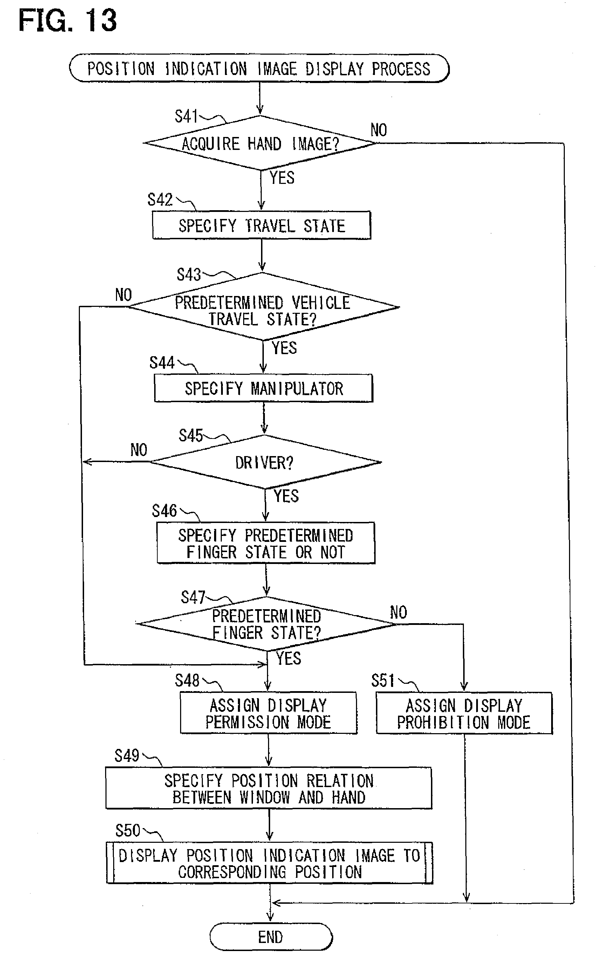

The fourth example replaces the display process of the position indication image illustrated in FIG. 9 with a process which is formed by combining both of FIG. 11 and FIG. 12. That is, the travel state of the vehicle (for example, vehicle velocity of the vehicle) is detected, and furthermore, it is specified whether the manipulator of the remote touch manipulation area 12a is the driver. Thereby, the vehicle is determined to be the predetermined travel state (for example, the travel state, which is not in the low velocity travel state less than a predetermined vehicle velocity level, the low velocity travel state including the stop state), and the manipulator of the remote touch manipulation area 12a is specified as the driver. In such a case, only when the simple manipulation-use finger state is specified, the display of the position indication image 200H is permitted, whereas when the simple manipulation-use finger state is not specified, the display of the position indication image 200H is prohibited. When the vehicle is determined to be not in the above predetermined travel state, when the specified manipulator of the remote touch manipulation area 12a is not the driver, or when the foregoing two conditions occur at the same time, the display of the position indication image 200H can be permitted regardless of the specified finger state. In detail, the touch manipulation input process of the above-mentioned FIG. 9 is replaced with the process illustrated in FIG. 13.

That is, when the hand image of the manipulator of the remote touch manipulation area 12a is acquired in S41 (the similar processing in S1 of FIG. 9), it is determined whether the vehicle is in the predetermined travel state in S42 and S48 (the similar processing in S22, S23 of FIG. 11). When it is in the predetermined travel state, the processing proceeds to S44 and S45, where it is determined whether the manipulator of the remote touch manipulation area 12a is the driver (the similar processing in S32, 33 of FIG. 12).

When the vehicle is determined to be in the predetermined travel state and the manipulator of the remote touch manipulation area 12a is determined to be the driver in S42 to S45, the processing proceeds to S46 and S47. Herein, it is specified whether the manipulator's hand (manipulation hand) is in the predetermined finger state, i e., in the simple manipulation-use finger state in the present embodiment (the processing similar to the processing in S2 and S3 of FIG. 9). When the present finger state is determined to be the simple manipulation-use finger state, the processing proceeds to S48. When it is determined not to be the simple manipulation-use finger state, the processing proceeds to S51.

In S48, the display mode is assigned with the display permission mode. This is stored in the predetermined storage region (display mode storage section) in the storage section 18d of the control circuit 18. In subsequent S49, the control circuit 18 specifies the position relation between the display window of the display device 15 and the image-captured hand. Further in S50, the position indication image 200H is displayed in superimposition on the main image 200B currently displayed in the display window of the display device 15 (a position indication image display section or means). Such processing is similar to the processing in S4 to S6 of FIG. 9.

In detail, when in S42 the vehicle is not in the vehicle travel state, or when in S44 the person other than the driver is specified as the manipulator of the manipulation panel 12a, in the processing in S48 to S50, the position indication image 200H based on the finger state is displayed regardless of the finger state of the manipulator (refer to (c) of FIG. 4, FIG. 6, and FIG. 7). In contrast, when in S42 the vehicle is determined to be in the vehicle travel state and when in S44 the driver is specified as the manipulator of the manipulation panel 12a, in S46, it is specified whether to be the simple manipulation-use state. When the simple manipulation-use finger state is specified in S46, the position indication image 200H based on the simple manipulation-use finger state which the driver executes is displayed through the processing in S48 to S50 (refer to (c) of FIG. 6 and FIG. 7).

In contrast, when it is determined in S47 that the present finger state is not a simple manipulation-use finger state, the processing proceeds to S51. In S51, the display mode is assigned with the display prohibition mode. This is stored in the predetermined storage region (display mode storage section) in the storage section 18d of the control circuit 18. The display of the position indication image 200H executed in S49 and S50 is thereby not executed, and as illustrated in FIG. 5 (c), for example, the position indication image 200H is not displayed on the display window of the display device 15.

S50 and S51 end; then, the present process is ended. It is noted that even after the end of the present process, the present process is repeatedly executed with predetermined intervals.

It is noted that when the vehicle is in the predetermined vehicle travel state (vehicle velocity higher than the threshold value), and, the manipulator is the driver in the process of FIG. 13, the above display mode switchover control is executed. When another case (when the vehicle is not in the vehicle travel state (when the vehicle has a vehicle velocity lower than the threshold value) or when the manipulator is not the driver) takes place, the display permission mode is fixedly assigned in the above example. In contrast, when the vehicle is in the predetermined vehicle travel state and, moreover, the manipulator is the driver, the display prohibition mode may be fixedly assigned. When the vehicle is not in the predetermined vehicle travel state and, also, the manipulator is the driver, the above display mode switchover control may be executed. When another case (when the manipulator is not the driver), the display permission mode may be fixed assigned. Such an example may be alternatively provided.

### 1.5 Fifth example

The following describes the fifth example of the present embodiment.

In the above examples, in the touch manipulation input process in FIG. 10, when the display permission mode is assigned, the control content corresponding to the touch manipulation input to the remote touch manipulation area 12a is executed, i.e., the corresponding control content is permitted. When the display prohibition mode is assigned, the control content corresponding to the touch manipulation input to the remote touch manipulation area 12a is not executed, i.e., the execution of the corresponding control content is prohibited. In contrast, the following configuration may be provided. That is, when the display permission mode is not assigned, and the simple manipulation-use finger state is specified, the execution of the control content corresponding to the touch manipulation input to the remote touch manipulation area 12a may be permitted when the display prohibition mode is not assigned, and the predetermined finger state, i.e., the simple manipulation-use finger state in the first embodiment is not specified, the execution of the control content corresponding to the touch manipulation input to the remote touch manipulation area 12a may be prohibited.

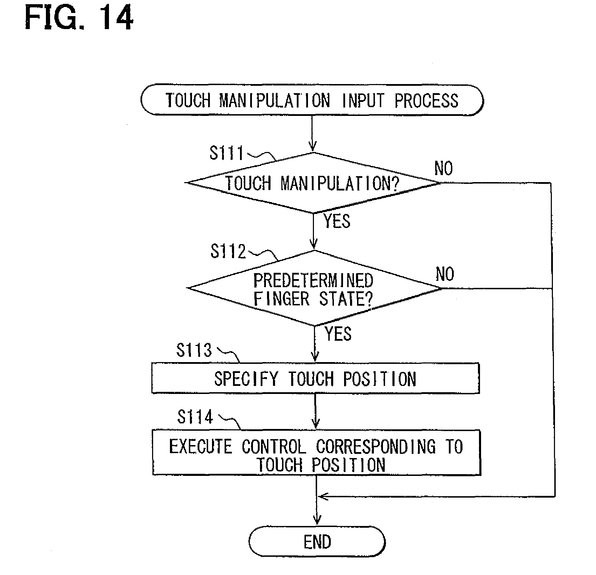

In detail, the following configuration can be provided. That is, when the simple manipulation-use finger state is specified, the acceptance of the touch manipulation input to the remote touch manipulation area 12a is permitted. When the simple manipulation-use finger state is not specified, a manipulation input acceptance control is executed where the acceptance of the touch manipulation input to the remote touch manipulation area 12a is prohibited. Hereinafter, one example of the specific flow of the process is explained using FIG. 14.

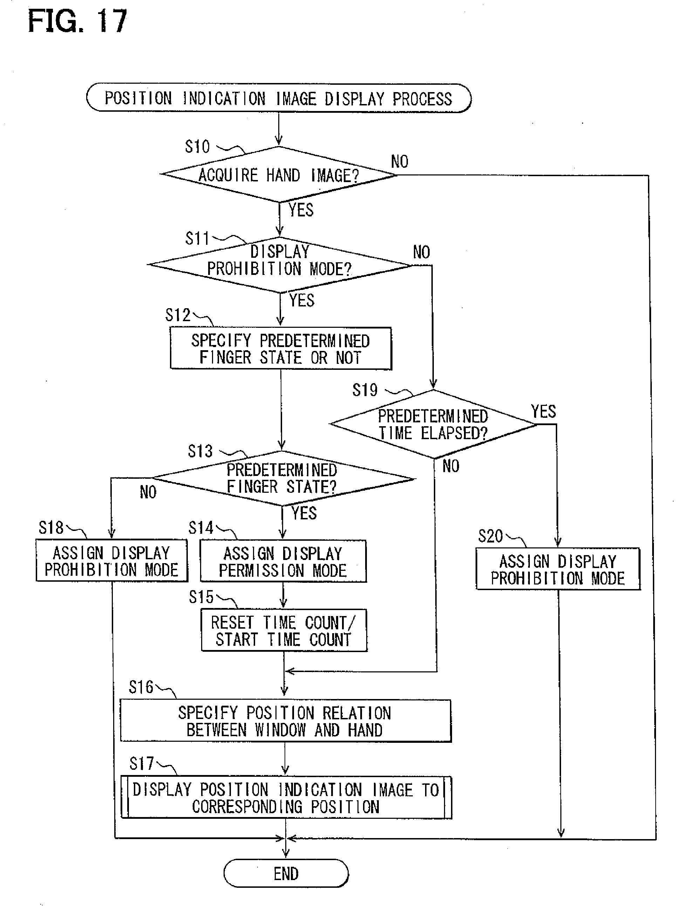

In S111, the control circuit 18 determines the presence or absence of the touch manipulation to the manipulation panel 12a. The processing in S111 is similar to the processing in S101 of FIG. 10. In S112, the control circuit 18 determines whether the present finger state is in the predetermined finger state, i.e., in the simple manipulation-use finger state in the first embodiment. In the present example, by replacing S2 of FIG. 9, S24 of FIG. 11, S34 of FIG. 12, S46 of FIG. 13, or S12 of FIG. 17, the following process is executed. In addition to the processing to specify whether the simple manipulation-use finger state as a predetermined finger, the processing is executed where in connection of the specification of the present finger state, the specified present finger state is stored in the predetermined storage region (finger state storage section) in the storage section 18d of the control circuit 18.

And in S112, it is determined whether the present finger state is the simple manipulation-use finger state as the predetermined finger state based on the finger state information stored in the storage region (finger state storage section). When it is determined that it is the simple manipulation-use finger state, the processing proceeds to S113. When it is determined that it is not the simple manipulation-use finger state, the present process is ended.

In S113, the touch manipulation position to the manipulation panel 12a, i.e., the touch manipulation position on the touch manipulation area 12a1, is specified (similar to the processing in S103 of FIG. 10). In subsequent S114, the control corresponding to the touch manipulation position to the manipulation panel 12a is executed (similar to the processing in S104 of FIG. 10). Although the present process is ended by the end of S114, the present process is repeatedly executed with predetermined intervals even after the end of the present process.

The position indication image display process in the example which executes the touch manipulation input process illustrated in FIG. 14 may be the same as either the already described position indication image display process or the position indication image display process to be mentioned further later.

### 1.6 Sixth example

The following describes the sixth example of the present embodiment.

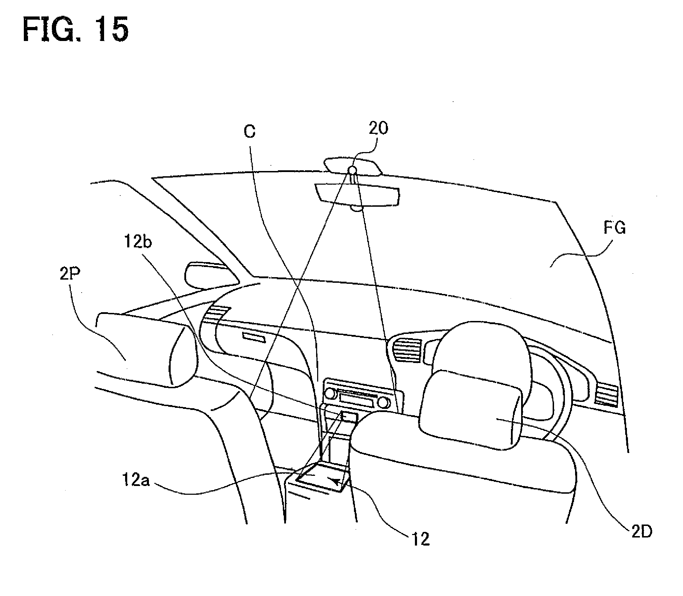

In the above examples, the camera 12b serving as the hand image capture section or means is a camera which image-captures a fixed region of the vehicle compartment which the touch manipulation area (front face) 12a1 of the touch panel 12a opposes. As explained in the above examples, the camera is configured to capture an image from the side of the rear face 12a2 of the touch panel 12a. However, the present embodiment is not restricted to such a configuration. For instance, as shown in FIG. 15, a camera may be arranged at a center console portion C of the vehicle so as to image-capture the touch manipulation area 12a1 of the touch panel 12a slantly from the upper and to image-capture an approaching object approaching the touch manipulation area 12a1 to thereby image-capture from the side of the touch manipulation area 12a1. In such a case, differently from the above examples, when extracting a specific image (for example, a hand image) in the capture image and displaying it in the display device 15, the process of the right-and-left reversal can be eliminated. In addition, the camera 12b which serves as a hand image capture section or means can serve also as the camera 20 to capture an image of a peripheral region including the touch manipulation area 12a1 of the manipulation panel 12a.

### 1.7 Seventh example

The following describes the seventh example of the present embodiment.

In the above examples, the display permission period is defined as a period up to the time when the simple manipulation-use finger state as a predetermined finger state becomes an un-specified state as illustrated in FIG. 18. In contrast, another configuration may be provided as follows. The display permission period may be defined as a predetermined time as illustrated in FIG. 19. That is, the display permission period is defined as a period from when the display permission mode is assigned to when a predetermined time (prohibition mode recovery time) elapses. When the prohibition mode recovery time elapses, the display mode is returned to the display prohibition mode. It is noted that the touch manipulation input process is executed as the process of FIG. 10. Under such a configuration, the period, which can display the position indication image, (display permission mode) is started by a trigger that the user indicates a specific finger state. Then the user can execute the position indication input (touch manipulation) to the touch manipulation area 12a1 while seeing the position indication image. In contrast, when the user does not indicate any specific finger state, the position indication image is not displayed. Thus, the touch manipulation for executing the position indication input cannot be executed smoothly. That is, only when the user clearly indicates an intention to execute the position indication input, the display of the position indication image is permitted. Therefore, the indication of the intention is confirmed by specifying the user's finger state. Herein, when the display permission mode is assigned, the image display shown in FIG. 4 (c) can be possible. In detail, the display process (FIG. 9) of the position indication image in the above examples is replaced with the process illustrated in FIG. 17.

In S10, the control circuit 18 determines whether to acquire an image of a manipulator's hand based on a capture image captured by the camera 12b. This processing is similar to the processing in S1 of FIG. 9.

In S11, the control circuit 18 determines whether the present display mode is the display permission mode. The present display mode is stored in the predetermined storage region (display mode storage section) provided in the storage section 18d of the control circuit 18; thus, it is determined based on the stored information on display mode. When it is determined that the present display mode is the display prohibition mode, the processing proceeds to S12. When it is determined that the present display mode is not the display prohibition mode, i.e., when it is determined that it is the display permission mode, the processing proceeds to S19.

In S12, based on the acquired image of the hand, it is specified whether the state of the hand is a predetermined finger state, i.e., the simple manipulation-use finger state in the first embodiment, (a simple manipulation-use finger state specification section or means). This processing is similar to the processing in S2 of FIG. 9. When it is determined in S13 that the present finger state is the simple manipulation-use finger state, the processing proceeds to S14.

In S14, the display mode is assigned with the display permission mode in which the display of the position indication image is permitted, advancing the processing to S15. It is noted that the display permission mode is stored in a predetermined storage region (display mode storage section) provided in the storage section 18d of the control circuit 18.

In subsequent S15, the timer 18b provided in the control circuit 18 is started, the time counting is started, and the processing proceeds to S16. Time is stored in a manner to be counted up in the counter 18c. The counted value of the counter 18c is reset before the timer is started.

In S16, the control circuit 18 specifies the position relation between the display window of the display device 15 and the image-captured hand. This processing in S16 is similar to the processing in S5 of FIG. 9. In subsequent S17, the position indication image 200H is displayed in superimposition on the main image 200B currently displayed in the display window of the display device 15 (a position indication image display section or means), as shown in (c) of FIG. 6 and FIG. 7. This processing in S17 is similar to the processing in S6 of FIG. 9. Herein, in the seventh example, the position indication image 200H shown in FIG. 4 (c) is also displayed in S16 and S17. That is, in the seventh example, as long as the display permission mode is assigned, the superimposition display (or combination display) of the hand image (finger image) is permitted. As long as an image at least illustrates an indication position of the finger based on the hand image, the display of the position indication image 200H having any shape can be allowed. Therefore, when the display permission mode is assigned, there may be allowed a superimposition display of the finger configuration having several fingers illustrated in (c) of FIG. 4.

In contrast, when it is determined in S13 that the present finger state is not the simple manipulation-use finger state, the processing proceeds to S18. The display prohibition mode is assigned in S18; this is stored in a predetermined storage region (display mode storage section) provided in the storage section 18d of the control circuit 18.

The present process is ended by the end of S17 and S18. The present process is repeatedly executed with predetermined intervals even after the end of the present process. As long as the hand image is acquired and the display permission mode is continued, the display permission state of the position indication image in S16 and S17 is continued. That is, during such a priod, even if the finger state is not the simple manipulation-use finger state, the position indication image is displayed. In the meantime, when it is determined in S19 that the predetermined time elapses by the timer 18b which started in S15, the display prohibition mode is compulsorily assigned in S20, and the present process is ended. The processing in S20 is similar to the processing in S18.

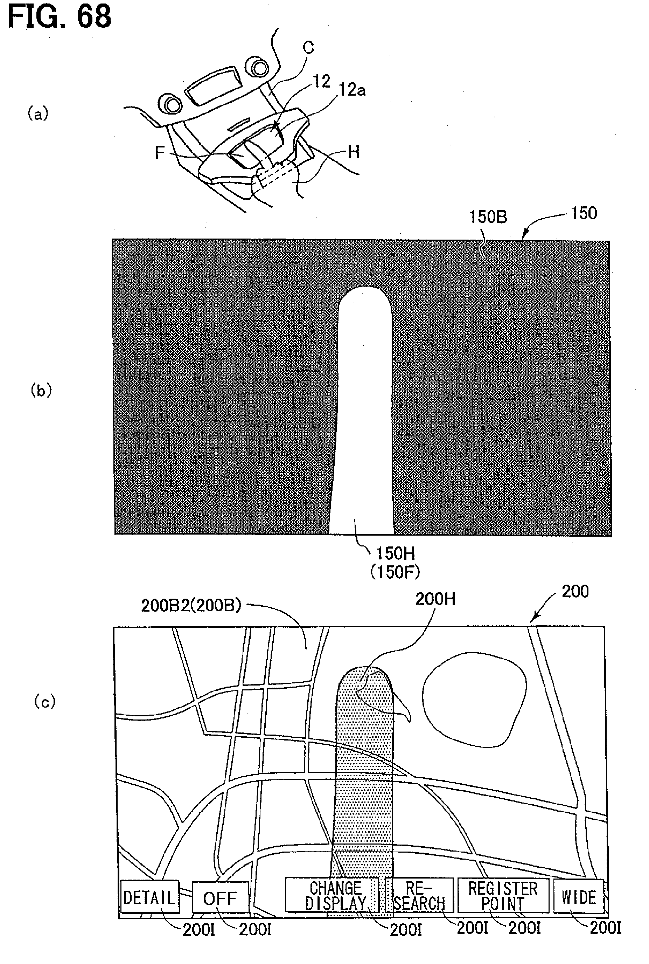

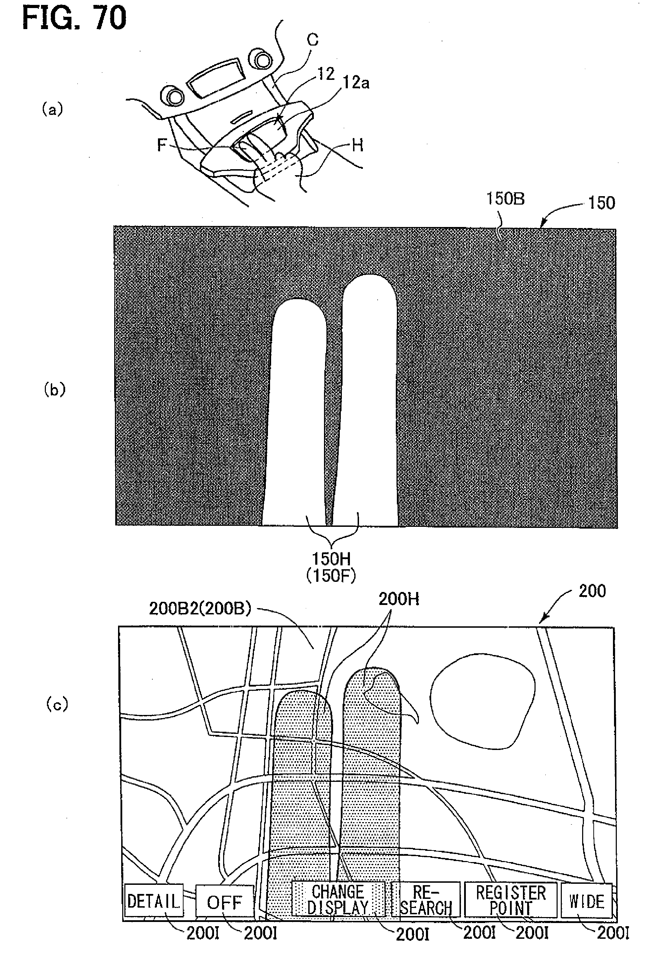

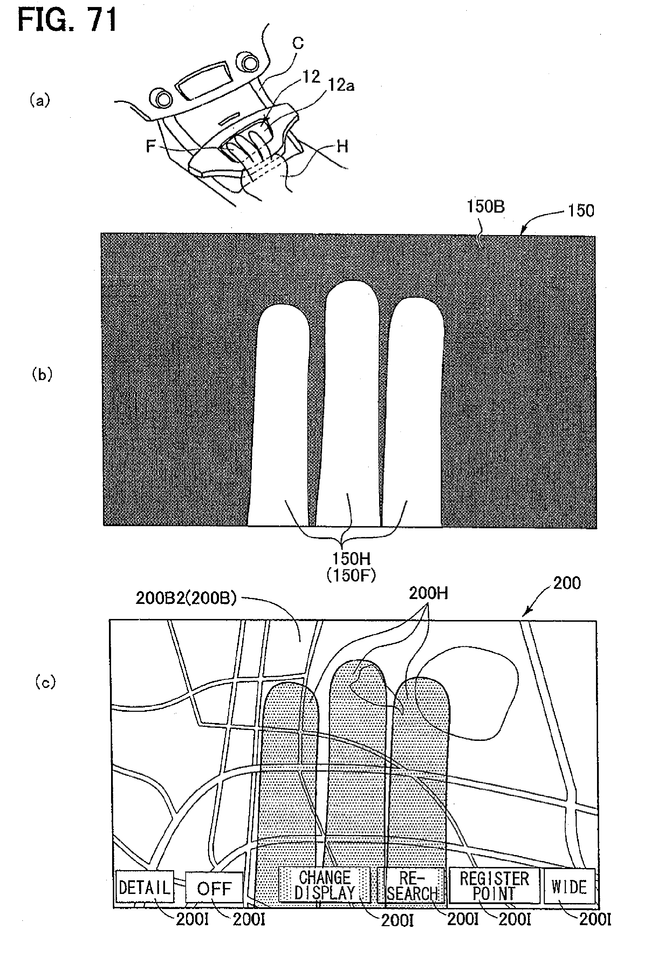

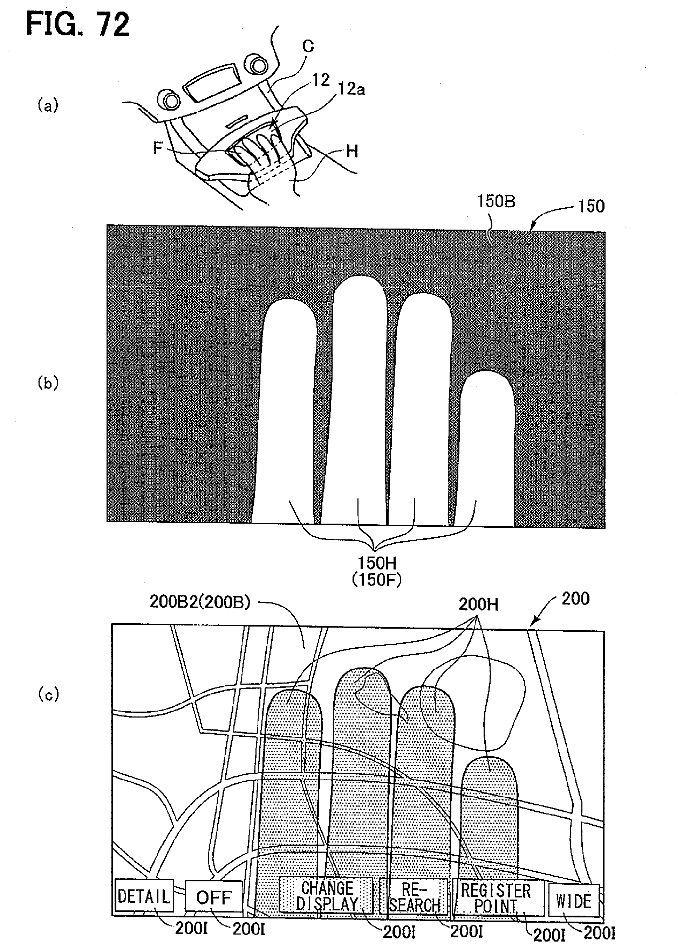

In the present seventh example, when the user indicates the intention of manipulation by the shape of the hand (simple manipulation-use finger state), the display permission mode is assigned only during a fixed time. In such a case, the simple manipulation-use finger state is not limited to the one-finger state(for example, refer to FIG. 6 and FIG. 7). The two-fingers state where two fingers are lengthened (refer to FIG. 70), the three-fingers state where three fingers are lengthened (refer to FIG. 71), or the four-fingers state where four fingers are lengthened (refer to FIG. 72) can be variously defined. In addition, even with respect to the one-finger state, the one finger in the simple manipulation-use finger state may be assigned only to the index finger (refer to FIG. 6 and FIG. 7), or may be assigned only to the middle finger (refer to FIG. 68). In addition, even with respect to the two-fingers state, the two fingers in the simple manipulation-use finger state may be assigned only to the index finger and middle finger (refer to FIG. 70). In addition, among the above definitions regarding the fingers in the simple manipulation-use finger state, one definition may be adopted or a combination of several definitions may be adopted. From the aspect of processing, it is desirable to define the hand state (finger state) which is easier to identify.

### 1.8 Eighth example

The following describes the eighth example of the present embodiment.

The specification of the simple manipulation-use finger state as the predetermined finger state in S2 of FIG. 9 need not limited to the mentioned-above process, which is executed based on the capture image. For example, among several inputs due to touch manipulations made to the touch manipulation area 12a1 (remote manipulation area) during a predetermined period, the control circuit 18 specifies the number of inputs due to the touch manipulations made to different positions on the touch manipulation areas 12a1 (a number of manipulations specification section or means). When the number of manipulations during the predetermined period is the number for the simple manipulation-use, the simple manipulation-use finger state may be specified. In such a case that when, for instance, three touch manipulations within one second (or simultaneously) are made to mutually different three positions, the existence of three fingers may be specified. When the number for the simple manipulation use is defined as being three, the simple manipulation-use finger state is specified as the predetermined finger state by the above specification of the existence of the three fingers. In detail, as illustrated in FIG. 20, in a condition that the display prohibition mode (further, input prohibition mode) is assigned, the touch manipulations are made to the touch manipulation area 12a1. Herein, the control circuit 18 activates the own timer 18b and starts the clock timing to count up the counter 18c. The control circuit 18 thereby counts the number of inputs due to the touch manipulations including the touch manipulation at the start of the clock timing. It is noted that when the touch manipulation is made to the touch manipulation area 12a1, touch position information (for example, position coordinate on the touch manipulation area 12a1) is acquired. Herein, the re-touch manipulation made to the same position on the touch manipulation area 12a1 is not counted up as an input. Further, when the number of the inputs at the time when the predetermined period t0 elapses is identical to the number of fingers defining the simple manipulation-use finger state, the present finger state of the manipulator's hand is specified as the simple manipulation-use finger state. During only a predetermined display permission period starting from the specified time, the display permission mode (further input permission mode) is assigned. When the display permission period is ended, the display prohibition mode (further input prohibition mode) is assigned again.

### 1.9 Ninth example

The following describes the ninth example of the present embodiment.

Under the above examples, in all the manipulation display windows displayed on the display device 15, the configuration is provided which the above display mode switchover control is executed. Alternatively, such display mode switchover control may be executed only in a predetermined manipulation display window. In contrast, the display permission mode or the display prohibition mode may be fixedly assigned in another manipulation display window.

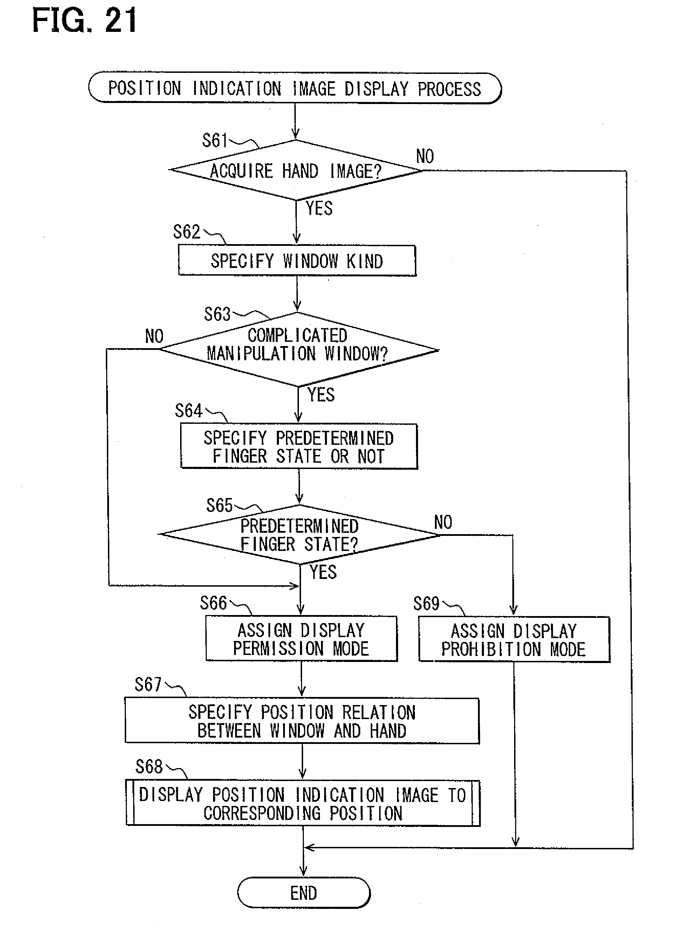

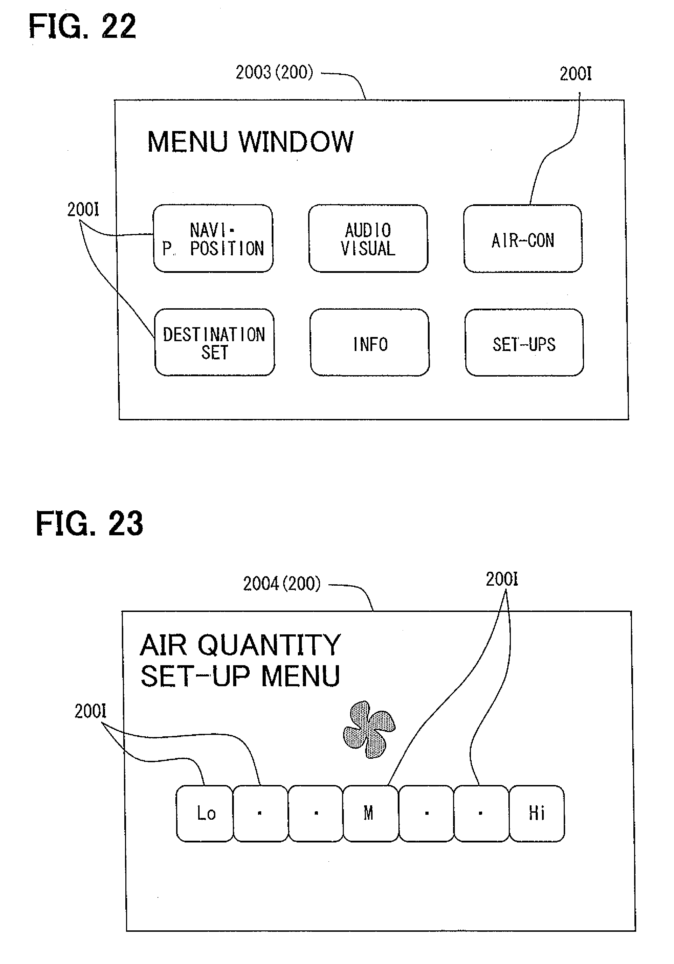

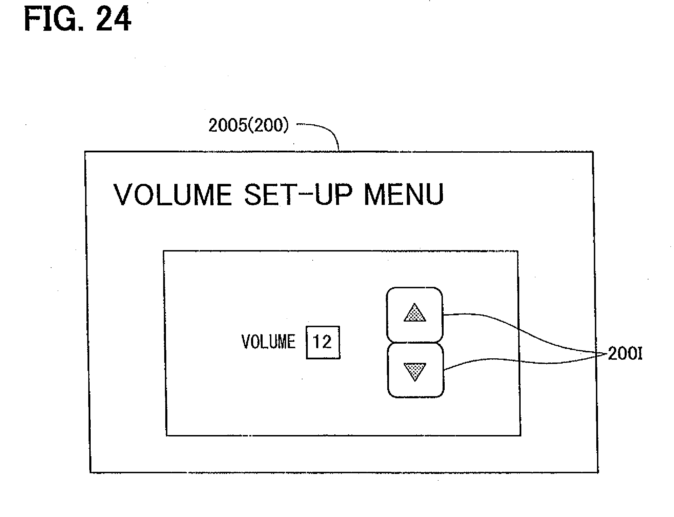

Based on the control instruction from the control circuit 18, the display device 15 can execute a switchover of, on the display window, several manipulation display windows 200, in which an input due to a press manipulation to the touch manipulation area 12a1 is accepted (a manipulation display window display section or means). For instance, the following display windows are switched therebetween: a menu selection window 2003 illustrated in FIG. 22; an air quantity set-up window 2004 of a car air-conditioner illustrated in FIG. 23; a volume set-up window 2005 of a car audio illustrated in FIG. 24; the already mentioned map display window 2002 (FIG. 7 (c)) of a car navigation; and a character input window 2001 (FIG. 6 (c)) etc. Those can be switched according to various inputs. There is provided a display mode execution applicability information which allows the specification of the manipulation display window of the execution target for the above display mode switchover control from among those several manipulation display windows. The display mode execution applicability information is previously stored in a predetermined storage region (a display mode execution applicability information storage section or means) of the control circuit 18. The control circuit 18 refers to the display mode execution applicability information when executing the position indication image display process. Thereby, only when the manipulation display window displayed in the display device 15 is an execution target for the above display mode switchover control, the control circuit 18 may execute the display mode switchover control in the specified manipulation display window. Hereinafter, the specific flow of the process is explained using FIG. 21.

In S61, the control circuit 18 determines whether the image of the manipulator's hand is acquired. This is similar to the processing in S1 of FIG. 9. When the image of the manipulator's hand is acquired, the processing proceeds to S62. When the image of the manipulator's hand is not acquired, the present process is ended

In S62, the control circuit 18 specifies a kind of the manipulation display window 200 being presently displayed, and specifies whether it is a predetermined execution target for the display mode switchover control. Herein, the above display mode execution applicability information stored in the predetermined storage region of the storage section 18d of the control circuit 18 is used. Among the manipulation display windows, the complicated manipulation display window including a manipulation in which a press manipulation to the touch manipulation area 12a1 exceeds a predetermined manipulation load level is determined to be the execution target for the display mode switchover control; the simple manipulation display window including only a manipulation in which a press manipulation to the touch manipulation area 12a1 does not exceed the predetermined manipulation load level is determined to a fixed assignment target of the display permission mode. The control circuit 18 refers to the display mode execution applicability information, thereby specifying whether the manipulation display window 200 being currently displayed is the execution target for the display mode switchover control.

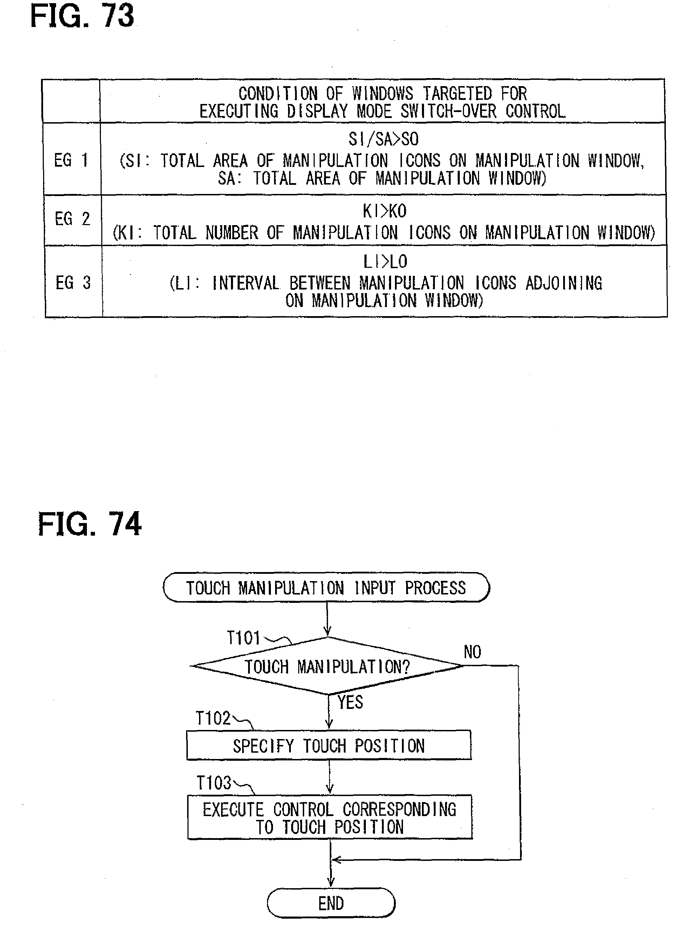

It is noted that the display mode execution applicability information is stored as the information which classifies the window kinds as follows. The display device 15 displays more than one manipulation input image on the display window. SI is defined as a total area of the manipulation input images or a total area of the whole of the press manipulation regions defined on the touch manipulation area 12a1 in correspondence with the manipulation input images 200I (manipulation icons). SA is defined as a total area of the whole of the display window or a total area of the whole region of the touch manipulation area 12a1. Herein, when the ratio SI/SA is greater than a predetermined ratio SO, such a manipulation display window is determined to be the complicated manipulation display window; when the ratio SI/SA is not greater than the predetermined ratio SO, such another manipulation display window may be determined to be the simple manipulation display window (see e.g. 1 of FIG. 73). Further, KI is defined as the number of the manipulation input images or the number of the whole of the press manipulation regions defined on the touch manipulation area 12a1 in correspondence with the manipulation input images 200I (manipulation icons). Herein, when the number KI is greater than a predetermined number KO, such a manipulation display window may be determined to be the complicated manipulation display window; when the number KI is not greater than the predetermined number KO, such another manipulation display window may be determined to be the simple manipulation display window (see e.g. 2 of FIG. 73). Yet further, LI is defined as an interval between the manipulation input images or an interval of the adjoining press manipulation regions defined on the touch manipulation area 12a1 in correspondence with the manipulation input images 200I (manipulation icons). Herein, when the interval LI is narrower than a predetermined interval LO, such a manipulation display window may be determined to be the complicated manipulation display window; when the interval LI is not narrower than the predetermined interval LO, such another manipulation display window may be determined to be the simple manipulation display window (see e.g. 3 of FIG. 73). Herein, the simple manipulation display windows are exemplified as the windows 2002, 2003, 2004, and 2005 in FIG. 22 to FIG. 24, and FIG. 7 (c). The complicated manipulation display window is exemplified as the character input window 2001 (for example, destination name input window etc.) in FIG. 6 (c)

In S62, the control circuit 18 refers to the display mode execution applicability information that enables the specification of the above complicated manipulation display window and simple manipulation display window, thereby specify whether the manipulation display window 200 displayed now is the execution target for the display mode switchover control (i.e., the complicated manipulation display window, herein). When specified, the processing proceeds to S63. When it is determined in S63 that the manipulation display window 200 presently displayed is the execution target of the display mode switchover control, the processing proceeds to S64. When it is determined that it is not the execution target of the display mode switchover control, the processing proceeds to S66.

In S64, it is specified whether the manipulator's hand (manipulation hand) is in the predetermined finger state, i.e., in the simple manipulation-use finger state in the present first embodiment (similar to the processing in S2 of FIG. 9). When it is determined in subsequent S65 that the present finger state is the simple manipulation-use finger state, the processing proceeds to S66. When it is determined not to be the simple manipulation-use finger state, the processing proceeds to S69.

In S66, the display mode is assigned with the display permission mode in which the display of the position indication image is permitted. It is noted that the display permission mode is stored in a predetermined storage region (display mode storage section) provided in the storage section 18d of the control circuit 18. In subsequent S67, the control circuit 18 specifies the position relation between the display window 200 of the display device 15 and the image-captured hand (similar to S5 of FIG. 9). In subsequent S68, the position indication image 200H is displayed in superimposition on the main image 200B currently displayed in the display window 200 of the display device 15 (a position indication image display section or means: similar to S6 of FIG. 9).

In detail, when it is determined in S62 that the manipulation display window 200 being presently displayed is not the execution target of the display mode switchover control (when it is specified that it is the simple manipulation display window), in the processing in S67 and S68, the position indication image 200H based on the finger state is displayed regardless of the finger state of the manipulator (refer to (c) of FIG. 4, FIG. 6, and FIG. 7). When it is determined in S62 that the manipulation display window 200 being presently displayed is the execution target of the display mode switchover control (herein, when it is specified that it is the complicated manipulation display window), the position indication image 200H based on the simple manipulation-use finger state executed by the manipulator is displayed through the processing in S67 and S68 (refer to (c) of FIG. 6 and FIG. 7).

In contrast, when it is determined in S65 that the present finger state is not the simple manipulation-use finger state, the processing proceeds to S69. In S69, the display mode is assigned with the display prohibition mode which prohibits the display of the position indication window 200. This is stored in the predetermined storage region (display mode storage section) in the storage section 18d of the control circuit. 18. The display of the position indication image 200H executed in S67 and S68 is thereby not executed, and as illustrated in FIG. 5 (c), for example, the position indication image 200H is not displayed on the display window 200 of the display device 15.

The present process is ended by the end of S68 and S69. The present process is repeatedly executed with predetermined intervals even after the end of the present process.

In the process of FIG. 21, the above display mode switchover control is executed in the complicated manipulation display window; the display permission mode is fixedly assigned in the simple manipulation display window. Another example may be provided as follows. The display prohibition mode may be fixedly assigned in the complicated manipulation display window; the above display mode switchover control may be executed in the simple manipulation display window.

### 1.10 Tenth example

The following describes the tenth example of the present embodiment.

In addition, in the manipulation input apparatus of the above examples, when actually displaying a hand that manipulates the remote manipulation section (touch panel 12a) on the manipulation display window, the display device displays only fingers as indicated in FIG. 4 (c) if the hand is close to the remote manipulation section. In case that several fingers are displayed in a row at the same time, the doubt which finger actually manipulates arises, and the correspondence relation between the displayed fingers and the finger that the manipulator actually wants to use for position instruction is not clear. The mis-manipulation may be thereby caused. In cases that the above manipulation input apparatus is for vehicles, a driver under vehicle driving cannot gaze at a manipulation display window carefully; thus, it is difficult for the driver to perform a manipulation input using the several fingers while driving the vehicle, often causing the mis-manipulation.

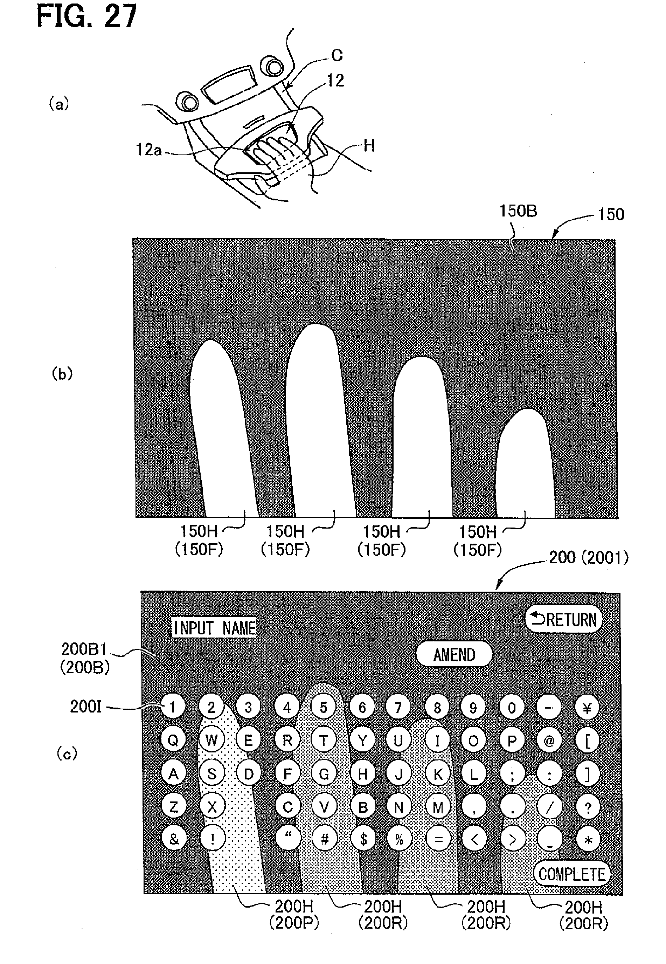

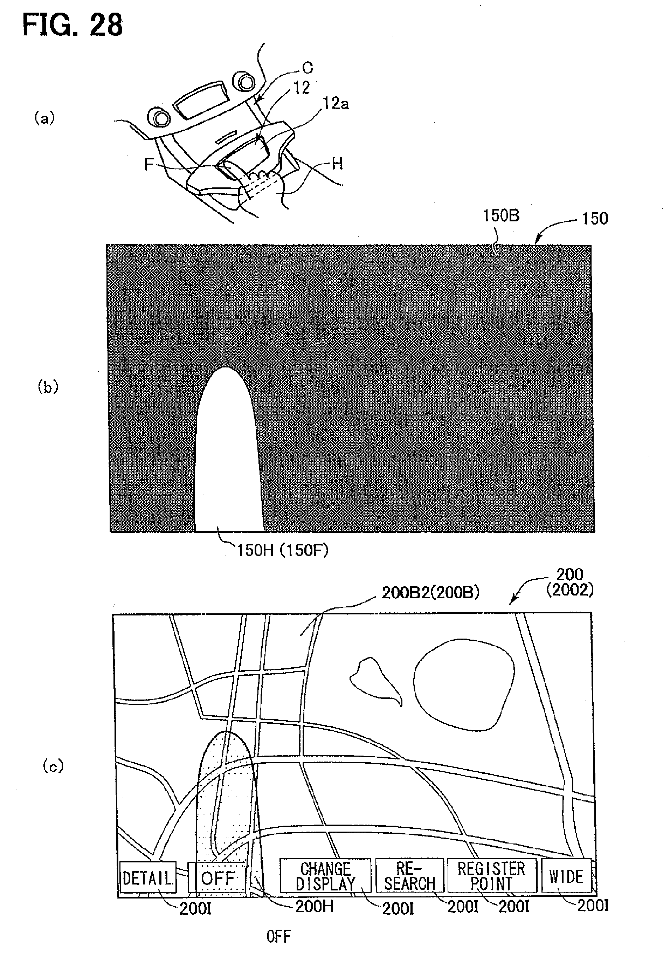

To solve such a problem, a position indication image display process is provided so as to easily specify a finger actually used for position indication. Such a position indication image display process includes the following steps: a finger specification step of specifying a finger in a hand opposing in front of the remote manipulation section (touch panel 12a); a manipulation target finger assignment step of assigning a manipulation target finger, which is used or estimated to be used for a manipulation to the remote manipulation section, from the specified finger; a display step of displaying the position indication image 200H indicating an indication position of the specified finger in such a manner to be combined to or superimposed on a background image 200B of a background on the display window; and a position indication image highlight step of executing a highlight display of a position indication image 200P corresponding to the predetermined manipulation target finger among the position indication images 200H displayed so as to relatively highlight in comparison with a position indication image 200R corresponding to a finger different from the manipulation target finger. Thereby, as illustrated in FIG. 27 or FIG. 28, the specified manipulation target finger (herein, one index finger) is displayed in highlight, compared with other fingers, thereby improving manipulability. It is noted that, by executing each step, the control circuit 18 functions as a finger specification section or means, a manipulation target finger assignment section or means, a position indication image highlight section or means.

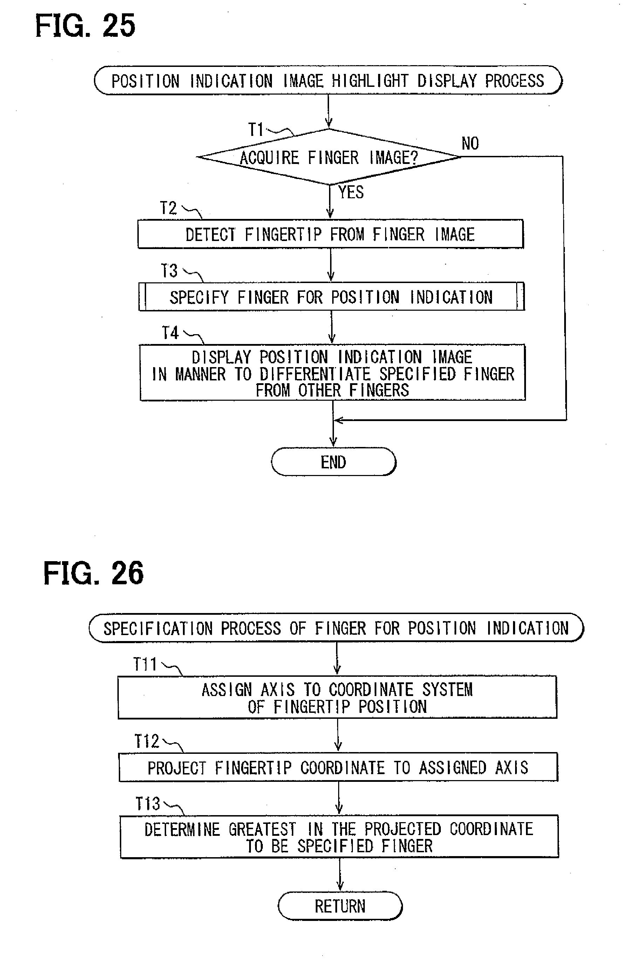

In detail, the processing corresponding to S6 of FIG. 9 in each example mentioned above is replaced with the processing in FIG. 25.

### 1.10.1 First modification of tenth example

In FIG. 25, in T1, the control circuit 18 specifies a finger of a hand which opposes in front of the touch manipulation area 12a1 (herein, the side opposite the side of the camera 12b) with respect to the touch manipulation area (remote manipulation area) 12a1 (a finger specification step). Herein, similar to S1 of FIG. 9, the control circuit 18 determines whether to acquire an image of a manipulator's hand finger based on a capture image captured by the camera 12b. The determination result is outputted to the control circuit 18 When it is determined that the hand finger image is recognized, the processing proceeds to T2. When it is not determined, the present process is ended.

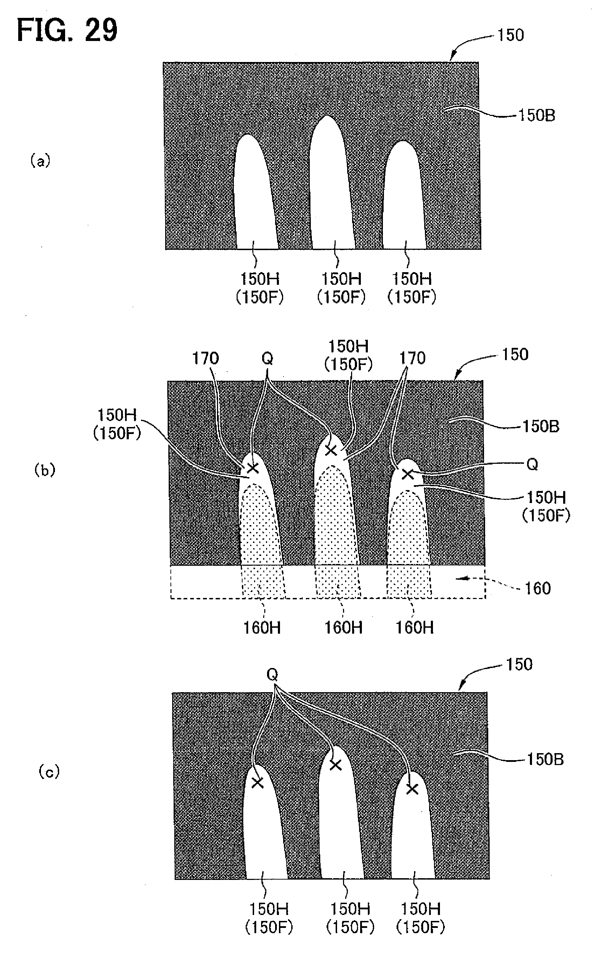

In T2, the control circuit 18 detects a fingertip from the acquired finger image 150F. The detection of the fingertip is executed in a manner to specify a fingertip Q from the specified finger image 150F (a fingertip specification step). The specification of the fingertip Q in the present example is executed in a manner illustrated in FIG. 29. That is, as illustrated in FIG. 29 (a), the finger image 150F is specified, first. The image processing section 18a overlaps mutually the hand image 150H containing the specified finger image 150F and the moved hand image 160H which is generated by moving the hand image 150H to the longitudinal direction of the finger image 150F by only a predetermined quantity. A non-overlap area 170 is specified where both the finger images 150H, 160H do not overlap mutually. The center of gravity of the non-overlap area 170 is computed; the point of the computed center of gravity is thus specified as the fingertip (fingertip position) Q. The specification method of the fingertip Q may be different from the above. For example, the outline of the fingertip appearing in a curve is extracted and smoothed; then, the center of curvature is specified as the fingertip Q. In addition, the specification method of the fingertip Q need not be specified as one point of the finger as mentioned above; a region up to the first joint of the finger may be specified as the fingertip (fingertip region) Q.

It is noted that although T1 and T2 are steps of the finger specification processing and the fingertip specification processing, respectively, both may be executed simultaneously. That is, instead of specifying the fingertip from the finger image, the following may be used. The fingertip is directly specified from the capture image captured by the camera 12b; the finger is specified by specifying the fingertip, thereby, simplifying the processing.

In subsequent T3, the control circuit 18 assigns a manipulation finger P (finger for position indication) which is used or estimated to be used for manipulation to the remote manipulation section (a manipulation target finger assignment step). In detail, position relation information reflecting position relation of respective specified fingertips in the direction of the touch manipulation area is acquired as assignment finger information (an assignment finger information acquisition step). The direction of the touch manipulation area signifies the direction where the touch manipulation area 12a1 spreads, i.e., the direction orthogonal to the normal of the touch manipulation area 12a1. Thereby, based on the acquired position relation information, the manipulation target finger P is assigned, among the fingers specified in T1, preferentially to a finger having the position relation information most suitable for the predetermined selection condition about the position relation.

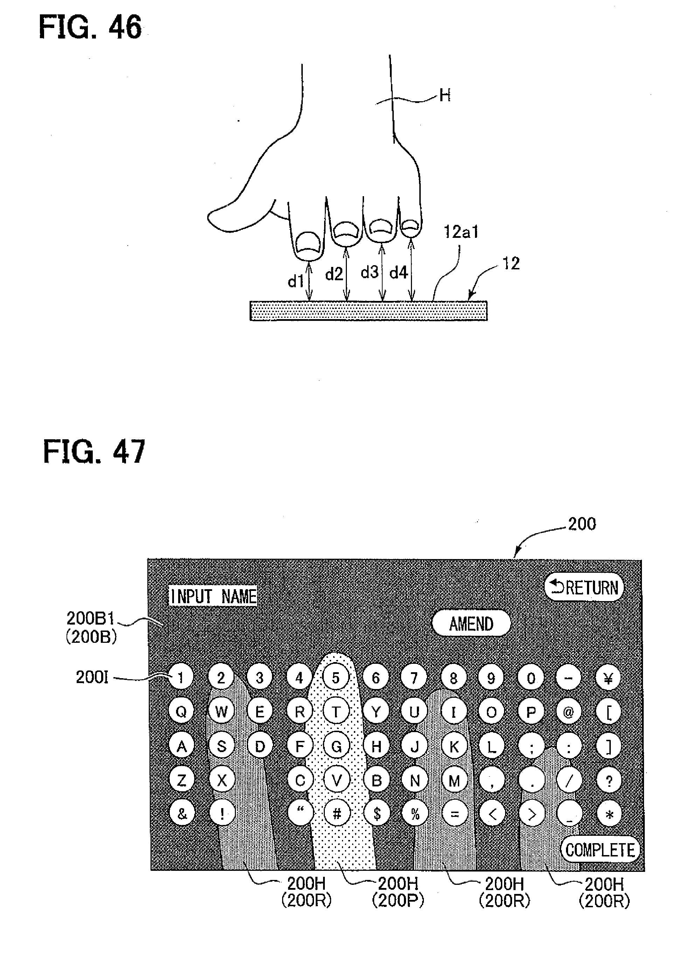

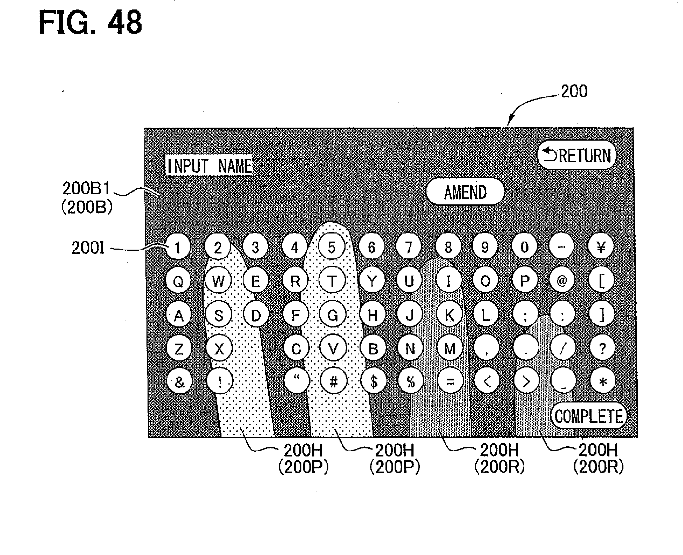

A group of several fingers can be assigned with the manipulation target finger P. In contrast, from the aspect of executing position indication such that the manipulation to the contact type manipulation section 12a is easily recognized, it is desirable to assign to a comparatively small number of fingers such as one finger or two fingers. In the present example, one finger is assigned. Furthermore, a kind of finger used as an assignment target is an index finger suitable for position indication (see (c) of FIG. 27 and FIG. 28), a middle finger (refer to FIG. 47), or two fingers of an index finger and a middle finger (refer to FIG. 48). In the present example, an index finger is assumed to be assigned.

The processing of T3 of the present example is executed as the process illustrated in the flowchart of FIG. 26. That is, in T11, the fingertip Q specified as shown in FIG. 29 (c) is specified on a plane 180 of the virtual two-dimensional coordinate system. With one axis X defined on the plane 180, another one-dimensional coordinate system is defined in the above two-dimensional coordinate system. Herein, the specified fingertip Q is projected to the touch manipulation area 12a1 (to the direction opposing the remote manipulation section). The projection plane is defined as the above plane 180. One axis X is designated as a predetermined position on the projection plane to thereby define the one-dimensional coordinate system. In T12, the position coordinate (coordinate value) XQ in the one-dimensional coordinate system of the fingertip Q specified on the plane 180 is specified; the axis coordinate information reflecting the position coordinate XQ is acquired as the position relation information. Thereby, in T13, based on the acquired axis coordinate information, the manipulation target finger P is assigned, among the fingers specified in T1 of FIG. 25, preferentially to a finger most suitable for the predetermined selection condition about the axis coordinate information.

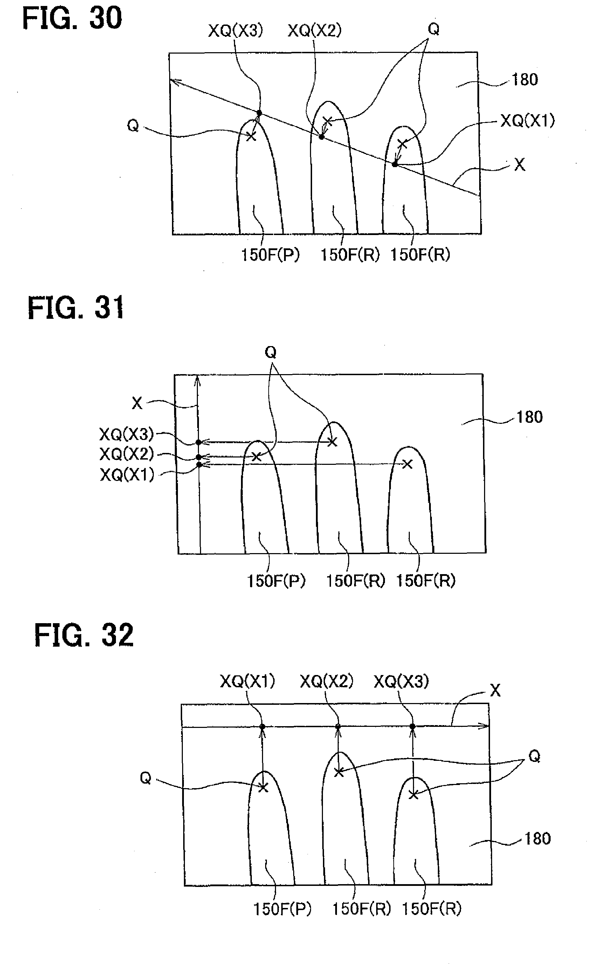

In addition, the present example assumes that a vehicle is of right-hand drive, and manipulation is made by a right hand of a passenger at the passenger seat. Furthermore, the axis X is designated so that the manipulator's index finger is assigned with the manipulation target finger P. Accordingly, in T11, the axis X is designated as the position illustrated in FIG. 30. In T12, the fingertip Q is projected towards the designated axis X, and the coordinate values X1-X3 of respective projected position are computed. In T13, among the acquired coordinate values X1-X3, the fingertip Q is specified which has the greatest coordinate value. It is estimated that a finger having the specified fingertip Q is the index finger; thereby, the finger is assigned with the manipulation target finger P.

In addition, the axis X in the present example is determined in the direction from a right lower of the capture image in which the right index finger is not located often to an left upper in which the right index finger is often located, as illustrated in FIG. 30. In contrast, for example, another designation shown in FIG. 31 or FIG. 32 may be adopted. In the case of FIG. 31, it is suitable for estimation that the finger having the greatest coordinate value is the middle finger. Further, if it is estimated or determined which of the right and the left the manipulating hand is, the finger which adjoins the middle finger can be estimated as the index finger. In the case of FIG. 32, if it is estimated or determined which of the right and the left the manipulating hand is, the finger in the very end of either right or left is suitably estimated as an index finger. Thus, the finger adjoining it can be estimated as the middle finger.

In the present example, the capture image captured by the camera 12b is a projection plane 180 to which the fingertip Q is projected toward the touch manipulation area 12a1. Therefore, each of the manipulation panel image region and the above projection plane 180 is recognize as a two-dimensional plane which has the same coordinate system. The manipulation panel image region is a region reflecting the touch manipulation area 12a, i.e., the whole region of the capture image 150) in which the touch manipulation area 12a is located in the capture image captured by the camera 12b. The coordinate position of the fingertip Q on the manipulation panel image region can be used directly as a coordinate position of the projected fingertip Q in the projection plane 180. In T3, the manipulation target finger P is assigned by computing on the coordinate system in the virtually defined projection plane 180, therefore eliminating the need of image processing. That is, the image data is not used for assignment process of the manipulation target finger P; thereby, the computation cost (the arithmetic quantity and memory quantity) can be reduced.

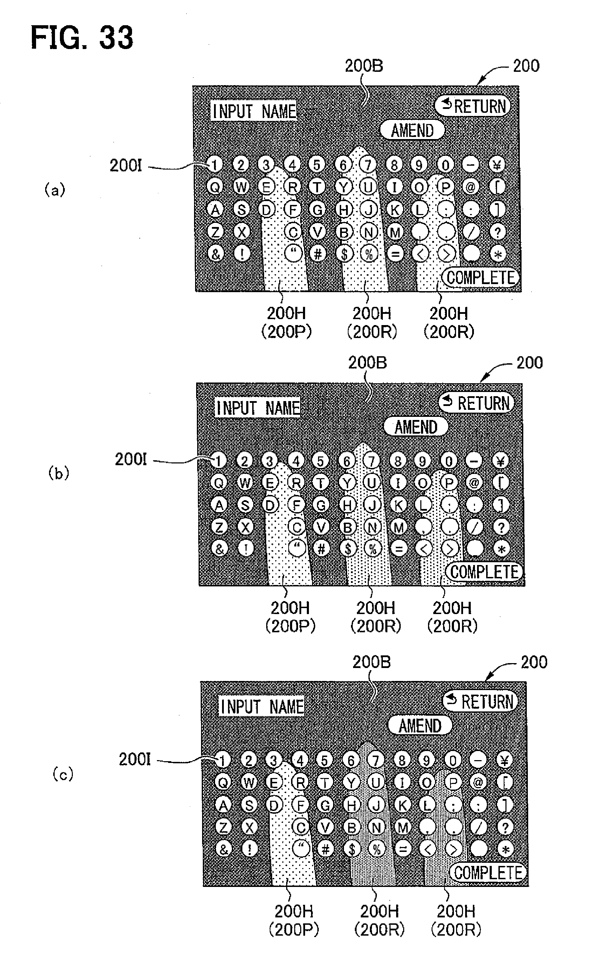

Returning to FIG. 25, In T4, the control circuit 18 displays the image 200H for position indication on the position on the display window corresponding to the specified fingertip Q in such a manner to be combined or superimposed to an image of a background on the display window, as illustrated in FIG. 33 (c). It is noted that such a display is made in a manner of a highlight display, in which within the position indication images 200H, the display region 200P of the position indication image 200H corresponding to the assigned manipulation target finger P is display in highlight compared with the display region 200R of the position indication image 200H corresponding to a finger R other than the manipulation target finger P. Thereby, the visibility of the manipulation target finger P is improved. The finger, which should be manipulated, can be easily recognized by the user, and manipulability is also improved.

In the present example, the control circuit 18 specifies the position relation between the display window of the display device 15 and the image-captured hand finger, first. That is, the control circuit 18 specifies which position on the display window the image-captured hand finger opposes. In the present example, the manipulation panel image region where the touch manipulation area 12a is specified in the capture image 150 captured by the camera 12b. Herein, the manipulation panel image region is a region reflecting the touch manipulation area 12a, i.e., the whole region of the capture image 150. At the same time, the two-dimensional manipulation coordinate system is designated on the manipulation panel image range, and the position of the image-captured finger is specified on the manipulation coordinate system. The position on the display window of the display device 15 corresponding to the position of the finger specified on the manipulation coordinate system is specified in the two-dimensional display coordinate system defined on the display window.

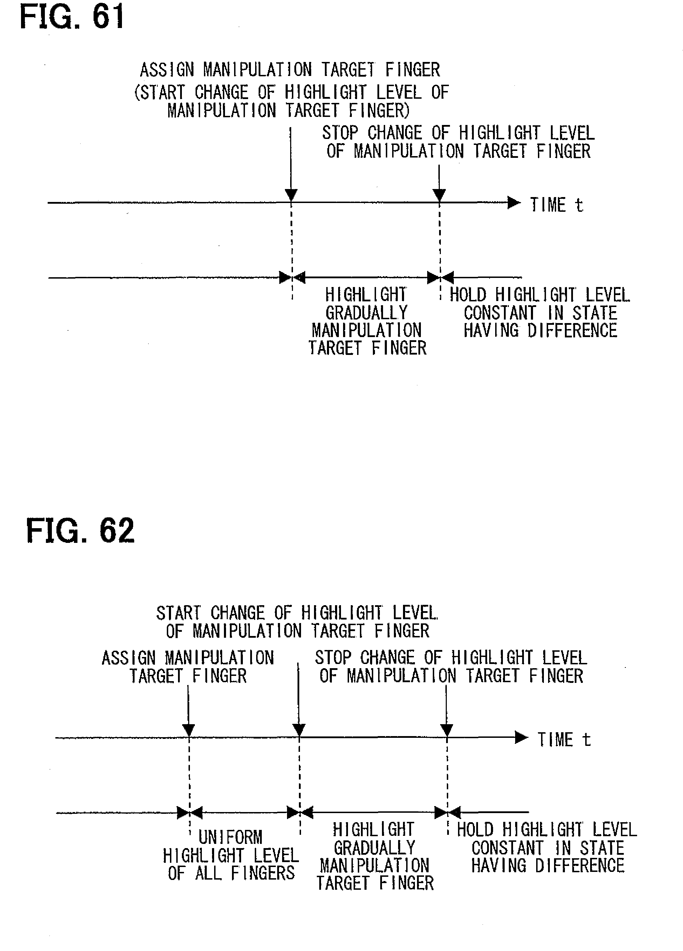

Then, at the position specified on the display window of the display device 15, the position indication image 200H is displayed in superimposition on the position coordinate to which the main image 200B corresponds as illustrated in FIG. 33(a). The highlight display of the above-mentioned position indication image 200H (200P, 200R) is executed in a manner to change the highlight level (highlight degree) step by step in a predetermined time t1 as illustrated in FIG. 61. That is, in the process of the change in the highlight display, an intermediate state in the change takes place as illustrated in FIG. 33 (b). Through undergoing the intermediate state in the highlight display, the change in the highlight display is completed as shown in FIG. 33 (c) In case of causing a finger, which is un-specified, to be less-visible in the highlight display, if such a non-specified finger is caused to be less-visible suddenly, it may be difficult to recognize which finger is emphasized. Accordingly, all the fingers are similarly displayed first in the highlight display, as shown in FIG. 33 (a). The highlight level is then changed step by step. It is thus easy for the user to associate the own fingers with fingers displayed on the display window.

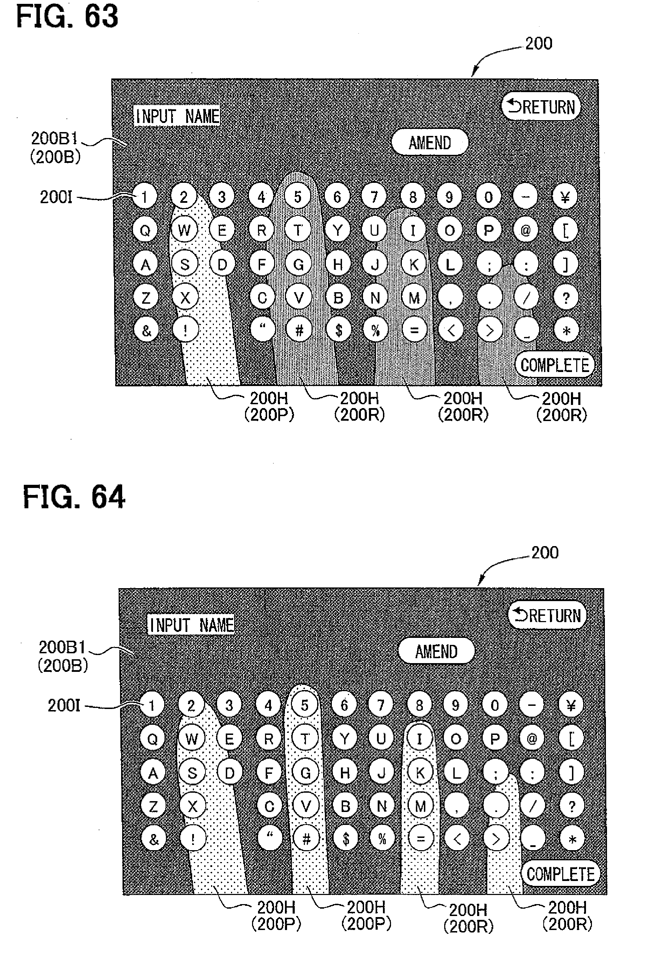

In addition, the highlight display is made to the whole, the outline, or an inside of the outline of the finger display region 200P or 200R of the position indication image 200H, with respect to a color change (refer to FIG. 63),a contrast density change (refer to FIG. 63: fingers other than the manipulation target finger may be erased), a shape change (FIG. 64: manipulation target finger P made thick as an example), a switchover to another image, a transmittance degree (refer to FIG. 27), flashing (refer to FIG.. 65), or any combination of the foregoing. In the present example, the highlight display is made to the inside of the outline of the processed image of the position indication imag 200H with respect to the transmittance degree. In addition, in the highlight display, the highlight state of the display region 200P of the position indication image 200H corresponding to the manipulation target finger P is held constant, whereas the highlight level of the display region 200R of the position indication image 200H corresponding to the residual finger R is reduced. The position indication image region 200R corresponding to the residual finger R may be erased. In consideration of the manipulability, it is desirable that the position indication image region 200R is held relatively easily recognizable although the highlight level is lower than the case of erasing entirely.

In addition, the highlight display in T4 may be started immediately after the manipulation target finger P is assigned in T3 as illustrated in FIG. 61 or may be started after a predetermined time elapses since the manipulation target finger P is assigned in T3 as illustrated in FIG. 62. In particular, in the configuration so that the highlight display is not applied step by step, it is desirable to select the latter.

T4 ends; then, the present process is ended. It is noted that even after the end of the present process, the present process is repeatedly executed with predetermined intervals. In conjunction with movement of the hand which opposes the manipulation panel 12a, the display position of the position indication image 200H displayed on the display window of the display device 15 is moved accordingly. When the hand moves in the middle of the highlight change, the display position of the position indication image 200H (200P and 200R) moves while continuing the highlight change. When the hand moves after the highlight change is completed, the display position of the position indication image 200H (200P and 200R) moves with the highlight state held.

It is noted that the display process of the position indication image includes a finger specification step, a fingertip specification step, a manipulation target finger assignment step, a position indication image highlight display step, and an assignment finger information acquisition step. The control circuit 18 executes the process using the CPU, thereby functioning as a section or means of executing each step (a finger specification section or means, a fingertip specification section or means, a manipulation target finger assignment section or means, a position indication image highlight display section or means, an assignment finger information acquisition section or means).

### 1.10.2 Second modification of tenth example

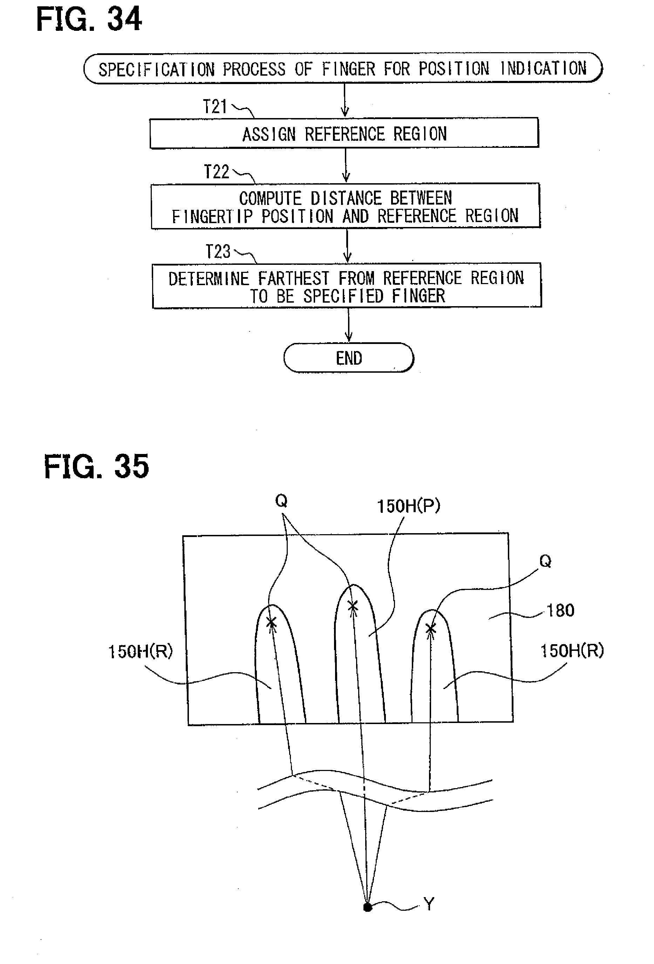

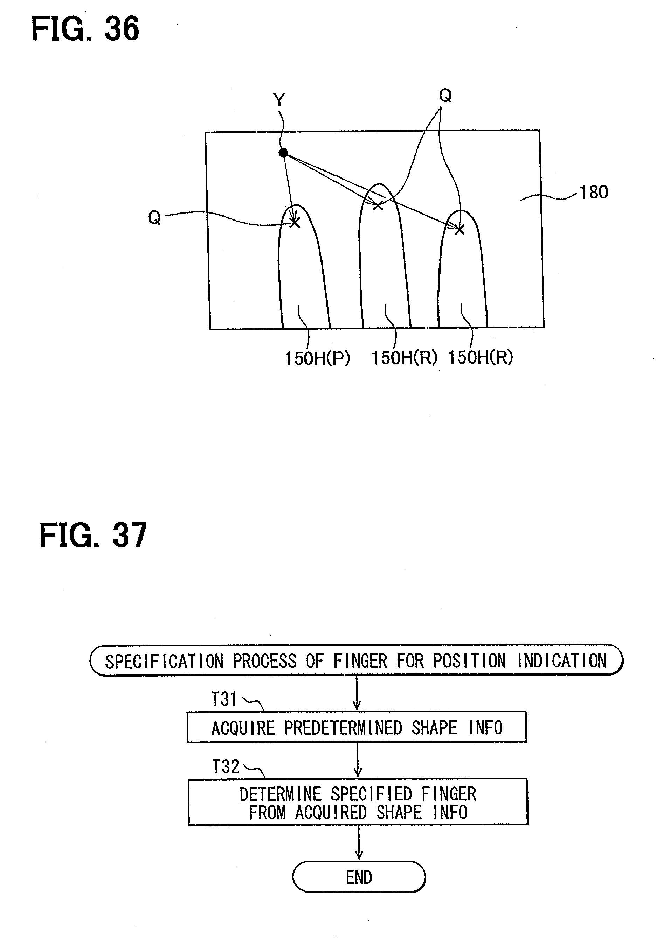

The assignment method of the manipulation target finger P can be configured as illustrated in FIG. 34 to FIG. 36. As illustrated in the flowchart of FIG. 34, in T21, the fingertip Q specified in T2 of FIG. 25 is projected to the touch manipulation area 12a1; a reference region Y is designated in a predetermined region on the projection plane 180 (refer to FIG. 35 or FIG. 36). In T22, distance information reflecting a distance between the reference region Y designated in T22 and the projected fingertip Q is acquired as position relation information (an assignment finger information acquisition step). In T23, based on the acquired distance information, the manipulation target finger P is assigned, among the fingers specified in T1 of FIG. 25, preferentially to a finger most suitable for the predetermined selection condition about the distance information (a manipulation target finger assignment step).

In the present example, similar to the above examples, the fingertip Q is specified on the plane 180 defined virtually, and the above reference region Y is further defined (T21). Further, each of the above distances is computed (T22), and the manipulation target finger P is assigned based on it (T23). Herein, the manipulator's middle finger is supposed to be the manipulation target finger P, and the finger having the longest distance among the above distances is assigned to the manipulation target finger P. It is noted that the reference region Y may be defined as a region having an area, and may be defined as a point or line having no area.

In addition, the reference region Y can be arranged at a predetermined position where the back of hand is estimated to be located in the state where the finger is image-captured by the camera 12b, for example, as shown in FIG. 35. In this case, the distance information does not reflect directly the length of the finger specified in T1, but relates to it; therefore, a specific finger can be assigned from the length of the distance. For example, the finger having the longest distance can be estimated to be the middle finger. Further, if it is estimated or determined which of the right and the left the manipulating hand is, the finger which adjoins the middle finger can be estimated as the index finger. In addition, when the index finger etc. are supposed to be the manipulation target finger P, the second longest finger may be estimated to be the index finger and assigned.

In addition, the reference region Y can be arranged at the position where the fingertip of the finger supposed to be the manipulation target finger P is most often located in the state where the finger is image-captured by the camera 12b, for instance, as shown in FIG. 36. In this case, the finger having the fingertip Q which has the shortest distance with the reference region Y can be assigned with the manipulation target finger P. In FIG. 36, the manipulation hand is supposed to be the right hand, and the manipulation target finger P is located most in the left upper.

### 1.10.3 Third modification of tenth example

The assignment method of the manipulation target finger P can be configured as illustrated in FIG. 37 to FIG. 38. Herein, as illustrated in the flowchart of FIG. 37, in T31, the finger shape information concerning the shape of each finger specified in T1 of FIG. 25 is acquired as assignment finger information (an assignment finger information acquisition step). In T32, based on the acquired finger shape information, the manipulation target finger P is assigned, among the fingers specified in T1, preferentially to a finger most suitable for the predetermined selection condition about the finger shape information (a manipulation target finger assignment step).

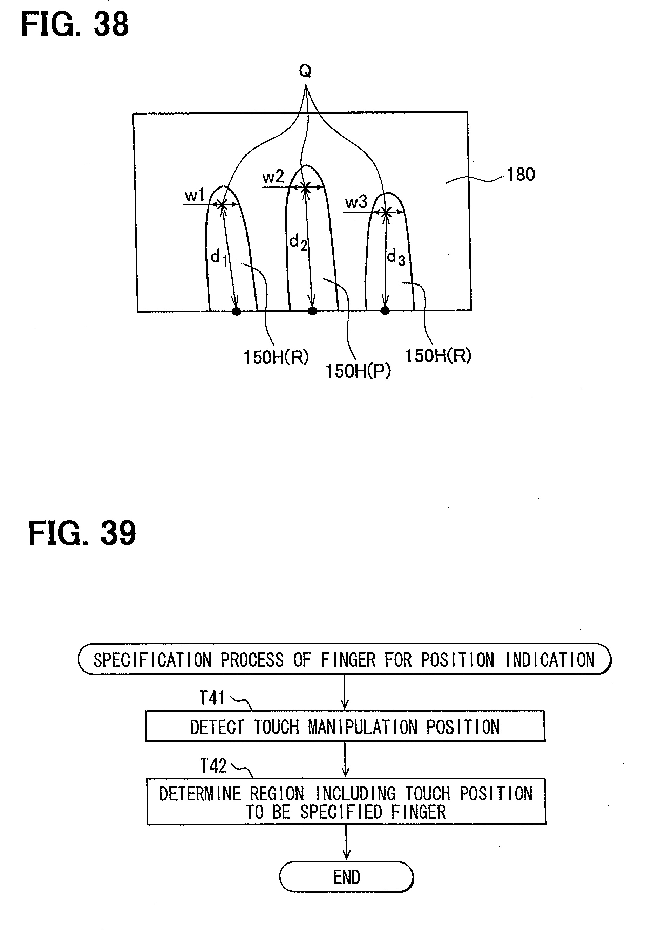

The finger length information which relates to length relation in the direction of the touch manipulation area of the fingers specified in T1 of FIG. 25 can be defined as the finger shape information. In detail, the length d1-d3 (refer to FIG. 38) are computed which are from the fingertip Q specified in T2 of FIG. 25 to the position which corresponds to the middle point of the line segment of the end edge of the finger which appears on the capture image 150. Those are defined as the above finger length information. In such a case, the finger length information is information reflecting the length of each finger specified in T1, thus enabling the assignment of the specific finger from the length. For example, the finger having the longest distance can be estimated to be the middle finger. Further, if it is estimated or determined which of the right and the left the manipulating hand is, the finger which adjoins the middle finger can be estimated as the index finger. In addition, when the index finger etc. is supposed to be the manipulation target finger P, the second longest finger may be estimated to be the index finger and assigned Such a configuration can certainly eliminate a possibility to assign the position indication finger to a finger which is extended halfway without intention to be used for manipulation. Herein, the finger length information d1 to d3 need to be information reflecting the length of each finger at least. For example, it may be a distance along the length direction of the finger from the tip position of the curving fingertip to the end edge of the finger which appears on the capture image 150.

Further, the finger width information which relates to width relation in the direction of the touch manipulation area of the fingers specified in T1 of FIG. 25 can be also defined as the finger shape information. In detail, the lengths w1 to w3 (refer to FIG. 38) of the width direction perpendicular to the length direction of the finger passing through the fingertip Q specified in T2 of FIG. 25 can be defined as the above finger width information. In such a case, in the finger width information, as greater the width appears, closer the finger approaches the touch manipulation area 12a1; thus, it can be also defined as approach distance information which reflects an approach distance relation to the touch manipulation area 12a1. The finger having the greatest width can be assigned with the manipulation target finger P. Herein, the finger width information w1 to w3 need to be information reflecting the width of each finger at least. The finger width may be computed in another position different from the above position.

### 1.10.4 Fourth modification of tenth example

The assignment method of the manipulation target finger P can be configured as illustrated in FIG. 39. In T41, the touch manipulation position T on the touch manipulation area 12a1 is detected by the finger specified in T1 of FIG. 25; in T42, the finger which executed the first-time touch manipulation detected is assigned to the manipulation target finger P (a manipulation target finger assignment step). That is, the touch manipulation position T on the touch manipulation area 12a1 is acquired as the assignment finger information, and the manipulation target finger P is assigned based on this. In such a configuration, the start-up trigger of the highlight display is defined as a user's touch manipulation, thereby preventing the display change due to the highlight display from being missed. In such a case, when the assigned manipulation target finger P, which is moved by the hand manipulation, is traced The assignment of the manipulation target finger P is continued until the finger P disappears from the display window, or until a new touch manipulation is made. Alternatively, it may be necessary that even when the finger appears again on the display window after disappearing from the display window, the same finger is assigned to the manipulation target finger P Thus, conditions, such as position relation information with another finger R and finger shape information of the finger P, may be stored in the storage section 18d of the control circuit 18; based on the stored conditions, the manipulation target finger P may be assigned.

### 1.10.5 Fifth modification of tenth example

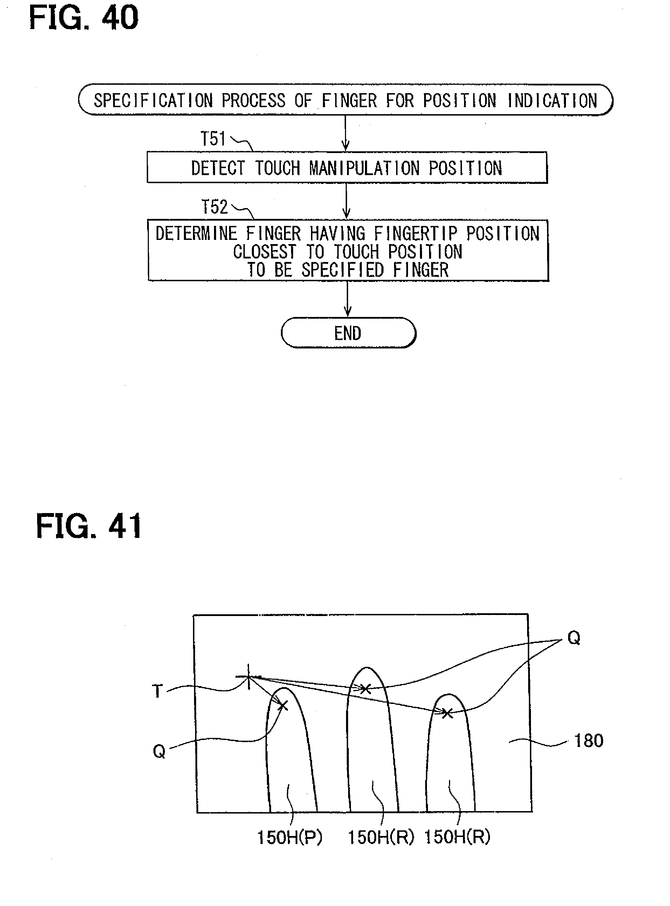

The assignment method of the manipulation target finger P can be configured as illustrated in FIG. 40 and FIG. 41. Herein, as indicated in the flowchart of FIG. 40, in T51 the touch manipulation position T on the touch manipulation area 12a1 is detected by the finger specified in T1 of FIG. 25; when the touch manipulation position T is detected, as indicated in FIG. 41, in T52, the finger nearest to the detected touch manipulation position T is assigned to the manipulation target finger P (a manipulation target finger assignment step). In addition, the highlight display in T4 of FIG. 25 may be started (immediately) after the touch manipulation is made to the touch manipulation area 12a1, or may be started after a predetermined time elapses since the touch manipulation is made to the touch manipulation area 12a1 In particular, in the configuration so that the highlight display is not applied step by step, it is desirable to select the latter.

In the above fourth modification and the fifth modification of the tenth example, when the touch manipulation area 12a1 is touched by mistake and touch manipulation is made, the highlight display can be prevented from starting. In detail, a touch manipulation needing a manipulation load greater than a usual touch manipulation can be defined in T41 or T51 as a highlight display start-up manipulation. For example, a touch manipulation for a highlight display start-up (highlight display start-up manipulation) is defined as needing, than a usual touch manipulation, a longer touch manipulation duration up to the time when the input becomes valid, or as needing, than a usual touch manipulation, a greater touch manipulation strength. In such a case, in T41 or T51, only when the defined highlight display start-up manipulation is made, the processing proceeds to T42 or T52; when the highlight display start-up manipulation is not made, the standby state starts where the highlight display is not started until the highlight display start-up manipulation is made.

### 1.10.6 Sixth modification of tenth example

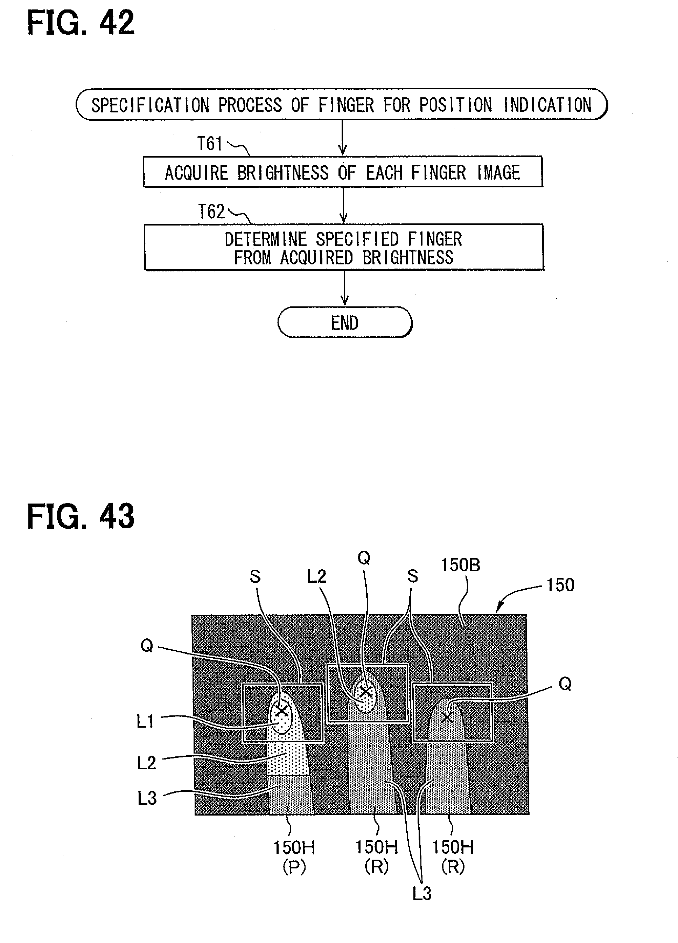

The assignment method of the manipulation target finger P can be configured as illustrated in FIG. 42 and FIG. 43. As illustrated in the flowchart of FIG. 42, in T61, brightness information of the captured image of the finger is acquired as assignment finger information (an assignment finger information acquisition step). In T62, based on the acquired brightness information, the manipulation target finger P is assigned, among the captured images of the fingers, preferentially to a finger most suitable for the predetermined selection condition about the brightness information (a manipulation target finger assignment step). The camera 12b captures the reflection light from a hand which manipulates the touch manipulation area 12a1 to thereby capture an image; thus, the fingertip nearest to the touch manipulation area 12a1 appears in high brightness. That is, the brightness information can be defined as the already mentioned approach distance information (assignment finger information). In contrast, with respect to the fingertip which manipulates the touch manipulation area 12a1, as closer to the touch manipulation area 12a1, higher the possibility of position indication is. For example, a configuration may be provided where the fingertip having the highest brightness is preferentially assigned to the manipulation target finger P.

The camera 12b captures an image by capturing the reflection light of the light source 12c, as illustrated in FIG. 3. Therefore, the reflection light intensity is reflected on the gradation of the color which appears in the capture image 150. In the place which captures the reflection light with a high intensity, the gradation level appears high. That is, the capture image 150 captured by the camera 12b of the present example is a capture image of multi gradation levels (a black-and-white capture image in the present example). The image processing section 18a applies binarization to the gradation levels of each pixel using a predetermined gradation threshold value, thereby generating an image shown in (a) of FIG. 29. The region exceeding the gradation threshold is thus extracted as an approaching object image 150H. In addition, the image processing section 18a intends to specify an image of a person's hand and finger from the extracted approaching object image 150H. Therefore, the shape of the approaching object image 150H is compared with the hand or finger shape pattern stored in the storage section 18d of the control circuit 18. The approaching object image 150H matching the pattern is recognized as an image of the hand and finger. Under the present example, the above gradation threshold for specifying the image of a hand or a finger is defined as the first gradation threshold. Furthermore, another threshold higher than the first gradation threshold is defined as the second gradation threshold. The finger of the fingertip which has the region L1 (refer to FIG. 43) exceeding the second gradation threshold can be assigned as the manipulation target finger P. Another method may be provided as follows. The assignment of the manipulation target finger P may be made by the comparison of the brightness of a fingertip Q, or the average (or maximum/minimum) brightness of a predetermined region based on the fingertip Q. The regions L1 to L3 of FIG. 43 indicate the regions respectively having different brightnesses in the capture image 150; the brightness is decreased in the order of L1, L2, and L3.

That is, T1 of FIG. 25 is a step in which a finger image is specified based on the brightness of the image captured by the camera 12b and a finger is specified by the finger image. T2 of FIG. 25 is a step in which a fingertip is specified using the image of the hand captured by the camera 12b. Furthermore, T3 of FIG. 25 is a step in which the manipulation target finger P is specified similarly based on the brightness of the image of the hand image-captured by the camera 12b. Therefore, in the present example, the specification based on the capture image of the camera 12b can be made with respect to the finger, the fingertip, and, furthermore, the manipulation target finger P.

In addition, herein, the assignment process of the manipulation target finger P is made using the image information of a fingertip portion instead of the whole finger. Thereby, the image data used for the assignment process of the manipulation target finger P can be restricted; thereby, the computation cost (the arithmetic quantity and memory quantity) can be reduced. In detail, as illustrated in FIG. 43, a region S having a predetermined shape (herein, square) is defined so as to include the whole of the fingertip while centering the fingertip Q specified in T2. In T61, the brightness information in the region S is specified and acquired with respect to all the fingers specified in T1. In T62, the finger of the region S having the highest brightness among the acquired brightness information is preferentially assigned to the manipulation target finger P.

### 1.10.7 Seventh modification of tenth example

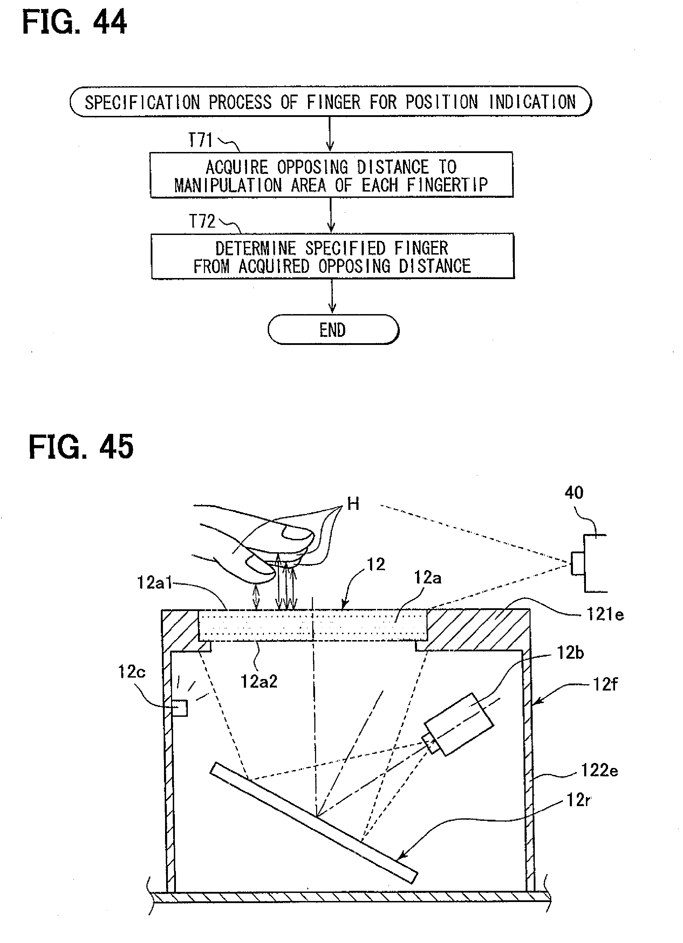

The assignment method of the manipulation target finger P can be configured as illustrated in FIG. 44 to FIG. 46. As illustrated in the flowchart of FIG. 44, in T61, approach distance information is acquired as assignment finger information; the approach distance information is to reflect an approach distance relation to the touch manipulation area 12a1 with respect to the fingertip specified in T1 of FIG. 25 (an assignment finger information acquisition step). In T62, based on the acquired approach distance information, the manipulation target finger is assigned, among the fingers specified in the finger specification step, preferentially to a finger most suitable for the predetermined selection condition about the approach distance information (a manipulation target finger assignment step). Herein, in such a configuration, a means to detect the distance between the touch manipulation area 12a1 and the fingertip of the manipulation hand is needled. Like the above fifth modification of the tenth example, the brightness may be acquirable as the approach distance information. Alternatively, for example, as indicated in FIG. 45, a camera 40 (an image capture section or means) can be used as a section or means for acquiring the approach distance information. The camera 40 is arranged so as to capture an image of the distance between the touch manipulation area 12a1 and the fingertip of the manipulation hand. From the capture image (for example, FIG. 46), the control circuit 18 can compute the distance d1 to d4 of the fingertip of each finger of the manipulation hand against the touch manipulation area 12a1. For example, the finger of the fingertip having the closest distance can be assigned to the manipulation target finger P FIG. 46 shows an example of the capture image by the camera 40 in FIG. 45.

### 1.10.8 Eighth modification of tenth example

The assignment of the manipulation target finger may be made by combining two or more of the above assignment finger information such as position relation information and finger shape information. This enables the more accurate specification of the finger which is a determined kind such as the index finger and the middle finger.

### 1.10.9 Ninth modification of tenth example

The camera 12b serving as a hand image capture section or means may be arranged as shown in FIG. 15, for instance, instead of the camera capturing an image from the side of the rear face 12a2 of the touch panel 12a. In addition, the camera 20 in FIG. 15 can serve also as the camera 12b serving as a hand image capture section or means.

The camera 20 of FIG. 15 can have a capture range covering the hand of a manipulator of the manipulation panel 12a, but also an arm extended from the hand (for example, capture image 300 of FIG. 8). Using such a camera, the control circuit 18 acquires the captured manipulation panel peripheral image, and specifies the direction of the arm extended from the hand using the image processing section 18a, thereby determining whether the manipulator is an occupant at the right or left. If the manipulator of the touch manipulation area 12a1 is a person who is located in the left-hand side of the touch manipulation area 12a1, the manipulation hand can be specified as a right hand. If being a person who is located in the right-hand side of the touch manipulation area 12a1, the manipulation hand can be specified as a left hand.

The control circuit 18 can change the assignment condition of the manipulation target finger P based on the specification result of the manipulation hand. In detail, suppose that the index finger is assigned as the manipulation target finger P. When a manipulation hand is a left hand, the index finger is specified as a finger which appears at the rightmost, or a finger which adjoins, at the right, the middle finger which appears while having a longest length. When a manipulation hand is a right hand, the index finger is specified as a finger which appears at the leftmost, or a finger which adjoins, at the left, the middle finger which appears while having a longest length. Therefore, when the selection condition changes according to whether a manipulation hand is a left hand or a right hand in assigning the manipulation target finger P, the change can be executed based on the specification result of the manipulation hand. Moreover, when a manipulation hand is specified as a hand of the driver, the display may be canceled to prevent the manipulation. Thereby, only a passenger at the left-hand side passenger seat can be assigned as a manipulator; a right hand can be continuously defined as a manipulation hand. As a result, this can be beforehand reflected in the selection condition of the manipulation target finger P.

In the capture image 300 of FIG. 8, the sign 300H signifies a hand image, the sign 300A signifies an arm image extended from the hand, and the sign 312a signifies a region in which the manipulation panel 12a is image-captured. The arm of the manipulator of the manipulation panel 12a is extended from the right side of the capture image, i.e., the driver side, thereby specifying the manipulator to be the driver.

In such a case, the camera 20 together with the control circuit 18 (image processing section 18a) functions as a manipulator specification section or means. The method of specifying whether the manipulator of the manipulation panel 12a is the driver may be another method. For example, an approaching object detection device (for example, a reflection type optical sensor such as an infrared reflection sensor) which detects an approaching object may be arranged in each of both vehicle-right and vehicle-left sides of the touch manipulation area 12a, thereby specifying the manipulator.

### 1.10.10 Tenth modification of tenth example

In all the above-mentioned modifications of the tenth example, only when two or more fingers are specified, the above highlight display may be executed. The control circuit 18 which functions as a finger specification section or means can specify the number of fingers. When the specified number of fingers is two or more, the above position indication image display process of the tenth example may be performed. When being one, a simple display process which displays only the position indication image corresponding to the finger may be performed.

### 1.10.11 Eleventh modification of tenth example

In all the above-mentioned modifications of the tenth example, the remote manipulation section is premised to respond to contact manipulation (push manipulation or touch manipulation); one finger is assigned for the position indication. Furthermore, it is also explained that another configuration may be possible where two fingers are assigned for the position indication as illustrated in FIG. 48. In contrast, a remote manipulation section may be a manipulation section which is premised to respond to a manipulation to pinch a manipulation knob such as a dial manipulation section. In this case, the fingers whose number is such as two or three can also be assigned with a manipulation target finger P. Furthermore, the specification of the finger or fingertip in the manipulation to pinch can be executed using the above-mentioned approach distance information (information reflecting the approach distance relation to the remote manipulation area).

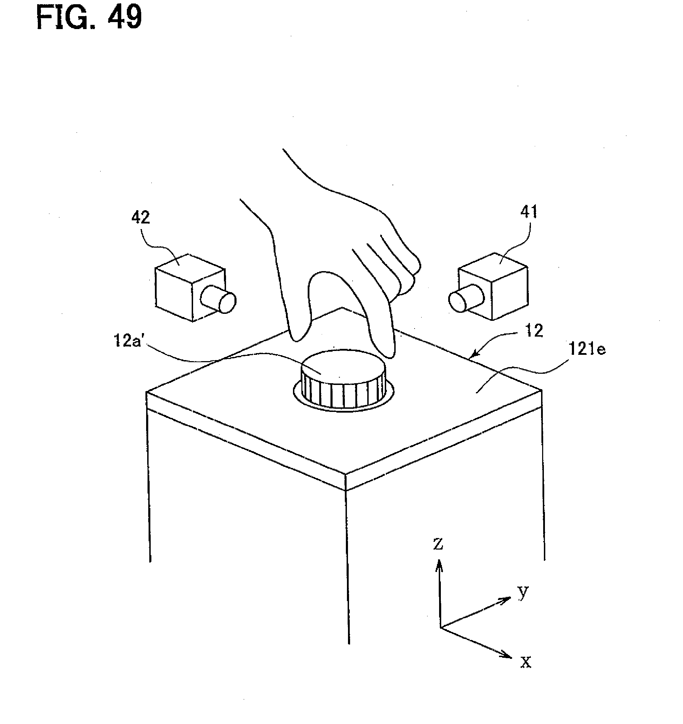

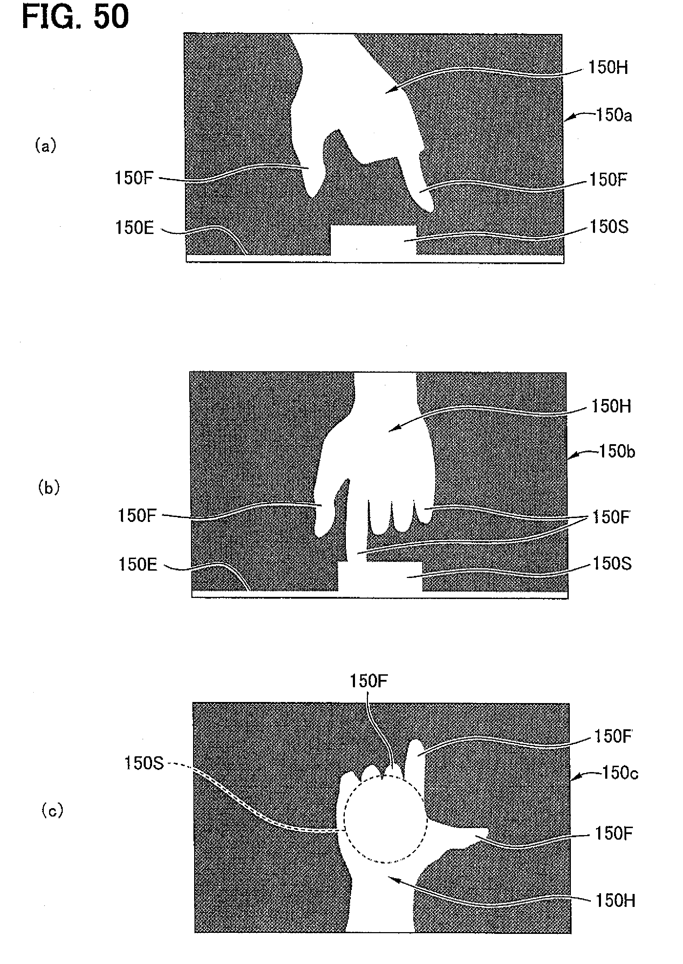

For example, as illustrated in FIG. 49, a dial manipulation section 12a' (a housing front end portion 121e around a dial knob is also included as a part of the dial manipulation section 12a') is provided as a remote manipulation section of the present embodiment. Cameras 41, 42 are arranged to capture an image of a hand approaching in order to manipulate the dial manipulation section 12a'; the cameras 41 and 42 are connected with the control circuit 18. The cameras 41 and 42 differ in the image capture range, and are arranged so as to have respective image capture directions orthogonal to each other on a plane perpendicular to the axis of the rotation of the dial manipulation section 12a'. An example of each of capture images 150a, 150b of the cameras 41, 42 (images after the binarization similar to those of (b) of FIG. 27 and FIG. 28) is illustrated in FIG. 50 (a) or (b), respectively. In contrast, a camera 12b may be arranged in a manner shown in FIG. 3 inside of the manipulation information input section 12 (or outside of it as shown in FIG. 15). An example of a capture image 150c of the camera 12b (image after the binarization similar to those of (b) of FIG. 27 and FIG. 28) is illustrated in FIG. 50 (c). The image region 150S in the images 150a, 150b, and 150c is a region reflecting the manipulating section 12a'.

The flow of the highlight display process executed in this configuration is explained.

First of all, the images 150a and 150b of FIG. 50 (a) and (b) are acquired (processing corresponding to T1 of FIG. 25). The fingertip Q is specified from the hand image 150H extracted from the images 150a and 150b. Moreover, the specific position of the fingertip Q is specified (processing corresponding to T2 of FIG. 25). Herein, a three dimensional coordinate system (vehicle compartment coordinate system) is provided in a vehicle compartment so as to have an x-axis, a y-axis, and a z axis shown in FIG. 49, which are specified as position coordinates in the coordinate system. In detail, the x-z coordinate system and y-z coordinate system are provided in the images 150a and 150b. The fingertip Q is specified, by one of the already mentioned methods, in the tip region of the projection image 150F extended to the side of the housing front end portion 121e. The position coordinate of the fingertip Q are specified, to thereby specify the three dimensional position coordinates in the above vehicle compartment coordinate system.

Then, the manipulation target finger P is specified. Herein, the distance from the each fingertip Q to the front end face of the housing front end portion 121e is computed. Both the fingertip Q in the position nearest to the front end face of the housing front end portion 121e and the fingertip Q which is in the position second nearest are specified as the manipulation target finger P. Since the front end face (sign 150E) of the housing front end portion 121e is reflected in the images 150a and 150b, the computation of the distance is made using it or from the brightness of the image 150c.

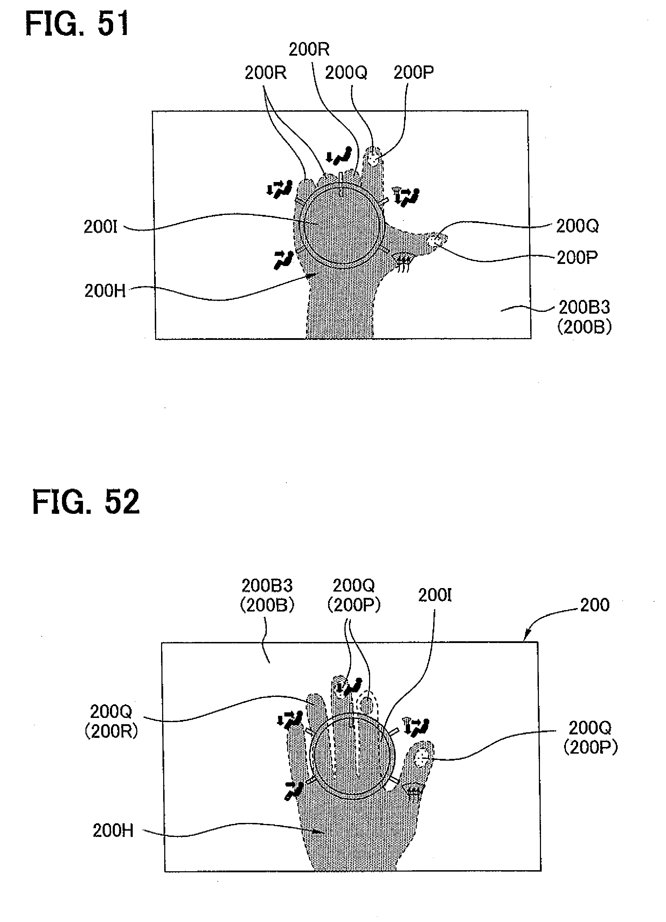

The position indication region 200Q (200P) of the position indication image 200H corresponding to the fingertip Q of the specified manipulation target finger P is displayed, in a manner to highlight rather than the position indication region 200Q (200R) of the position indication image 200H corresponding to another fingertip Q, in superimposition or in combination to the background image 200B as shown in FIG. 51. Herein, the background image 200B (200B3) in FIG. 51 contains a dial switch image as a switch image 2001. The rotation display according to the rotation manipulation of the dial manipulation section 12a' serving as the remote manipulation section is made. The control content according to a rotational position is executed.

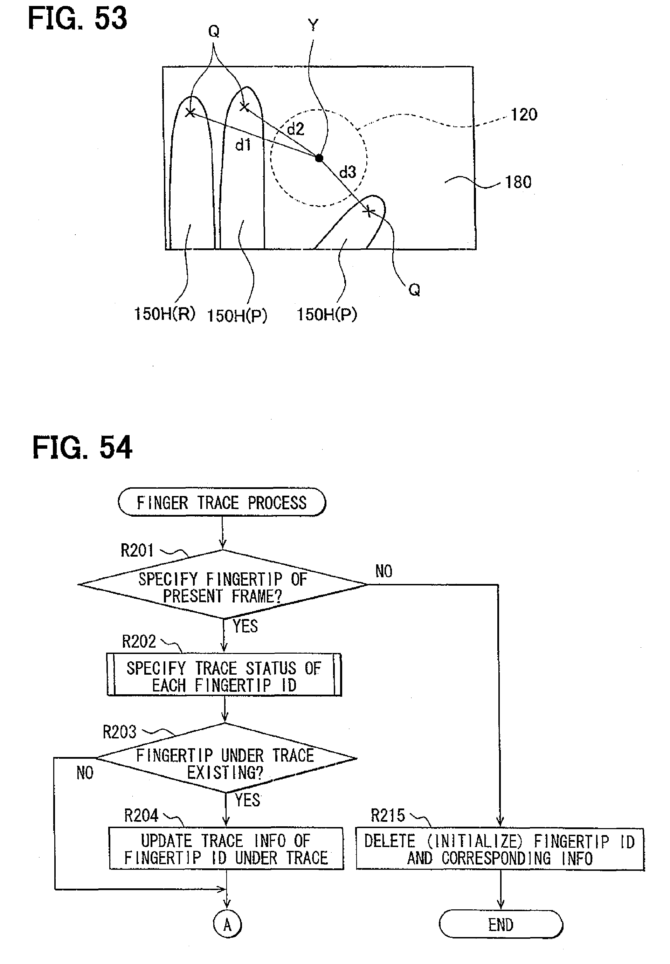

The assignment method of the manipulation target finger P is like the second modification of the tenth example. That is, the specified fingertip Q is projected towards the dial manipulation section 12a' serving as the remote manipulation section (to the direction opposing the dial manipulation section 12a'). The distance information reflecting the distance between the reference region Y designated in a predetermined region on the projection plane 180 and the projected fingertip Q is acquired as position relation information. Using the acquired distance information, the manipulation target finger P is assigned preferentially to the finger suitable for the predetermined selection condition about the distance. The reference region Y is defined as a centre position of the projection region 120 which is generated by projecting the dial manipulation section 12a' on the projection plane 180, as indicated in FIG. 53.

In addition, herein, the assignment method of the manipulation target finger P may be a method in which the thumb is contained at least. In detail, the thumb can be specified from various elements, such as the difference of thickness from other fingers, the difference of position relation from other fingers, and the difference in the extending direction of the finger. In addition, when the manipulation target finger P is assigned to two fingers, the remaining one finger other than the thumb can be the finger nearest to the front end face of the housing front end portion 121e except the thumb. It is noted that, the remaining one finger is desirably assigned to the index finger or the middle finger from the ease of executing pinch manipulation. For example, it can be assigned on the basis of the thumb (for example, position relation from the thumb). In addition, when the remote manipulation section is premised to respond to the above mentioned pinch manipulation, the fingertips of three fingers may be highlighted as shown in FIG. 52. In this case, it is preferable that the thumb, the index finger, and the middle finger are assigned to the manipulation target finger P.

Moreover, in this example, the fingertip region 200Q in the position indication image 200H is defined as the position indication region. Alternatively, like other already described examples, the whole of the fingers contained in the position. indication image 200H is defined as the position indication region. On the contrary, in the other already described examples, the fingertip region 200Q in the position indication image 200H may be defined as the position indication region. 1.10.12 Twelve modification of tenth example(Trace process of finger or fingertip)The process, which is applicable in all the above-mentioned examples, is explained as the twelfth modification of the tenth example. In the tenth example, the manipulation target finger P is specified for every frame of a capture image. Herein, when the position relation between the manipulation panel 12a (12a') and the manipulating hand changes, the manipulation target finger P may be assigned to another finger automatically. In particular, when the manipulation target finger P is specified based on the contact position (user's manipulation) to the remote manipulation section like the fourth modification or the fifth modification of the tenth example, the manipulation target finger P is specified on the basis of the touch manipulation. It is not desirable to use another finger as the manipulation target finger P simply just because the position of a hand or finger is moved. In addition, also in other than the tenth example, suppose that the state, where the predetermined kind of the simple manipulation-use finger is specified as a simple manipulation-use finger state, is defined (for example, finger state in which one of or both of the index finger and the middle finger is specified). Herein, it is not desirable to specify another finger as a finger of the kind for simple manipulation simply just because the position of the hand or the finger is moved after the finger of the kind is specified. For this reason, after a finger such as the manipulation target finger P is assigned or: specified, a process which traces the movement of the finger assigned or specified is added. Based on the trace result, the same finger is continuously assigned or specified, thereby overcoming the above problem.

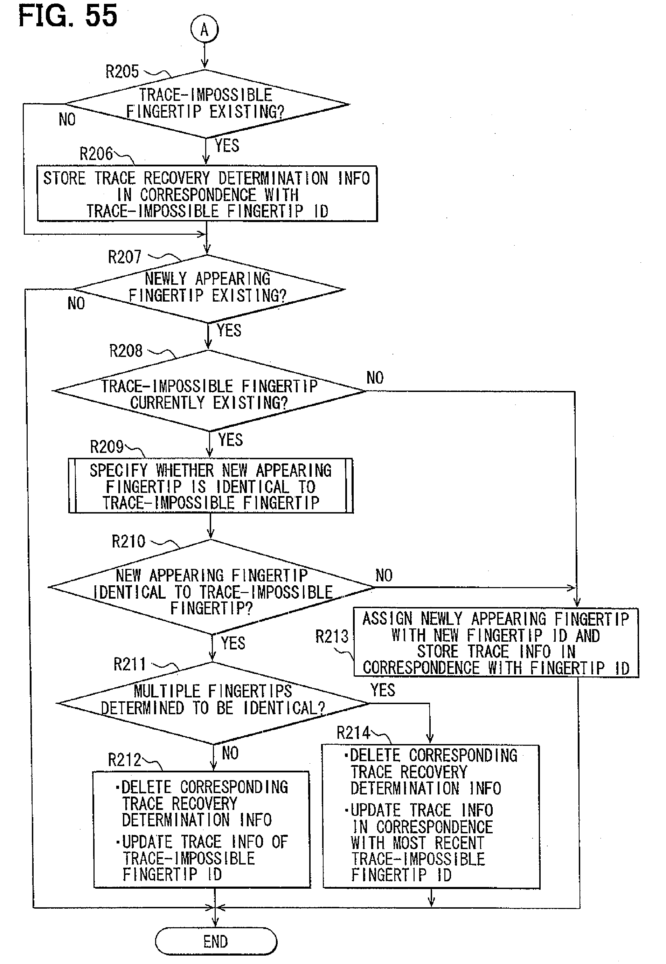

FIGs. 54 and 55 illustrate a process for tracing all the fingers specified in T1 of FIG. 25, furthermore, a process for tracing all the fingertips specified in T2, or a process for tracing all the fingers (further fingertip) specified in S2 of FIG. 9 (and a process equivalent to S2). Herein, a configuration is provided so as to specify the hand (finger) which opposes in front of the manipulation panel 12a (12a') in order to manipulate the manipulation panel 12a (12a') serving as the remote manipulation section, based on the moving image captured by the camera 12b serving as an image capture section or means. In such a case, the finger specification possible region (fingertip specification possible region) of a hand (finger) opposing in front of the manipulation panel 12a (12a') is an image capture region of the camera 12b, which is fixedly arranged. The camera 12b captures the moving image in the region and the control circuit 18 acquires the moving image frame captured one by one every predetermined time interval.

In the finger trace process (a finger trace step) of FIGs. 54 and 55, the position within the frame of each fingertip specified from the moving image frame acquired one by one is computed. The computed position information is stored and accumulated as trace information in a predetermined trace information storage section of the storage section 18d such as ROM of the control circuit 18. Thereby, while identifying each fingertip specified from the moving image frame acquired one by one, each movement is traced.

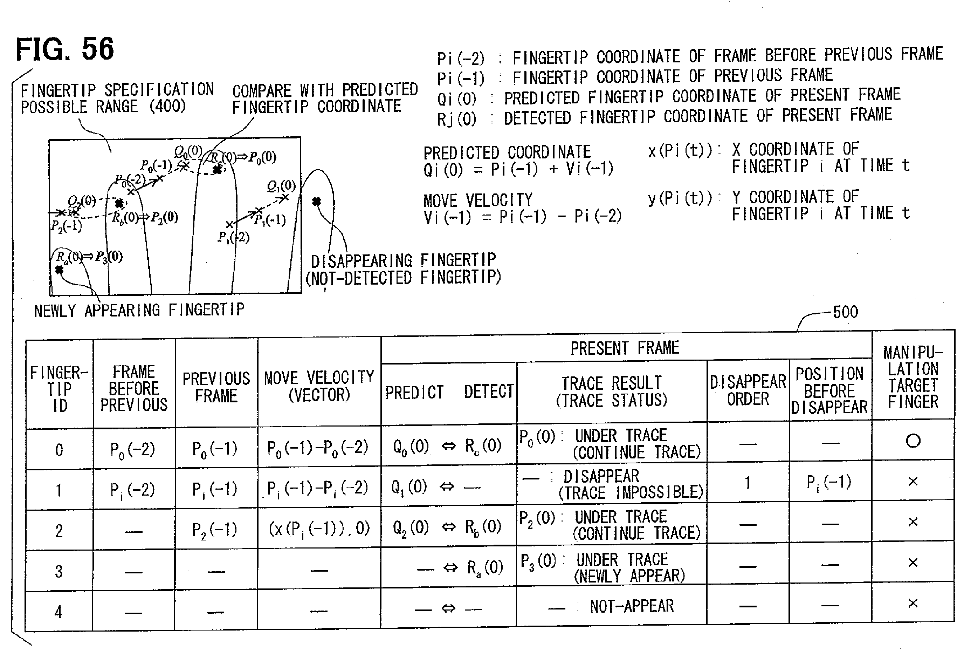

The trace information is stored in a format indicated by the sign 500 in FIG. 56. In the trace information 500 shown in FIG. 56, a fingertip ID (identification information) is assigned to each fingertip specified in the acquired moving image frame. In correspondence with the fingertip ID, position information can be stored which indicates positions in the previous moving image frame of each fingertip (hereinafter, referred to as previous frame) and the moving image frame before the previous (hereinafter, frame before previous). The position information is a position coordinate of each fingertip on the predetermined two-dimensional coordinate system defined in the moving image frame. The upper diagram in FIG. 56 illustrates the moving image frame where the two-dimensional coordinate system is defined (also referred to as a finger specification possible region) while displaying the position coordinate Pi (-1) of the fingertip specified in the previous frame, the position coordinate Pi (-2) of the fingertip specified in the frame before previous, and the fingertip Rj (0) specified in the present frame, all of which are stored as trace information 500 of FIG. 56. As illustrated in FIG. 56, each time a new moving image frame is acquired, the position coordinate of each fingertip is stored and updated one by one. The stored position coordinates are of the previous frame and the frame before previous; the position coordinates of the frames prior to the frame before previous are erased one by one.

Moreover, the trace information 500 contains the position information which indicates the position on the frame of each fingertip specified from the newest moving image frame (hereinafter, referred to as a present frame). Such position information is stored for every fingertip ID in the trace information storage portion. Furthermore, the trace information contains the prediction position (next position) at which each fingertip is probably located in the present frame. The prediction position information which indicates the prediction position is stored in the trace information storage section. Furthermore, the correspondence relation between the position information on the fingertip in the present frame and the prediction position information on the fingertip predicted in the present frame is specified. From the correspondence result, for every fingertip ID, the trace status of the corresponding fingertip at the time of acquiring the present frame is specified and also stored in the trace information storage section as the trace information. The trace status includes at least three states of: the trace continuation state (under trace) in which the trace of a fingertip is continuing from the previous frame to the present frame; the trace impossible state (disappear) in which the fingertip traced up to the previous frame is lost (disappear) in the present frame; and the new appearance state (newly appear) in which the fingertip which was not traced at the previous frame appears newly.

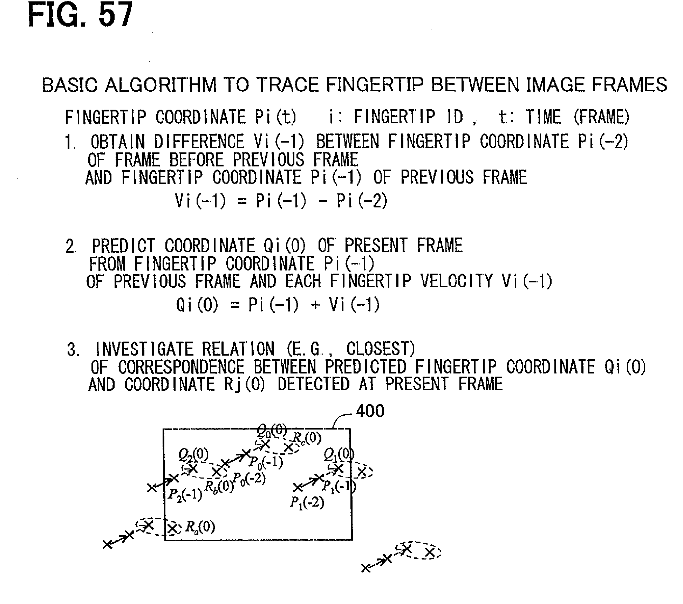

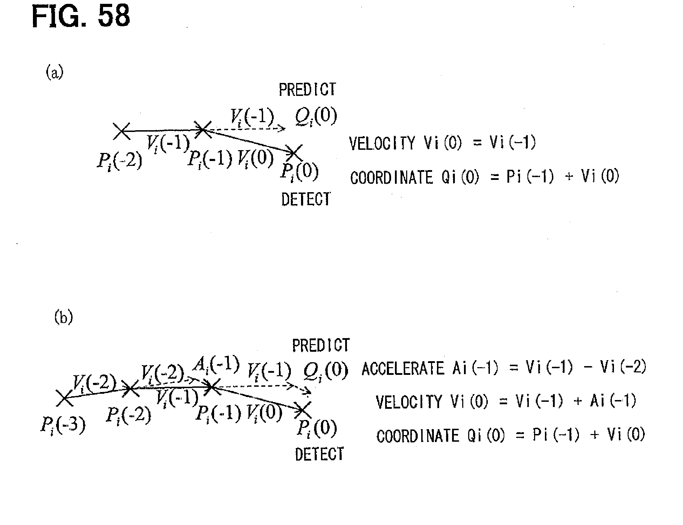

The computation method of the prediction position of the fingertip is exemplified as the following method. That is, in the method, the prediction position is computed based on the position information which indicates the position of each fingertip on the moving image frames of the past multiple times. Herein, the position information on each fingertip on the previous frame and the frame before previous are included as the trace information of each finger. Based on such position information, the movement of each fingertip is predicted. The predicted movement destination of each fingertip on the next frame is computed as the above prediction position (refer to FIG. 57). A specific example is shown in FIG. 58 (a). In the two-dimensional coordinate system of the moving image frame 400 defined in common on each moving image frame, the velocity vector Vi(-1) of the finger in the position coordinate Pi(-1) when moving from the position coordinate Pi(-2) of the finger specified in the frame before previous to the position coordinate Pi(-1) specified on the previous frame is computed based on the movement direction and movement distance of the movement. The finger located in the position coordinate Pi(-1) is predicted to move by the velocity vector Vi(-1) in the next frame. The position coordinate Qi(-0) of the predicted movement destination is computed (Qi(-0) = Pi(-1) + Vi (-1)). The computed position coordinate Qi(-0) is the prediction position information and stored in the predetermined trace information storage section of the storage section 18d of the control circuit 18 as one of the trace information.

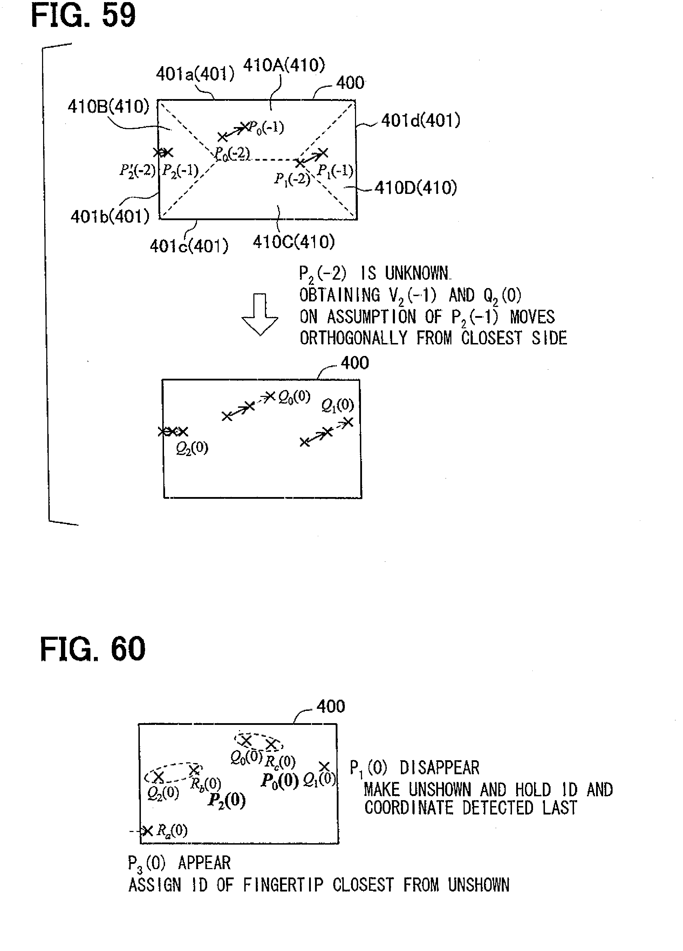

In contrast, with respect to the fingertip which appeared newly in the previous frame, an appearance in the next frame cannot be predicted by the above prediction method using both the previous frame and the frame before previous. In such a case, based on the position information of the fingertip specified on the previous frame, the position of the fingertip on the frame before previous is defined as a temporary position. Based on the position information which indicates the temporary position, and the position information on the previous frame, the appearing position of the fingertip on the next frame is specified. The determination method of the temporary position is as follows. Namely, as indicated in FIG. 59, the region in the moving image frame (fingertip specification possible range) 400 is divided beforehand in correspondence with each edge (herein, upper, lower, left, right edges) (a broken line illustrates a division line). The edge corresponding region 410 corresponding to each edge 401 (401a-401d) is designated. Moreover, first, the edge corresponding region 410 (401A - 401D) where the fingertip position Pi(-1) specified on the previous frame exists is specified. When the edge corresponding region 410 where Pi(-1) exists is specified, the position on the edge 401 of the edge corresponding region 410 nearest to the Pi(-1) is determined as a temporary position of the frame before previous. That is, the temporary position Pi'(-2) is defined as an intersection of a perpendicular line with an edge 401. The perpendicular line passes through the fingertip position Pi(-1) specified on the previous frame, and goes to the edge 401 of the edge corresponding region 410 where the fingertip position Pi(-1) exists.

The above computation method of the prediction position of the fingertip is to compute based on the position information on each fingertip on the previous frame and the frame before previous. Alternatively, in order to compute in a higher precision, computation is made as indicated in FIG. 58 (b). Namely, in the two-dimensional coordinate system on the moving image frame 400 defined in common on each moving image frame, each of a velocity vector Vi(-1) and an acceleration vector Ai(-1) is computed with respect to a finger on the position coordinate Pi(-1) specified on the one-time previous frame before the present frame. In the next frame, the finger located in the position coordinate Pi(-1) is predicted to make a movement corresponding to the velocity vector Vi(-1) and the acceleration vector Ai(-1). The position coordinate Qi(-0) of the predicted movement destination is computed (Qi(-0) = Pi(-1) + Vi (0) = Pi(-1) + Vi(-1) + Ai(-1)). Based on the movement direction and movement distance at the time of moving from the position coordinate Pi(-3) specified on the three-time previous frame before the present frame to the position coordinate Pi (-2) of the finger specified on the two-time previous frame before the present frame, the velocity vector Vi(-2) of the finger in the position coordinate Pi(-2) is computed. Based on the movement direction and movement distance at the time of moving from the position coordinate, which is the movement destination of moving this finger from the position coordinate Pi(-2) on the moving image frame 400 by the vector Vi(-2) to the position coordinate Pi(-1) specified on the one-time previous frame before the present frame, the acceleration vector Ai (-1) is computed (Ai(-1) =Vi(-1)-Vi(-2) =Pi(-1)-Pi(-2)-Vi (-2)). Moreover, the velocity vector Vi(-1) is computed based on the movement direction and movement distance at the time of the movement from the position coordinate Pi(-2) specified on the two-time previous frame before the present frame to the position coordinate Pi(-1) specified on the one-time previous frame before the present frame.

The specification method of the trace status of the fingertip is exemplified as the following specification method. That is, the comparison is made between the position information on the fingertip specified on the present frame and, of the fingertip, the prediction position information on the present frame; the specification is made based on whether the position relation of them satisfies a predetermined reference condition. For example, FIG. 56 indicates the position coordinates Q1(-0), Q2(-0), and Q3(-0) of the fingertip which respective prediction position information computes about the present frame, and the position coordinates Ra(0), Rb(0), Roc(0), ... of all the fingertips actually specified on the present frame. Among those position coordinates, a pair of the position coordinates whose positions are closest on the moving image frame is recognized as a pair which satisfies the reference condition. Herein, when the position relation to be separated from each other by a predetermined distance such that the distance between both the positions of the pair is not less than a predetermined reference distance, such a pair is not recognized as the corresponding pair. With respect to the corresponding pair, it is determined that the fingertip actually specified in the present frame and the fingertip corresponding to the position information on the previous frame used as the basis for computing the prediction position information are an identical fingertip. The trace continuation state (under trace) is specified in which the trace of the fingertip is continuing from the previous frame to the present frame. Among the fingertips actually specified in the present frame, the fingertip whose corresponding pairing partner is not found is specified as being in the new appearance state (newly appear). Among the fingertips corresponding to the prediction position information computed about the present frame (fingertips specified as under the trace in the previous frame), the fingertip whose corresponding pairing partner is not found is specified as being in trace impossible state (disappear). The trace status of each specified fingertip is stored in correspondence with the ID of each fingertip in the predetermined trace information storage section of the storage section 18d of the control circuit 1.

When the trace status is specified as being in the trace impossible state (disappear), together with the trace impossible state and the position information of the fingertip on the frame just before the fame where this trace impossible state is specified, a trace impossible recognition order is stored as trace recovery determination information in the trace information storage section (trace recovery determination information storage section). The trace impossible recognition order enables the specification of the anteroposterior relation with another finger under trace impossible state in respect of the trace impossible specification time. It is noted that this trace recovery determination information is treated as one of the trace information.

The flow of the finger trace process (a finger trace step) shown in FIGs. 54 and 55 is explained. This finger trace process is a process performed whenever the control circuit 18 acquires a moving image frame from the camera 12b. Thereby, the control circuit 18 functions as a finger trace section or means

First, in R201 (FIG. 54), it is determined whether a fingertip is specified in the new moving image frame (present frame) which the control circuit 18 acquires using moving image captured by the camera 12b. When a fingertip is specified, the processing proceeds to R202; when a fingertip is not specified; the processing proceeds to R215. Herein, the specification method of the fingertip is similar to T1 and T2 of FIG. 25.

In R202, the control circuit 18 specifies the correspondence relation between each fingertip specified on the present frame, and each fingertip specified on the previous frame. Herein, the correspondence relation between the position information of the fingertip on the present frame and the prediction position information of the fingertip predicted for the present frame is specified. From the correspondence result, a state of the trace status of each fingertip at the time of acquiring the present frame is specified for every fingertip ID. Such a state is specified from among trace continuation state (under trace), trace impossible state (disappear), new appearance state (newly appear), and non-specified (no appear). The specified trace status is stored for every corresponding fingertip ID in the predetermined trace information storage section of the storage section 18d of the control circuit 18, in a format indicated using the sign 500 in FIG. 56. Herein, when there is a fingertip specified on the present frame while satisfying the above reference condition with a fingertip specified on the previous frame, the trace continuation state (under trace) is recognized. When there is a fingertip specified on the present frame while not satisfying the above reference condition with any fingertip specified on the previous frame, the new appearance state (newly appear) is recognized. When there is a fingertip specified on the previous frame while not satisfying the above reference condition with any fingertip specified on the present frame, the trace impossible state (disappear) is recognized.

In R203, it is determined whether there is an identical finger between a fingertip specified on the previous frame and a fingertip specified on the present frame, i.e., it is determined whether there is a fingertip in the trace continuation state (under trace) on the present frame. When the fingertip in the trace continuation state (under trace) exists, the processing proceeds to R204. When the fingertip in the trace continuation state (under trace) does not exist, the processing proceeds to R205 of FIG. 55.

In R204, update is made with respect to the trace information corresponding to the fingertip ID of the fingertip in the trace continuation state (under trace). The fingertip in the trace continuation state (under trace) is a fingertip about which the trace information is updated at the time of acquiring the previous frame. The position information on the present frame corresponding to the fingertip ID of the finger is updated by the position information which indicates the position on the present frame of the fingertip. Furthermore, the position information on the present frame stored until now is stored, posterior to the update, as the position information on the previous frame. Furthermore, the position information on the previous frame stored until now is stored, posterior to the update, as the position information on the frame before previous.

In R205, it is determined whether there is a fingertip on the present frame among the fingertips specified on the previous frame, i.e., it is determined whether there is a fingertip, which becomes trace impossible on the present frame, such as P1 (0) shown in FIG. 60. When the fingertip in the trace impossible state (under trace) exists, the processing proceeds to R206. When the fingertip in the trace continuation state (under trace) does not exist, the processing proceeds to R207.

In R206, the trace recovery determination information is stored in correspondence with a fingertip ID of a fingertip in the trace impossible state (disappear); the trace recovery determination information is information of the relevant finger at the time when being recognized as being in the trace impossible state. When a new fingertip, which is not under trace, appears in the moving image frame acquired later, this trace recovery determination information is used for determining whether the new finger is the finger recognized herein as being in the trace impossible state. Thereby, when a fingertip, which disappeared from the frame once, enters the frame again, both the finger having disappeared and the finger entering can be recognized as an identical finger. This enables the trace of the finger one more. Herein, a fingertip ID of a fingertip becoming in the trace impossible state is not erased but stored. In correspondence with the fingertip ID, trace impossible recognition order (disappear order) is stored as trace recovery determination information, together with the position information on the previous frame corresponding to the fingertip ID (position before disappear). The trace impossible recognition order enables the specification of the anteroposterior relation with the finger under trace impossible in respect of the trace impossible recognition time. In the case of FIG. 56, "1" is given to the fingertip ID "2" as disappear order. When a new fingertip becomes in the trace impossible state on the moving image frame acquired later, "2" is given to the fingertip ID as disappear order. It is determined that as the given number is larger, the trace impossible recognition time is newer.

In R207, among the fingertips specified on the present frame, it is determined whether there is a fingertip which is not specified on the previous frame, i.e., it is determined whether there is a fingertip which newly appears in the present frame. When the fingertip in the new appearance state (newly appear) exists, the processing proceeds to R208. When the fingertip in the trace continuation state does not exist, the processing proceeds to R209.

In R208, after it is determined in R207 that the fingertip in the new appearance state (newly appear) exists, it is determined whether there is a fingertip which is continuously in the trace impossible state (disappear). This determination is executed based on whether there is a fingertip ID whose trace recovery determination information is stored in the trace information illustrated in FIG. 56. When it is determined that the fingertip which is continuously in the trace impossible state (disappear) does not exist, the processing proceeds to S213. A new fingertip ID, which is not given to any fingertip, is given to the fingertip in the new appearance state specified in R207. The position information is stored which indicates the position of the fingertip in the new appearance state specified on the present frame, in correspondence with the fingertip ID. Furthermore, the trace status corresponding to the fingertip ID is changed from the trace impossible state into the trace continuation state (trace re-start). The trace recovery determination information which is stored continuously until now is eliminated. R213 ends; then, the present process is ended. In contrast, when it is determined in R208 that the fingertip which continues the trace impossible state (disappear) exists, the processing proceeds to R209.

In R209,it is determined whether there is a fingertip identical to the fingertip which is continuously in the trace impossible state (disappear) among the fingertips of new appearance. In detail, based on the position information in the present frame of the fingertip of the new appearance actually specified in R207 and the position information (trace recovery determination information) which indicates the last position of the fingertip in the trace impossible state included in the trace information 500, among the fingertip which is in the trace impossible state, It is determined whether there is a fingertip closest to the position of the fingertip of the new appearance actually specified within a predetermined range. Herein, a distance is computed which is between the fingertip position of each fingertip actually specified in the present frame, and the fingertip position of each fingertip which is in the trace impossible state. Among the computed distances, the distance, which is smallest and less than a predetermined reference distance, is specified. It is determined that each fingertip which is actually specified in the present frame corresponding to the specified distance and each fingertip in the trace impossible state corresponding to the specified distance are an identical fingertip. It is noted that when there are two or more fingertips which are in the trace impossible state within the predetermined range, the fingertip which became in the trace impossible state most recently is specified as being identical to the fingertip of the new appearance based on the trace impossible recognition order (trace recovery determination information).

In subsequent R210, it is determined whether there is a fingertip identical to the fingertip which is continuously in the trace impossible state (disappear) among the fingertips specified as being new appearance in the present frame based on the result of R209. When existing, the processing proceeds to R211. When not existing, the processing proceeds to R213.

In R211, it is determined whether there are two or more fingertips determined to be identical to the fingertip which is continuously in the trace impossible state (disappear) among the fingertips specified as being new appearance in the present frame based on the result of R209. When determining that there is one instead of two or more, the processing proceeds to R212. In R212, in correspondence with the fingertip ID in the trace impossible state (disappear) of the one fingertip, the position information on the fingertip of the new appearance specified on the present frame and determined to be identical to the fingertip is stored; the trace information of the fingertip ID is updated. Thereby, the position trace of the fingertip in the trace impossible state is re-started. Furthermore, herein, the trace status corresponding to the fingertip ID is changed from the trace impossible state into the trace continuation state (trace re-start); the trace recovery determination information which is stored continuously until now is eliminated. R212 ends; then, the present process is ended.

In contrast, when it is determined in R211 that there are two or more fingertips determined to be identical to the fingertip which is continuously in the trace impossible state (disappear) among the fingertips specified as being new appearance in the present frame based on the result of R209, the processing proceeds to R214. In R214, among two or more fingertips, based on the trace impossible recognition order (trace recovery determination information), the fingertip, which became in the trace impossible state most recently, is specified. In correspondence with the fingertip ID of the specified fingertip, the position information on the fingertip of the new appearance specified on the present frame and determined to be identical to the fingertip is stored; the trace information of the fingertip ID is updated. Thereby, the position trace of the fingertip in the trace impossible state is re-started. Furthermore, herein, the trace status corresponding to the fingertip ID is changed from the trace impossible state into the trace continuation state (trace re-start). The trace recovery determination information which is stored continuously until now is eliminated. R214 ends; then, the present process is ended.

It is noted that when a fingertip is not specified in the acquired new moving image frame in R201, the trace information 500 shown in FIG. 56 is reset. The information corresponding to each ID is eliminated.

Thus, with respect to all the fingertips specified from the moving image captured by the camera 12b, the trace is made continuously also in consideration of disappearing from the frame. The manipulation target finger P can be fixedly assigned to the same finger. In detail, when the manipulation target finger P is assigned by the process which specifies the manipulation target finger P, the manipulation target finger information which indicates the manipulation target finger P is stored in correspondence with the fingertip ID as indicated in FIG. 56. By referring to this, the manipulation target finger P can be thus specified at every timing. Namely, by adding the finger trace process shown in FIGs. 54 and 55, in the process) of FIG. 25 repeatedly executed with predetermined intervals, the specification process of the manipulation target finger P in T3 is executed separately. In T3, it is only necessary that the manipulation target finger P is specified based on the manipulation target information stored in correspondence with the fingertip ID.

Moreover, application of this fingertip trace process is suitable for an example in which the manipulation target finger P is assigned based on the content of manipulation of the manipulation target finger assignment manipulation made by the user, like the fourth modification of the tenth example of FIG. 39, and the fifth modification of the tenth example of FIG. 40. In the fourth modification of the tenth example of FIG. 39, and the fifth modification of the tenth example of FIG. 40, the touch manipulation to the touch panel 12a is the manipulation target finger assignment manipulation. The manipulation target finger P is assigned based on the content of manipulation of the touch manipulation. That is, in the example where the manipulation target finger P is not changed unless the manipulation target finger assignment manipulation is made by the user, there is no need of executing computation which specifies the manipulation target finger P each time acquiring a moving image frame. Only by picking up the finger which should be assigned from the trace information on each finger, the manipulation target finger P can be specified easily.

In addition, the manipulation target finger P in the tenth example may be configured to be identical to the finger specified in the simple manipulation finger state already mention.

### 1.11 Other examples

The following describes another example.

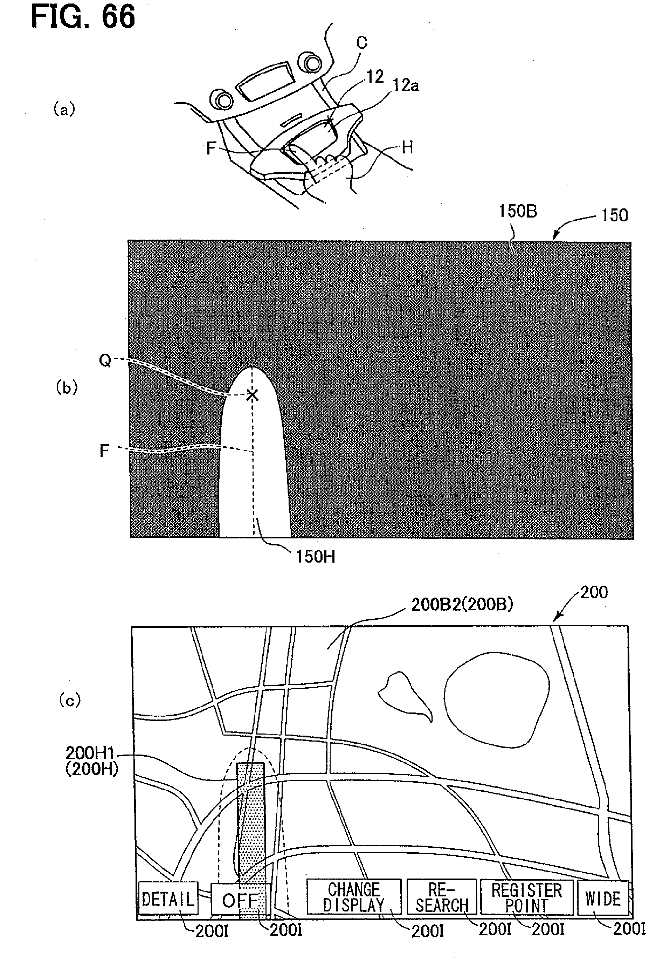

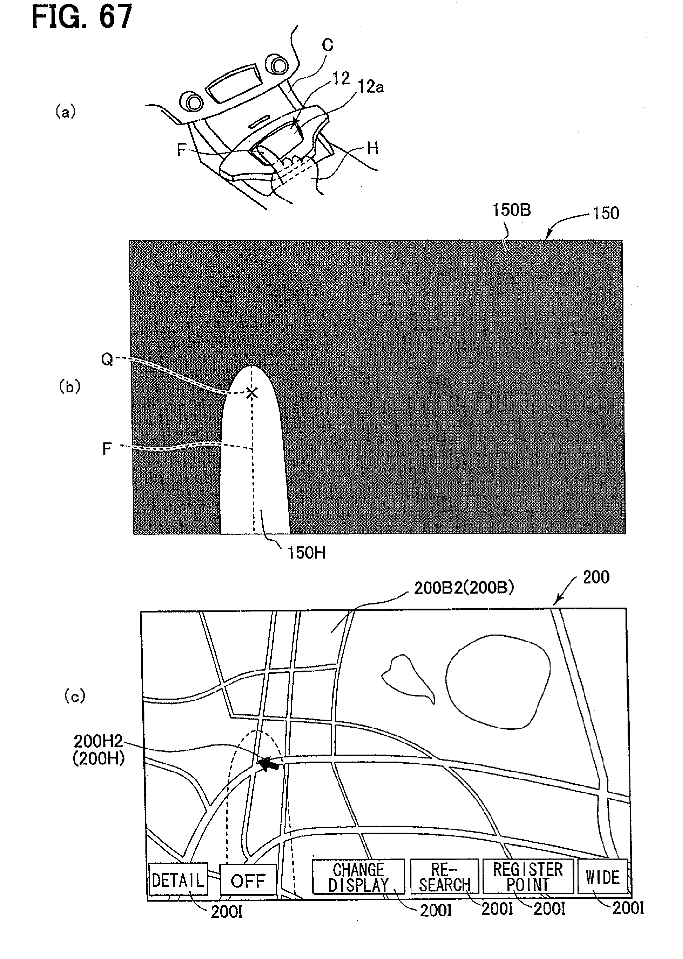

In addition, in the above-mentioned examples, the processed images (real finger image) 200H, where the outline shape of the captured finger is reflected as it is, is displayed as the position indication image 200H. Alternatively, an image entirely different from the finger shape may be displayed, such as a fingertip position image (pointer etc : refer to FIG. 67) 200H2 indicating the fingertip Q of the captured finger (that is, indication position of the captured finger). In case of executing a highlight display, only the fingertip region including the fingertip Q may be highlighted, (for example, a region up to the first joint of the finger, or a region within a predetermined radius centering on the fingertip position Q, etc.). In such a case, which position on the display window the fingertip Q of the captured finger opposes is specified. A predetermined position indication image such as a pointer is displayed on the specified window position. Moreover, a false finger image (a rod-like image: refer to FIG. 66) 200H1, which indicates the longitudinal direction F and the fingertip Q of the image-captured finger, is displayed as a position indication image 200H.

In addition, the manipulation target finger P in the tenth example may be configured to be identical to the finger specified as the simple manipulation finger state already mention.

Moreover, in the above examples, a touch panel is provided as a remote manipulation section of the present embodiment. Alternatively, a manipulation section may be provided to be a switch responding to a press manipulation such as a push switch and a seesaw switch. In addition, in the above examples, although the resistance film type touch panel is used as the manipulation panel 12a, other types of the touch panel may be used.

In addition, instead of the touch panel, the manipulation panel 12a may be differently provided which executes a position detection of a touch manipulation using image processing to the capture image captured by the image capture section or means such as a camera. In detail, the following configuration can be provided. That is, the manipulation panel 12a is provided as a panel, which has a translucent characteristic and face 12a1 to be used for touch manipulation area. A light source 12c is provided to radiate a light with a predetermined wavelength to an approaching object approaching the manipulation panel 12a from side of the touch manipulation area 12a via the manipulation panel 12a. In addition, a camera 12b which serves as a hand image capture section or means is provided to be an image capture section or means to capture an image of an approaching object from the side of the rear face 12a2 of the manipulation panel 12a1 by at least capturing a reflection light generated such that the light radiated by the light source 12c is reflected by the approaching object. Furthermore, the control circuit 18 specifies a light reflection region reflecting a light whose strength exceeds a predetermined threshold strength in the image captured by the camera 12b, thereby functioning as a light reflection region specification section or means. Furthermore, the control circuit 19 functions also as an input acceptance section or means to accept a touch input to the light reflection region based on this specified light reflection region (coordinate information)

In such a configuration, when the light reflection region exceeding a predetermined threshold strength is specified in the capture image of the camera 12b, it is determined that a touch manipulation input is made to the specified region and an input is accepted. That is, the capture image of the camera 12b is not only used for the display of the position indication image similar to the above-mentioned examples, but also used for specifying the light reflection region. In addition, in this case, when the area of the specified light reflection region is greater than a predetermined threshold area, the touch manipulation input to the light reflection region can be accepted. Although the manipulation information input section 12 is arranged in a flat portion of the so-called center console (for example, refer to FIG. 2), there is no need to be limited. For instance, the manipulation information input section 12 may be arranged in the following position. For example, the above manipulation information input section 12 may be arranged, within an instrument panel containing instruments, in a position close to the side of the steering wheel (right-hand side or left-hand side of the steering wheel). An auxiliary panel is arranged, around the steering wheel, in a position which does not prevent manipulation of the steering wheel; the above manipulation information input section 12 may be arranged in the auxiliary panel. Because the manipulation information input section 12 is thereby close to the side of the steering wheel, such a configuration can reduce the load at the time of separating a hand from the steering wheel to thereby manipulate.

It is not necessary to also arrange the display device 15 in a center portion of the above instrument panel. For example, it is also possible to be arranged, within the instrument panel, in the region where a field of view is not interrupted by the steering wheel. Alternatively, it may be also possible that a head-up display which projects an image on the windshield of the vehicle serves as the display device 15.

Of course, it is also possible to combine each element to thereby execute each example.

Each or any combination of processes, steps, or means explained in the above can be achieved as a software section (e.g., subroutine) and/or a hardware section (e.g., circuit or integrated circuit), including or not including a function of a related device; furthermore, the hardware section can be constructed inside of a microcomputer. Furthermore, the software section or any combinations of multiple software sections can be included in a software program, which can be contained in a computer-readable storage media or can be downloaded and installed in a computer via a communications network.

### 2. Second embodiment

### 2.1 First example

Hereinafter, the first example of a manipulation input apparatus according to the second embodiment of the present invention is explained with reference to the drawings. The explanation of the second embodiment is mainly made to focus on the difference from the first embodiment while omitting the same as the first embodiment (Configuration)A configuration of a vehicular navigation apparatus using a manipulation input apparatus of the second embodiment is mainly illustrated in FIG. 1, FIG.3, and FIG. 69 of the first embodiment. That is, FIG. 69 does not include a camera 20 shown in FIG. 2. Others are almost the same.

FIGs. 4 to 7 are drawings for explaining image captures of a hand (finger) H which opposes the manipulation panel 12a. Although the window display shown in FIG. 4(c) is not executed in the first embodiment, the window display shown in FIG. 4 (c) may be executed in the second embodiment.

### (Display process of position indication image)

The display process of a position indication image in the display device 15 is almost the same as that of the first embodiment. The difference exists in respect of a predetermined finger state or a predetermined finger shape. For instance, in S2, based on the acquired image of the hand, it is specified whether the state of the hand is a predetermined finger state or not. In this case, in the first embodiment, the predetermined finger state adopts a simple manipulation-use finger state included in the example 2 in FIG. 75. In contrast, in the second embodiment, the predetermined finger state adopts a manipulation intention expression-use finger state in the example 1 in FIG. 75. Therefore, in S2 and S3 of FIG. 9, S24 and S25 of FIG. 11, S34 and 35 of FIG. 12, S46 and S47 of FIG. 13, S112 of FIG. 14, S12 and S13 of FIG. 17, S64 and S65 of FIG. 21, each predetermined finger shape signifies the manipulation intention expression-use finger state. In addition, similarly, in FIG. 18 and FIG. 19, each predetermined finger shape signifies the manipulation intention expression-use finger shape.

Furthermore, the manipulation intention expression-use finger state is the simple manipulation-use finger state in the present example For example, the number of the fingers serving as the manipulation target, i.e., the number of the fingers extended approximately parallel with the touch manipulation area 12a, is a small number, i.e., not more than one or two. In addition, the manipulation using the five fingers in order to input early is a finger state where the difficulty is high; thus, the above mentioned simple manipulation-use finger state is different from such a finger state using the five fingers. In the present example, only a one finger manipulation state where the number of fingers which appear and are extended in the area direction of the touch manipulation area 12a (direction where the area spreads) is only one in the acquired image is specified as the manipulation intention expression-use finger state. In that context, the predetermined finger shape can be said to the same as that of the first embodiment.

### (Touch manipulation input process)

The touch manipulation input process to the manipulation panel (remote manipulation section) 12a of the manipulation information input section 12 is almost the same as that of the first embodiment. The difference exists in respect of the predetermined finger state similarly as explained for the above display process. In the first embodiment, the predetermined finger state adopts a simple manipulation-use finger state included in the example 2 in FIG. 75. In contrast, in the second embodiment, the predetermined finger state adopts a manipulation intention expression-use finger state in the example 1 in FIG. 75.

As explained in the first embodiment, with respect to the touch manipulation input process, the acceptance of a touch manipulation input to the manipulation panel 12a is permitted when the display permission mode is assigned (input permission mode); the acceptance of a touch manipulation input to the manipulation panel 12a is prohibited when the display prohibition mode is assigned (input prohibition mode). It is noted that in the position indication image display process in FIG. 9, when the manipulation intention expression-use finger state is specified, the display permission mode is assigned; when the manipulation intention expression-use finger state is not specified, the display prohibition mode is assigned. As a result, when the user's finger state is not in the manipulation intention expression-use state, the touch manipulation input to the manipulation panel 12a is not accepted. In the above example, the simple manipulation-use finger state which is a one-finger state is regarded as the manipulation intention expression-use finger state.

Incidentally, in a conventional manipulation input apparatus, in case that the hand performing a remote manipulation is actually displayed on the manipulation window when the hand is close to the touch panel 12a (remote manipulation section), fingers are only displayed as shown in FIG. 4. However, some users perform a touch manipulation input by the five fingers of one hand in order to input earlier. In this case, the several fingers aligning in a row are displayed in the manipulation display window; thereby, the correspondence relation between the displayed fingers and the finger that the manipulator actually wants to use for position indication is not clear anymore, posing the problem that a mis-manipulation may easily occur. In contrast, according to the configuration of the above example, when the finger shape is not the simple manipulation-use finger state serving as the manipulation intention expression-use finger state, the touch manipulation input to the manipulation panel 12a is not accepted. This can overcome the above problem of the mis-manipulation.

The example of the present embodiment is explained in the above; however, such an example is only one example. The present embodiment need not be limited to the above example, and can be varied in various manners based on the knowledge of a person skilled in the art unless deviating from the scope of the claims. The above example is regarded as the first example and another example different from it is explained below. The identical configuration is assigned with an identical sign, thereby eliminating the explanation.

### 2.2 Other examples

Other examples in the second embodiment are equivalent to the second example and subsequent examples in the first embodiment. The difference exists in respect of the predetermined finger state similarly with that in the explanation of the display process. In the first embodiment, the predetermined finger state adopts a simple manipulation-use finger state included in the example 2 in FIG. 75. In contrast, in the second embodiment, the predetermined finger state adopts a manipulation intention expression-use finger state in the example 1 in FIG. 75. Therefore, by replacing the simple manipulation finger state with the manipulation intention expression-use finger state, the explanation of the other examples becomes possible. In addition, in the second embodiment, a basic configuration does not include a camera 20 as shown in FIG. 69. If including a camera 20 like the first embodiment, the configuration becomes equivalent.

In addition, from the aspect of preventing the mis-manipulation, it is desirable that the manipulation intention expression-use finger state is defined as a hand state (finger state) which the user does not usually manipulate From the aspect of the processing, it is desirable that it is defined as a hand state (finger state) which is easier to identify.

### 3. Third embodiment

### 3.1 First example

Hereinafter, an example of a manipulation input apparatus according to the third embodiment of the present invention is explained with reference to the drawings. The explanation of the third embodiment is mainly made to focus on the difference from the first embodiment while omitting the same as the first embodiment. In addition, drawings are almost the same; thus, the explanation is made with reference to the drawings explained in the first embodiment.

### (Configuration)

A configuration of a vehicular navigation apparatus using a manipulation input apparatus of the third embodiment is mainly illustrated in FIG. 1, FIG.3, and FIG. 69 of the first embodiment. That is, FIG. 69 does not include a camera 20 shown in FIG. 2. Others are almost the same.

Image-capturing of a hand (finger) which opposes the manipulation panel 12a is different from that in the first embodiment; in the third embodiment, the explanation is made using FIG. 27, FIG. 7, and FIG. 6. The difference from the first embodiment is as follows. When several fingers oppose the manipulation panel 12a, those fingers are displayed in combination to or in superimposition on the background image 200B such that a display region of a position indication image 200H corresponding to a specific finger is emphasized, in display, more than a display region of a position indication image 200H corresponding to a residual finger, as illustrated in FIG. 27 (c).

### (Display process of position indication image).

Next, a display process of a position indication image in the display device 15 is explained using FIG. 25. It is noted that the present process is executed in a manner that the CPU executes a program stored in the storage section 18d in the control circuit 18.

In T1, the control circuit 18 specifies a finger of a hand which opposes in front of the touch manipulation area 12a1 (herein, the side opposite the side of the camera 12b) with respect to the touch manipulation area (remote manipulation area) 12a1 (a finger specification step). Herein, the control circuit 18 determines whether to acquire an image of a manipulator's hand finger based on a capture image captured by the camera 12b. The camera 12b image-captures an approaching object H (for example, a hand of a manipulator such as a driver), which approaches the touch manipulation area (front face) 12a1, via the manipulation panel 12a from the side of the rear face 12a2 of the manipulation panel 12a (an image capture step). The capture image is always inputted into the image processing section 18a of the control circuit 18. When an approaching object H enters a position opposing the touch manipulation area 12a1, the capture image 150 which naturally contains the approaching object H is inputted into the image processing section 18a. The inputted capture image 150 is analyzed by a well-known image analysis technique in the image processing section 18a. Based on the difference in colors etc , the approaching object image 150H is extracted. It is then determined whether a penson's hand finger image 150F is contained in the image 150H based on the shape of the extracted approaching object image 150H. An approximately linear cylindrical image pattern having an axis line more than a predetermined length is recognized from the whole shape of the extracted hand image; when existing, the cylindrical image pattern is recognized as the finger image 150F. The determination result is outputted to the control circuit 18. When it is determined that the hand finger image is recognized, the processing proceeds to T2. When it is not determined, the present process is ended.

In T2, the control circuit 18 detects a fingertip from the acquired finger image 150F. The detection of the fingertip is executed in a manner to specify a fingertip Q from the specified finger image 150F (a fingertip specification step). The specification of the fingertip Q in the present example is executed in a manner illustrated in FIG. 29. That is, as illustrated in FIG. 29 (a), the finger image 150F is specified, first. The image processing section 18a overlaps mutually the hand image 150H containing the specified finger image 150F and the moved hand image 160H which is generated by moving the hand image 150H to the longitudinal direction of the finger image 150F by only a predetermined quantity. A non-overlap area 170 is specified where both the finger images 150H, 160H do not overlap mutually. The center of gravity of the non-overlap area 170 is computed; the point of the computed center of gravity is thus specified as the fingertip (fingertip position) Q. The specification method of the fingertip Q may be different from the above. For example, the outline of the fingertip appearing in a curve is extracted and smoothed; then, the center of curvature is specified as the fingertip Q. In addition, the specification method of the fingertip Q need not be specified as one point of the finger as mentioned above; a region up to the first joint of the finger may be specified as the fingertip (fingertip region) Q.

It is noted that although T1 and T2 are steps of the finger specification processing and the fingertip specification processing, respectively, both may be executed simultaneously. That is, instead of specifying the fingertip from the finger image, the following may be used. The fingertip is directly specified from the capture image captured by the camera 12b; the finger is specified by specifying the fingertip, thereby, simplifying the processing.

In subsequent T3, the control circuit 18 assigns a manipulation target finger P (finger for position indication) which is used or estimated to be used for manipulation to the remote manipulation section (a manipulation target finger assignment step). In detail, position relation information reflecting position relation of respective specified fingertips in the direction of the touch manipulation area is acquired as assignment finger information (an assignment finger information acquisition step). The direction of the touch manipulation area signifies the direction where the touch manipulation area 12a1 spreads, i.e., the direction orthogonal to the normal of the touch manipulation area 12a1. Thereby, based on the acquired position rolation information, the manipulation target finger P is assigned, among the fingers specified in T1, preferentially to a finger having the position relation information most suitable for the predetermined selection condition about the position relation.

A group of several fingers can be assigned with the manipulation target finger P. In contrast, from the aspect of executing position indication such that the manipulation to the contact type manipulation section 12a is easily recognized, it is desirable to assign to a comparatively small number of fingers such as one finger or two fingers. In the present example, one finger is assigned. Furthermore, a kind of finger used as an assignment target is an index finger suitable for position indication (see (c) of FIG. 27), a middle finger (refer to FIG. 47), or two fingers of an index finger and a middle finger (refer to FIG. 48). In the present example, an index finger is supposed to be assigned.

The processing of T3 of the present example is executed as the process illustrated in the flowchart of FIG. 26. That is, in T11, the fingertip Q specified as shown in FIG. 29 (c) is specified on a plane 180 of the virtual two-dimensional coordinate system. With one axis X defined on the plane 180 (see FIG. 30), another one-dimensional coordinate system is defined in the above two-dimensional coordinate system. Herein, the specified fingertip Q is projected to the touch manipulation area 12a1 (to the direction opposing the remote manipulation section). The projection plane is defined as the above plane 180. One axis X is designated as a predetermined position on the projection plane to thereby define the one-dimensional coordinate system. In T12, the position coordinate (coordinate value) XQ in the one-dimensional coordinate system of the fingertip Q on the plane 180 is specified; the axis coordinate information reflecting the position coordinate XQ is acquired as the position relation information. Thereby, in T13, based on the acquired axis coordinate information, the manipulation target finger P is assigned, among the fingers specified in T1 of FIG. 25, preferentially to a finger most suitable for the predetermined selection condition about the axis coordinate information.

Further, the present example supposes that the manipulation is made by the right hand of a passenger at the passenger seat. Furthermore, the axis X is designated so that the manipulator's index finger is assigned with the manipulation target finger P. Accordingly, in T11, the axis X is designated as the position illustrated in FIG. 30. In T12, the fingertip Q is projected towards the designated axis X, and the coordinate values X1 to X3 of respective projected positions are computed. In T13, among the acquired coordinate values X1 to X3, the fingertip Q is specified which has the greatest coordinate value. It is estimated that a finger having the specified fingertip Q' is the index finger; thereby, the finger is assigned with the manipulation target finger P.

In addition, in the present example, the axis X is defined, as illustrated in FIG. 30, as advancing from a right lower of the capture image in which the right index finger is not located often to a left upper in which the right index finger is often located. For example, another designation shown in FIG. 31 or FIG. 32 may be adopted. In the case of FIG. 31, it is suitable for estimation that the finger having the greatest coordinate value is the middle finger. Further, if it is estimated or determined which side of the right or the left a manipulating hand is, the finger which adjoins the middle finger can be estimated as the index finger, according to the estimated or determined side of the manipulating hand. In FIG. 32, if it is estimated or determined which side of the right or the left a manipulating hand is, the finger in the very end of either right or left is suitably estimated as an index finger. The finger which adjoins the index finger can be estimated as the middle finger.

In the present example, the capture image captured by the camera 12b is a projection plane 180 to which the fingertip Q is projected toward the touch manipulation area 12a1. Therefore, each of the manipulation panel image region and the above projection plane 180 is recognize as a two-dimensional plane which has the same coordinate system. The manipulation panel image region is a region reflecting the touch manipulation area 12a, i.e., the whole region of the capture image 150) in which the touch manipulation area 12a is located in the capture image captured by the camera 12b. The coordinate position of the fingertip Q on the manipulation panel image region can be used directly as a coordinate position of the projected fingertip Q in the projection plane 180. In T3, the manipulation target finger P is assigned by computing on the coordinate system in the virtually defined projection plane 180, therefore eliminating the need of image processing. That is, the image data is not used for assignment process of the manipulation target finger P; thereby, the computation cost (the arithmetic quantity and memory quantity) can be reduced.

Returning to FIG. 25, in T4, the control circuit 18 displays the image 200H for position indication on the position on the display window corresponding to the specified fingertip Q in such a manner to be combined or superimposed to an image of a background on the display window, as illustrated in FIG. 33 (c). It is noted that such a display is made in a manner of a highlight display, in which within the position indication images 200H, the display region 200P of the position indication image 200H corresponding to the assigned manipulation target finger P is relatively highlighted more than the display region 200R of the position indication image 200H corresponding to a finger R other than the manipulation target finger P. Thereby, the visibility of the manipulation target finger P is improved. The finger, which should be manipulated, can be easily recognized by the user, and manipulability is also improved.

In the present example, the control circuit 18 specifies the position relation between the display window of the display device 15 and the image-captured hand finger, first. That is, the control circuit 18 specifies which position on the display window the image-captured hand finger opposes. In the present example, the manipulation panel image region where the touch manipulation area 12a is specified in the capture image 150 captured by the camera 12b. Herein, the manipulation panel image region is a region reflecting the touch manipulation area 12a, i.e., the whole region of the capture image 150. the two-dimensional manipulation coordinate system is designated on the manipulation panel image region, and the position of the image-captured finger is specified on the manipulation coordinate system. The position on the display window of the display device 15 corresponding to the position of the finger specified on the manipulation coordinate system is specified in the two-dimensional display coordinate system defined on the display window.

Then, at the position specified on the display window of the display device 15, the position indication image 200H is displayed in superimposition on the position coordinate to which the main image 200B corresponds as illustrated in FIG. 33(a). The highlight display of the above-mentioned position indication image 200H (200P, 200R) is executed in a manner to vary the highlight lever (highlight degree) step by step in a predetermined time t1 as illustrated in FIG. 61. That is, in the process of the change in the highlight display, an intermediate state in the change takes place as illustrated in FIG. 33 (b). Through undergoing the intermediate state in the highlight display, the change in the highlight display is completed as shown in FIG. 33 (c). In case of causing a finger, which is un-specified, to be less-visible in the highlight display, if such a non-specified finger is caused to be less-visible suddenly, it may be difficult to recognize which finger is emphasized. Accordingly, all the fingers are similarly displayed first in the highlight display, as shown in FIG. 33 (a). The highlight level is then changed step by step. It is thus easy for the user to associate the own fingers with fingers displayed on the display window.

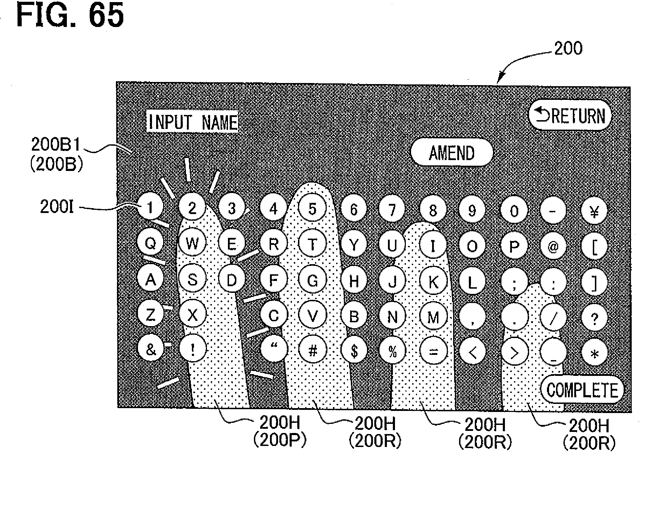

In addition, the highlight display is made to the whole, the outline, or an inside of the outline of the finger display region 200P or 200R of the position indication image 200H, with respect to a color change (refer to FIG. 63), a contrast density change (refer to FIG. 63: alternatively, fingers other than the manipulation target finger may be erased), a shape change (FIG. 64: manipulation target finger P made thick as an example), a switchover to another image, a transmittance degree (refer to FIG. 27), a flashing (refer to FIG. 65), or any combination of the foregoing. In the present example, the highlight display is made to the inside of the outline of the processed image of the position indication image 200H with respect to the transmittance degree. Further, the highlight state of the display region 200P of the position indication image 200H corresponding to the manipulation target finger P is held constant, whereas the highlight level of the display region 200R of the position indication image 200H corresponding to the residual finger R is reduced. The position indication image region 200R corresponding to the residual finger R may be erased. In consideration of the manipulability, it is desirable that the position indication image region 200R is held relatively easily recognizable although the highlight level is lower than that of the case of erasing entirely.

In addition, the highlight display in T4, may be started immediately after the manipulation target finger P is assigned in T3 as illustrated in FIG. 61 or may be started after a predetermined time elapses since the manipulation target finger P is assigned in T3 as illustrated in FIG. 62. In particular, in the configuration where the highlight display is not applied step by step, it is desirable to select the latter.

T4 ends; then, the present process is ended. It is noted that even after the end of the present process, the present process is repeatedly executed with predetermined intervals. In conjunction with movement of the hand which opposes the manipulation panel 12a, the display position of the position indication image 200H displayed on the display window of the display device 15 is moved accordingly. When the hand moves in the middle of the highlight change, the display position of the position indication image 200H (200P and 200R) moves while continuing the highlight change. When the hand moves after the highlight change is completed, the display position of the position indication image 200H (200P and 200R) moves with the highlight state held.

It is noted that the display processing of the position indication image includes: a finger specification step, a fingertip specification step, a manipulation target finger assignment step, a position indication image highlight display step, and an assignment finger information acquisition step. The control circuit 18 executes the foregoing process using the CPU, thereby functioning as a section or means of executing each step (a finger specification section or means, a fingertip specification section or means, a manipulation target finger assignment section or means, a position indication image highlight display section or means, and an assignment finger information acquisition section or means).

### (Touch manipulation input process).

Finally, a touch manipulation input process to the manipulation panel 12a of the manipulation information input section 12 is explained using FIG. 74. It is noted that the present process is also executed in a manner that the CPU executes a program stored in the storage section 18d in the control circuit 18.

In T101, the control circuit 18 determines the presence or absence of the touch manipulation to the manipulation panel 12a The manipulation panel 12a is configured as a touch panel. When a touch manipulation occurs, a manipulation signal is inputted into the control circuit 18. The control circuit 18 determines the presence or absence based on the input. When the touch manipulation to the manipulation panel 12a occurs, the processing proceeds to T102. When no touch manipulation occurs, the present process is ended.

In subsequent T102, the touch manipulation position to the manipulation panel 12a, i.e., the touch manipulation position on the touch manipulation area 12a1, is specified. The manipulation panel 12a is configured as a touch panel; thus, when a touch manipulation occurs, a manipulation signal is inputted into the control circuit 18. The manipulation signal reflects the touch manipulation position as coordinate information on the manipulation coordinate system defined on the touch manipulation area 12a1. The control circuit 18 specifies the touch manipulation position based on this manipulation signal.

In subsequent T103, the control circuit 18 executes a control corresponding to the touch manipulation position on the manipulation panel 12a. In detail, each position on the touch manipulation area 12a1 of the manipulation panel 12a corresponds to a position on the display window of the display device 15. The execution is made with respect to the control content determined at the position on the display window of the display device 15 corresponding to the position on the touch manipulation area 12a1 specified in T103. In detail, the control circuit 18 outputs the control signal for executing the control content. Suppose that the position on the touch manipulation area 12a1 specified in T103 corresponds to the switch image 2001 displayed on the display window of the display device 15. Herein, the control circuit 18 outputs a control signal for executing a control content assigned to the switch image.

T103 ends; then, the present process is ended. It is noted that even after the end of the present process, the present process is repeatedly executed with predetermined intervals. The control circuit 18 executes the control content according to the position at which the touch manipulation is made. Otherwise, another control circuit (for example, ECU 100) executes the control content accordingly.

It is noted that the control circuit 18 executes the touch manipulation input process using the CPU, thereby functioning as an input acceptance section or means, and a manipulation input control section or means.

The example of the present third embodiment is explained in the above; however, such an example is only one example. The present third embodiment need not be limited to the above example, and can be varied in various manners based on the knowledge of a person skilled in the art unless deviating from the scope of the claims.

For example, in the above example, the configuration realizes the display method of the present third embodiment by the vehicular manipulation input apparatus. The manipulation input apparatus need not be restricted to a vehicle use. For example, it may be a manipulation input apparatus for a common electrical household appliance. Furthermore, the manipulation input apparatus is not for executing an operation of a device; but may be a common display device with a window display functioning as a main function.

The above example is regarded as the first example and another example different from it is explained below. The identical configuration is assigned with an identical sign, thereby eliminating the explanation.

### 3.1.1 Modifications of first example

The first example can be modified in various manners. Each modification is equivalent to from the second modification to the twelfth modification of the tenth example in the first embodiment; therefore, explanation is omitted.

### 32 Second example

The following explains the second example of the present third embodiment.

In the above example, the remote manipulation section of the above manipulation input apparatus is arranged at the reach of the user's hand, thus posing a problem that the manipulation section is touched without user's intention, thereby causing an incorrect manipulation input. In particular, if the manipulation section is a touch manipulation type, an input may be executed by unintentionally touching it. In order to solve such a problem, the following configuration may be provided. In a case when the predetermined finger state is specified as the manipulator's finger state, the highlight display of the position indication image 200H in the above first example is executed only during a predetermined display permission period. In contrast, in other cases, the position indication image 200H is not displayed even if the hand is in the state of opposing the touch manipulation area 12a1, as shown in FIG. 5. In detail, the position indication image display process as illustrated in FIG. 9 is executed. It is noted that the present process is also executed in a manner that the CPU executes a program stored in the storage section 18d in the control circuit 18.

In S1, the control circuit 18 determines whether to acquire an image of a manipulator's hand based on a capture image captured by the camera 12b. The camera 12b image-captures an approaching object H (for example, a hand of a manipulator such as a driver), which approaches the touch manipulation area (front face) 12a1, via the manipulation panel 12a from the side of the rear face 12a2 of the manipulation panel 12a (an image capture step). The capture image is always inputted into the image processing section 18a of the control circuit 18. When an approaching object H enters a position opposing the touch manipulation area 12a1, the capture image 150 which naturally contains the approaching object H is inputted into the image processing section 18a. The inputted capture image 150 is analyzed by a well-known image analysis technique in the image processing section 18a. Based on the difference in colors etc., the approaching object image 150H is extracted. And it is determined whether the image 150H is an image of a person's hand from the shape of the extracted approaching object image 150H. The determination result is outputted to the control circuit 18. When it is determined that the hand image is recognized, the processing proceeds to S2. When it is not determined, the present process is ended.

It is noted that in the present example, the light source 12c is arranged and the camera 12b captures an image by capturing a reflection light of the light source 12c. Therefore, the reflection light intensity is reflected on the gradation of the color which appears in the capture image 150. In the place which captures the reflection light with a high intensity, the gradation level appears high. That is, the capture image 150 captured by the camera 12b of the present example is a capture image of multi gradation levels (a black-and-white capture image in the present example). The image processing section 18a applies binarization to the gradation levels of each pixel using a predetermined gradation threshold value, a region which exceeds the gradation threshold value is extracted as an approaching object image 150H, as shown in (b) of FIG. 27, FIG. 7, FIG. 6, and FIG. 5 In addition, the image processing section 18a specifies an image of a person's hand from the extracted approaching object image 150H. For that purpose, the shape of the approaching object image 150H is compared with hand shape patterns stored in the storage section 18d of the control circuit 18. The approaching object image 150H according with the patterns is recognized as an image of a hand (a hand image recognition section or means).

In S2, based on the acquired image of the hand, it is specified whether the state of the hand is a predetermined finger state or not (a predetermined finger state specification section or means). Herein, it is specified whether it is the predetermined manipulation intention expression-use finger state (a manipulation intention expression-use finger state specification section or means). In the present example, the manipulation intention expression-use finger state is the simple manipulation-use finger state. For example, the number of the fingers serving as the manipulation target, i.e., the number of the fingers extended approximately parallel with the touch manipulation area 12a, is a small number not more than one or two. In addition, the manipulation using the five fingers in order to input early is a finger state where the difficulty is high. The above mentioned simple manipulation-use finger state is different from such a finger state using the five fingers. In the present example, the manipulation intention expression-use finger state is specified as a single finger manipulation state where the number of fingers which appear to be extended to the area direction of the touch manipulation area 12a (direction where the area spreads) is only one in the acquired image of the hand. In detail, in S1, the image processing section 18a recognizes an approximately linear cylindrical image pattern having an axis line more than a predetermined length from the whole shape of the extracted hand image. When such a cylindrical image pattern exists, it is recognized and specified as a finger image 150F (a finger specification section or means). The specified result is outputted to the control circuit 18. The control circuit 18 specifies the number of finger images 150F (a finger number specification section or means: hand shape recognition section or means). In case that the number is one, the above state is specified as the manipulation intention expression-use finger state (a manipulation intention expression-use finger shape).

In next S3, it is determined whether the present finger state is the predetermined finger state (herein, the manipulation intention expression-use finger state) based on the output result. When it is determines that it is the predetermined finger state, the processing proceeds to S4. In S4, the display mode is assigned with the display permission mode in which the display of the position indication image is permitted, advancing the processing to S5. It is noted that the assigned display mode is stored in a predetermined storage region (display mode storage section) provided in the storage section 18d of the control circuit 18. In S4, the display permission mode is stored in the storage region.

In S5, the control circuit 18 specifies the position relation between the display window of the display device 15 and the image-captured hand. That is, the control circuit 18 specifies which position on the display window the image H of the image-captured hand opposes. In the present example, the manipulation panel image region in which the touch manipulation area 12a is located is specified on the capture image captured by the camera 12b. At the same time, the two-dimensional manipulation coordinate system of the touch manipulation area 12a is designated on the manipulation panel image region, and the position of the captured finger image H is specified on the manipulation coordinate system. In the display coordinate system defined on the display window of the display device 15, the position corresponding to the position of the hand image H specified on the manipulation coordinate system is specified. In the present example, the capture images (binarized images) 150 illustrated in (b) of FIG. 27, FIG. 7, FIG. 6, FIG. 5 serve as a manipulation panel image region which captures the whole touch manipulation area 12a1.

Furthermore, in S6, as illustrated in (c) of FIG. 6 and FIG. 7, the position indication image 200H is displayed on the position corresponding to the hand image H specified on the above manipulation panel image region of the display window of the display device 15 (a position indication image display section or means). In the present example, the outer shape of the hand image 150H is displayed clearly The processed image 200H in which the inside of the outline is changed into the semi transmission state is generated and superimposed on the coordinate position corresponding to the displayed main image 200B on the display window of the display device 15. Furthermore, in S6, the highlight display process of the position indication image in the first example is executed (FIG. 25). The position indication image 200H of the finger specified as the manipulation target finger P is relatively highlighted more in the display window in comparison with the residual finger.

Herein, it is premised that the manipulation target finger P that is highlighted is determined to be the index finger. Therefore, if there is a one-finger state, but the corresponding extended finger is not the index finger, the position indication image corresponding to such a finger is displayed in the state of not-highlight. In contrast, when the finger in the one-finger state is the index finger, this index finger is displayed in the state of highlight, but other fingers in the state of not-highlight are not displayed, as illustrated in (c) of FIG. 7 and FIG. 6.

In contrast, when it is determined in S3 that the present finger state is not the predetermined finger state (herein, the manipulation intention expression-use finger state), the processing proceeds to S7. In S7, the display mode is assigned with a display prohibition mode in which the display of the position indication image is prohibited. The display of the position indication image 200H executed in S5 and S6 is thereby not executed, and as illustrated in FIG. 5 (c), for example, the position indication image 200H is kept not displayed on the display window of the display device 15. It is noted that the display prohibition mode is stored in a predetermined storage region (display mode storage section) provided in the storage section 18d of the control circuit 18.

S6 and S7 end; then, the present process is ended. It is noted that even after the end of the present process, the present process is repeatedly executed with predetermined intervals. As the hand in the predetermined finger state, which opposes the manipulation panel 12a, moves, the display position of the position indication image (processed image) 200H displayed on the display window of the display device 15 is also moved.

In the display process of the position indication image, as illustrated in FIG. 18, a display permission period is defined as a period up to the time when the predetermined finger state becomes not specified. That is, in the display process, when the predetermined finger state is specified, the display permission mode is assigned; when the predetermined finger state is not specified, the display prohibition mode is assigned. It is noted that the control circuit 18 functions as a display mode assignment section or means by executing the display process of the position indication image.

In a conventional manipulation input apparatus, in cases that the hand performing a remote manipulation is actually displayed on the manipulation window when the hand is close to the touch panel 12a (remote manipulation section), the state in which fingers are only displayed takes place. However, some users perform a touch manipulation input by the five fingers of one hand in order to input earlier. Herein, the several fingers aligning in a row are displayed in the manipulation display window; thereby, the correspondence relation between the displayed fingers and the finger that the manipulator actually wants to use for position indication is not clear anymore, posing the problem that a mis-manipulation may easily occur. Meanwhile, in the above example, when it is not the predetermined finger state, the configuration is provided as being not accepting the touch manipulation input to the manipulation panel 12a. Such a configuration can overcome the above problem.

### 3.3 Third example

The following describes the third example of the present third embodiment.

In the second example, the touch manipulation input process to the manipulation panel (remote manipulation section) 12a of the manipulation information input device 12 can be provided as the process in FIG. 10, instead of the process in FIG. 74. It is noted that the present process is also executed in a manner that the CPU executes a program stored in the storage section 18d in the control circuit 18.

The present touch manipulation input process in FIG. 10 includes a manipulation input acceptance control, in which the acceptance of a touch manipulation input to the manipulation panel 12a is permitted when the display permission mode is assigned (the control circuit 18 assigns an input permission mode); the acceptance of a touch manipulation input to the manipulation panel 12a is prohibited when the display prohibition mode is assigned (the control circuit 18 assigns an input prohibition mode). It is noted that the control circuit 18 functions as a manipulation input control section or means by executing the touch manipulation input process.

In S101, the control circuit 18 determines the presence or absence of the touch manipulation to the manipulation panel 12a. The manipulation panel 12a is configured as a touch panel; thus, when a touch manipulation occurs, a manipulation signal is inputted into the control circuit 18. The control circuit 18 determines the presence or absence based on the input. When the touch manipulation to the manipulation panel 12a occurs, the processing proceeds to S102. When no touch manipulation occurs, the present process is ended.

In S102, the control circuit 18 determines whether the present display mode is a display permission mode. The present display mode is stored in the predetermined storage region (display mode storage section) provided in the storage section 18d of the control circuit 18; thus, it is determined based on the stored information on display mode. When it is determined that the present display mode is the display permission mode, the processing proceeds to S103. When it is determined that the present display mode is not the display permission mode, i.e., when it is determined that it is the display prohibition mode, the present process is ended.

In S103, the touch manipulation position to the manipulation panel 12a, i.e., the touch manipulation position on the touch manipulation area 12a1, is specified. The manipulation panel 12a is configured as a touch panel; thus, when a touch manipulation occurs, a manipulation signal is inputted into the control circuit 18. The manipulation signal reflects the touch manipulation position as coordinate information on the manipulation coordinate system defined on the touch manipulation area 12a1. The control circuit 18 specifies the touch manipulation position based on this manipulation signal.

In subsequent S104, the control circuit 18 executes a control corresponding to the touch manipulation position on the manipulation panel 12a. In detail, each position on the touch manipulation area 12a1 of the manipulation panel 12a corresponds to a position on the display window of the display device 15 The control content determined at the position on the display window of the display device 15 corresponding to the position on the touch manipulation area 12a1 specified in S103 is executed. In detail, the control circuit 18 outputs the control signal for executing the control content Suppose that the position on the touch manipulation area 12a1 specified in S103 corresponds to the switch image 200I displayed on the display window of the display device 15. Herein, the control circuit 18 outputs a control signal for executing a control content assigned to the switch image.

S104 ends; then, the present process is ended. It is noted that even after the end of the present process, the present process is repeatedly executed with predetermined intervals. The control circuit 18 executes the control content according to the position at which the touch manipulation is made. Otherwise, another control circuit (for example, ECU 100) executes the control content accordingly.

In the present touch manipulation input process, the acceptance of a touch manipulation input to the manipulation panel 12a is permitted when the display permission mode is assigned (input permission mode); the acceptance of a touch manipulation input to the manipulation panel 12a is prohibited when the display prohibition mode is assigned (input prohibition mode). Herein, in the position indication image display process in FIG. 9, when the predetermined finger state is specified, the display permission mode is assigned; when the predetermined finger state is not specified, the display prohibition mode is assigned. As a result, when the user's finger state is not in the predetermined finger state, the touch manipulation input to the manipulation panel 12a is not accepted. Herein, the simple manipulation-use finger state of the one-finger state is the predetermined finger state (herein, the manipulation intention expression-use finger state).

### 3.4 Fourth example

The following describes the fourth example of the present third embodiment.

In the above second and third examples, the display permission period is defined as a period up to the time when the predetermined finger state becomes an un-specified state as illustrated in FIG. 18. In contrast, another configuration may be provided as follows. The display permission period may be defined as a predetermined time as illustrated in FIG. 19 That is, the display permission period is defined as a period from when the display permission mode is assigned to when a predetermined time (prohibition mode recovery time) elapses. When the prohibition mode recovery time elapses, the display mode is returned to the display prohibition mode. Under such a configuration, the period, which can display the position indication image, (display permission mode) is started by a trigger that the user indicates a specific finger state. Then the user can execute the position indication input (touch manipulation) to the touch manipulation area 12a1 while seeing the position indication image. In contrast, when the user does not indicate any specific finger state, the position indication image is not displayed. Thus, the touch manipulation for executing the position indication input cannot be executed smoothly. That is, only when the user clearly expresses an intention to execute the position indication input, the display of the position indication image is permitted. Therefore, the expression of the intention is confirmed by specifying the user's finger state. Herein, when the display permission mode is assigned, the image of a finger state different from the predetermined finger state can be also displayed. In detail, the position indication display process indicated in FIG. 9 can be achieved as the process illustrated in FIG. 17.

In S10, the control circuit 18 determines whether to acquire an image of a manipulator's hand based on a capture image captured by the camera 12b. This processing is similar to the processing in S1 of FIG. 9.

In S11, the control circuit 18 determines whether the present display mode is the display permission mode. The present display mode is stored in the predetermined storage region (display mode storage section) provided in the storage section 18d of the control circuit 18; thus, it is determined based on the stored information on display mode. When it is determined that the present display mode is the display prohibition mode, the processing proceeds to S12. When it is determined that the present display mode is not the display prohibition mode, i.e., when it is determined that it is the display permission mode, the processing proceeds to S19.

In S12, based on the acquired image of the hand, it is specified whether the state of the hand is a predetermined finger state (herein, manipulation intention expresssion-use finger state), (a predetermined finger state specification section or means: a manipulation intention expression-use finger state specification section or means). This processing is similar to the processing in S2 of FIG. 9. When it is determined in S13 that the present finger state is the predetermined finger state, the processing proceeds to S14.

In S14, the display mode is assigned with the display permission mode in which the display of the position indication image is permitted, advancing the processing to S15. It is noted that the display permission mode is stored in a predetermined storage region (display mode storage section) provided in the storage section 18d of the control circuit 18.

In subsequent S15, the timer 18b provided in the control circuit 18 is started, the time counting is started, and the processing proceeds to S16. Time is stored in a manner to be counted up in the counter 18c. The counted value of the counter 18c is reset before the timer is started.

In S16, the control circuit 18 specifies the position relation between the display window of the display device 15 and the image-captured hand. This processing in S16 is similar to the processing in S5 of FIG. 9. In subsequent S17, the position indication image 200H is displayed in superimposition on the main image 200B currently displayed in the display window of the display device 15 (a position indication image highlight display section or means), as shown in (c) of FIG. 27, FIG. 7 and FIG. 6. This processing in S17 is a highlight display process of the position indication image illustrated in FIG. 25 like S6 of FIG. 9. Herein, in the second embodiment, the position indication image 200H shown in FIG. 27 (c) is also displayed in S16 and S17, That is, in the fourth example, as long as the display permission mode is assigned, the superimposition display (or combination display) of the hand image (finger image) is permitted As long as an image at least illustrates an indication position of the finger based on the hand image, the display of the position indication image 200H having any shape can be allowed. Therefore, when the display permission mode is assigned, there may be allowed a superimposition display of the finger configuration having several fingers illustrated in FIG. 27 (c). However, the manipulation target finger P is emphasized in display compared with the residual fingers.

In contrast, when it is determined in S13 that the present finger state is not the predetermined finger state (herein, the manipulation intention expression-use finger state), the processing proceeds to S18 The display prohibition mode is assigned in S18 and stored in a predetermined storage region (display mode storage section) provided in the storage section 18d of the control circuit 18.

The present process is ended by the end of S17 and S18. The present process is repeatedly executed with predetermined intervals even after the end of the present process. As long as the hand image is acquired and the display permission mode is continued, the display permission state of the position indication image in S16 and S17 is continued. That is, during the continued period, even if the finger state is not the predetermined finger state, the position indication image is displayed based on the finger state at that time In contrast, when it is determined in S19 that the predetermined time elapses by the timer 18b which started in S15, the display prohibition mode is compulsorily assigned in S20, and the present process is ended. The processing in S20 is similar to the processing in S18.

In the present example, the user expresses the intention of manipulation using the hand shape (manipulation intention expression-use finger state); when the intention is expressed, the display permission mode is assigned only during a fixed time. The manipulation intention expression-use finger state is not limited to only the simple manipulation-use finger state such as the one-finger state (for example, refer to FIG. 7 and FIG. 6). It can be variously assigned to various states such as the two-fingers extended state (refer to FIG. 70) indicating the state in which two fingers are extended, the three-fingers extended state (refer to FIG. 71) indicating the state in which three fingers are extended, and the four-fingers extended state (refer to FIG. 72) indicating the state in which four fingers are extended. In addition, even in the one-finger state assigned, only when the target finger is the index (see FIG. 7 and FIG. 6), the one-finger state may be assigned with the manipulation intention expression-use finger state; otherwise, only when the target finger is the middle finger (see FIG. 68), the one-finger state may be assigned with the manipulation intention expression-use finger state. Further, in the two-fingers state, only when the target fingers are the index finger and middle finger (see FIG. 70), the two-fingers state may be assigned with the manipulation intention expression-use finger state. In addition, among the above definitions regarding the fingers in the manipulation intention expression-use finger state, one definition may be adopted or a combination of several definitions may be adopted. From the aspect of preventing mis-manipulation, it is desirable that a hand state which the user does hot usually exhibit is assigned with the manipulation intention expression-use finger state Further, from the aspect of processing, it is desirable to define the hand state (finger state) which is easier to identify.

### 3 5 Fifth example

The following describes the fifth example of the present third embodiment.

The specification of the predetermined finger state such as the simple manipulation-use finger state and the manipulation intention expression-use finger state in S2 of FIG. 9 need not be limited to the mentioned-above process, which is executed based on the capture image. For example, among several inputs due to touch manipulations made to the touch manipulation area 12a1 (remote manipulation area) during a predetermined period, the control circuit 18 specifies the number of inputs due to the touch manipulations made to different positions on the touch manipulation areas 12a1 (a number of manipulations specification section or means). When the number of manipulations during the predetermined period is a predetermined number (the number for the simple manipulation-use or the number for the manipulation intention expression-use), the predetermined finger state may be specified. In such a case that when, for instance, three touch manipulations within one second (or simultaneously) are made to mutually different three positions, the existence of three fingers may be specified. When the predetermined number of fingers is defined as being three, the predetermined finger state may be specified by the above specification of the existence of the three fingers. In detail, as illustrated in FIG. 20, in a condition that the display prohibition mode (further, input prohibition mode) is assigned, the touch manipulations are made to the touch manipulation area 12a1. Herein, the control circuit 18 activates the own timer 18b and starts the clock timing to count up the counter 18c The control circuit 18 thereby counts the number of inputs due to the touch manipulations including the touch manipulation at the start of the clock timing. It is noted that when the touch manipulation is made to the touch manipulation area 12a1, touch position information (for example, position coordinate on the touch manipulation area 12a1) is acquired. Herein, the re-touch manipulation made to the same position on the touch manipulation area 12a1 is not counted up as an input. Further, when the number of the inputs up to the time when the predetermined period t0 elapses is identical to the predetermined number of fingers defining the predetermined finger state, the present finger state of the manipulator's hand is specified as the predetermined finger state. During only a predetermined display permission period starting from a time when the present finger state is specified, the display permission mode (further input permission mode) is assigned When the display permission period is ended, the display prohibition mode (further input prohibition mode) is assigned again.

### 36 Sixth example

The following describes the sixth example of the present third embodiment.

In the touch manipulation input process illustrated in FIG. 10, when the display permission mode is assigned, the control content corresponding to the touch manipulation input to the remote touch manipulation area 12a is executed. In contrast, when the execution of the corresponding control content is permitted and the display prohibition mode is assigned, the control content corresponding to the touch manipulation input to the remote touch manipulation area 12a is not executed. That is, the execution of the corresponding control content is prohibited. In contrast, the following configuration may be provided. That is, when the display permission mode is not assigned and the predetermined finger state (herein, the manipulation intention expression-use finger state) is specified, the execution of the control content corresponding to the touch manipulation input to the remote touch manipulation area 12a is permitted; in contrast, when the display prohibition mode is not assigned and the predetermined finger state is not specified, the execution of the control content corresponding to the touch manipulation input to the remote touch manipulation area 12a is prohibited.

In detail, the configuration is as follows. When the predetermined finger state (herein, the manipulation intention expression-use finger state) is specified, the acceptance of the touch manipulation input to the remote touch manipulation area 12a is permitted. When the predetermined finger state is not specified, a manipulation input acceptance control is executed where the acceptance of the touch manipulation input to the remote touch manipulation area 12a is prohibited. Hereinafter, one example of the specific flow of the process is explained using FIG. 14.

In S111, the control circuit 18 determines the presence or absence of the touch manipulation to the manipulation panel 12a. The processing in S111 is similar to the processing in S101 of FIG. 10. In S112, the control circuit 18 determines whether the present finger state is the predetermined finger state (herein, the manipulation intention expression-use finger state). In the present example, like the processing in S2 of FIG. 9 or S12 of FIG. 17, in addition to the processing to specify whether the present finger state is the predetermined finger state, after the present finger state is specified, the processing is executed which stores the specified present finger state in the predetermined storage region (finger state storage section) in the storage section 18d of the control circuit 18. And in S112, it is determined whether the present finger state is the predetermined finger state based on the finger state information stored in the storage region (finger state storage section). When it is determined that it is the predetermined finger state, the processing proceeds to S113 When it is determined that it is not the predetermined finger state, the present process is ended.

In S113, the touch manipulation position to the manipulation panel 12a, i.e., the touch manipulation position on the touch manipulation area 12a1, is specified. This processing is similar to the processing in S103 of FIG. 10. In subsequent S114, the control circuit 18 executes a control corresponding to the touch manipulation position on the manipulation panel 12a. This processing is similar to the processing in S104 of FIG. 10. Although the present process is ended by the end of S114, the present process is repeatedly executed with predetermined intervals even after the end of the present process.

The position indication image display process in the example which executes the touch manipulation input process illustrated in FIG. 14 may be any of FIG. 9, FIG. 17, and the position indication image display processing to be mentioned further later.

### 3.7 Seventh example

The following describes the seventh example of the present third embodiment.

The above examples are configured as follows: when the predetermined finger state is specified, the display permission mode which permits the display of the position indication image is assigned; when the predetermined finger state is not specified, the display prohibition mode which prohibits the display of the position indication image is assigned. Alternatively, the following configuration may be provided. When the vehicle is in a predetermined travel state, the above display mode switchover control is executed; when it is not in the predetermined travel state, the display permission mode is assigned to the display mode. In such cases, a vehicle travel state detection section or means need to be included. FIG. 11 shows an example of such a process. Herein, the configuration includes a vehicle velocity sensor 30 (vehicle velocity detection section or means) which detects a vehicle velocity of the vehicle connected to the control circuit 18. When the vehicle is in the vehicle travel state exceeding a predetermined vehicle velocity level (vehicle velocity threshold value), the display mode switchover control is executed by the control circuit 18. When the vehicle is not in the above vehicle travel state, the display permission mode is assigned to the display mode regardless of the finger state.

In detail, in S21, the control circuit 18 determines whether the image of the manipulator's hand is acquired. This is similar to the processing in S1 of FIG. 9. When the image of the manipulator's hand is acquired, the processing proceeds to S22. When the image of the manipulator's hand is not acquired, the present process is ended.

In S22, the present travel state of the vehicle is specified. That is, it is determined whether the vehicle is in the travel state which exceeds the predetermined vehicle velocity level The control circuit 18 previously stores the vehicle velocity threshold value in the predetermined storage section 18d such as ROM. It is determined whether the vehicle velocity which the vehicle velocity sensor 30 detects exceeds the vehicle velocity threshold value. When exceeding, the above vehicle travel state is specified. When not exceeding, a low velocity travel state (including a stop state) is specified. Herein, the above vehicle velocity threshold value is fixedly defined as being, for instance, 5 km/h. In S23, it is determined whether the vehicle is presently in the above vehicle travel state When it is determines that it is in the above vehicle travel state, the processing proceeds to S24. In contrast, when it is determined that the vehicle is not in the above travel state (when it is determined that the vehicle is in the low velocity state including the stop state), the processing proceeds to S26.

In S24, it is specified whether the manipulator's hand (manipulation hand) is in the predetermined finger state (herein, the manipulation intention expression-use finger state). The specification of the predetermined finger state is executed by the processing similar to that in S2 of FIG. 9. When it is determined in subsequent S25 that the present finger state is the predetermined finger state, the processing proceeds to S26. When it is determined not to be the predetermined finger state, the processing proceeds to S29.

In S26, the display mode is assigned with the display permission mode in which the display of the position indication image is permitted It is noted that the display permission mode is stored in a predetermined storage region (display mode storage section) provided in the storage section 18d of the control circuit 18. In subsequent S27, the control circuit 18 specifies the position relation between the display window of the display device 15 and the image-captured hand. This processing is similar to the processing in S5 of FIG. 9. In subsequent S28, the position indication image 200H is displayed in superimposition on the main image 200B currently displayed in the display window of the display device 15 (a position indication image display section or means). This processing is similar to the processing in S6 of FIG. 9.

In detail, when it is determined in S23 that the vehicle is not in the predetermined travel state (when it is determined that the vehicle is in the low velocity state including the stop state), in the processing in S27 and S28, the position indication image 200H based on the finger state is displayed regardless of the finger state of the manipulator (refer to (c) of FIG. 27, FIG. 7, and FIG. 6). In contrast, when it is determined in S22 that the vehicle is in the vehicle travel state and it is determined in S25 that the present manipulator's finger state is in the predetermined finger state (herein, the manipulation intention expression-use finger state), the position indication image 200H based on the predetermined finger state which the manipulator executes is displayed through the processing in S27 and S28 (refer to (c) of FIG. 6 and FIG. 7).

In contrast, when it is determined in S25 that the present finger state is not the predetermined finger state (herein, the manipulation intention expression-use finger state), the processing proceeds to S29. In S29, the display mode is assigned with the display prohibition mode which prohibits the display of the position indication window 200. This is stored in the predetermined storage region (display mode storage section) in the storage section 18d of the control circuit 18. The display of the position indication image 200H executed in S27 and S28 is thereby not executed, and as illustrated in FIG. 5 (c), for example, the position indication image 200H is not displayed on the display window of the display device 15.

The present process is ended by the end of S28 and S29. The present process is repeatedly executed with predetermined intervals even after the end of the present process.

Further, in the present example, the above predetermined vehicle velocity level (vehicle velocity threshold value) is defined as being 5 km/h. In the slow travel state of the vehicle which does not exceed the above vehicle velocity level, the display permission mode is always assigned. It is noted that, as illustrated in FIG. 16, the above vehicle velocity level may be defined in the vehicle velocity threshold range greater than 0 km/h and less than 5 km, or in the vehicle velocity threshold range equal to or greater than 5 km/h and less than 10 km (vehicle's reduced velocity travel state). The vehicle velocity level may be defined as 0 km/h; thus, the display permission mode may be constantly assigned in the vehicle stop state. Further, the vehicle velocity level may be defined in the vehicle velocity range equal to or greater than 10 km/h and less than 30 km/h (vehicle low velocity travel state), in the vehicle velocity range equal to or greater than 30 km/h and less than 60 km/h (vehicle middle velocity travel state), or in the vehicle velocity range equal to or greater than 60 km/h (vehicle high velocity travel state).

In addition, in the processing of FIG. 11, when the vehicle is in the predetermined vehicle travel state (velocity greater than the vehicle velocity threshold value), the above display mode switchover control is executed; when the vehicle is not in the predetermined vehicle travel state (when the vehicle has a velocity less than the vehicle velocity threshold value), the display permission mode is fixedly assigned. When the vehicle is in the predetermined vehicle travel state (velocity greater than the vehicle velocity threshold value), the display prohibition mode may be fixedly assigned. When the vehicle is not in the predetermined vehicle travel state (when the vehicle has a velocity less than the vehicle velocity threshold value), the above display mode switchover control may be executed.

### 3.8 Eighth example

The following describes the eighth example of the present third embodiment.

In the above examples, when the predetermined finger state is specified, the display permission mode which permits the display of the position indication image is assigned when the predetermined finger state is not specified, the display prohibition mode which prohibits the display of the position indication image is assigned. Alternatively, the following configuration may be provided. When the driver is specified as a manipulator of the touch manipulation area 12a1, the display mode switchover control may be executed. When the vehicle is not in the above vehicle travel state, the display permission mode is assigned to the display mode regardless of the finger state. Hereinafter, the specific flow of the process is explained using FIG. 12.

In detail, in S31, the control circuit 18 determines whether the image of the manipulator's hand is acquired. This is similar to the processing in S1 of FIG. 9. When the image of the manipulator's hand is acquired, the processing proceeds to S32. When the image of the manipulator's hand is not acquired, the present process is ended.

In S32, it is specified whether the manipulator whose hand opposes the manipulation panel 12a is a driver (a manipulator specification section or means). The specification of the manipulator can be executed based on the capture image (FIG. 8) by the camera 20 illustrated in FIG. 15, for example. In detail, the direction from which the arm is extended is specified from the capture image of the camera 20, and it is determined whether the direction is extended from the driver's seat 2D side, thereby specifying whether the manipulator is the driver. In S33, it is determined whether the manipulator of the manipulation panel 12a is the driver. When it is determined that the manipulator is the driver, the processing proceeds to S34. In contrast, when it is determined in S33 that the manipulator of the manipulation panel 12a is a person other than the driver, the processing proceeds to S36.

In S34, it is specified whether the hand of the driver being the manipulator (manipulation hand) is in the predetermined finger state (herein, the manipulation intention expression-use finger state). The specification of the predetermined finger state is executed by the processing similar to that in S2 of FIG. 9. In next S35, it is determined whether the present finger state is the predetermined finger state. When it is determined that the present finger state is the predetermined finger state, the processing proceeds to S36 When it is determined not to be the predetermined finger state, the processing proceeds to S39.

In S36, the display mode is assigned with the display permission mode in which the display of the position indication image is permitted. It is rioted that the display permission mode is stored in a predetermined storage region (display mode storage section) provided in the storage section 18d of the control circuit 18. In next S37, the control circuit 18 specifies the position relation between the display window of the display device 15 and the image-captured hand. This processing is similar to the processing in S5 of FIG. 9. In subsequent S38, the position indication image 200H is displayed in superimposition on the main image 200B currently displayed in the display window of the display device 15 (a position indication image display section or means). This processing is similar to the processing in S6 of FIG. 9.

In detail, when a person other than the driver is specified as a manipulator of the manipulation panel 12a in S33, in the processing in S37 and S38, the position indication image 200H based on the finger state is displayed regardless of the finger state of the manipulator (refer to (c) of FIG. 27, FIG. 7, and FIG. 6). In contrast, when the driver is specified as a manipulator of the manipulation panel 12a in S32 and it is determined in S35 that the present finger state is the predetermined finger state (herein, the manipulation intention expression-use finger state), the position indication image 200H based on the predetermined finger state which the driver executes is displayed through the processing in S37 to S38 (refer to (c) of FIG. 6 and FIG. 7).

In contrast, when it is determined in S35 that the present finger state is not the predetermined finger state (herein, the manipulation intention expression-use finger state), the processing proceeds to S39. In S39, the display mode is assigned with the display prohibition mode which prohibits the display of the position indication window 200. This is stored in the predetermined storage region (display mode storage section) in the storage section 18d of the control circuit 18. The display of the position indication image 200H executed in S37 and S38 is thereby not executed, and as illustrated in FIG. 5 (c), for example, the position indication image 200H is not displayed on the display window of the display device 15.

S38 and S39 end; then, the present process is ended. It is noted that even after the end of the present process, the present process is repeatedly executed with predetermined intervals.

### 3.9 Ninth example

The following describes the ninth example of the present third embodiment.

The present example replaces the above mentioned display process with a process which is formed by combining both of FIG. 11 and FIG. 12. That is, the travel state of the vehicle (for example, vehicle velocity of the vehicle) is detected, and furthermore, it is specified whether the manipulator of the remote touch manipulation area 12a is the driver. Thereby, the vehicle is determined to be the predetermined travel state (for example, the travel state, which is not in the low velocity travel state less than a predetermined vehicle velocity level, the low velocity travel state including the stop state), and the manipulator of the remote touch manipulation area 12a is specified as the driver. In such a case, only when the predetermined finger state is specified, the display of the position indication image 200H is permitted, whereas when the predetermined finger state is not specified, the display of the position indication image 200H is prohibited. When the vehicle is determined to be not in the above predetermined travel state, when the specified manipulator of the remote touch manipulation area 12a is not the driver, or when the foregoing two negative conditions occur at the same time, the display of the position indication image 200H can be permitted regardless of the specified finger state. Hereinafter, the specific flow of the process is explained using FIG. 13.

That is, when the hand image of the manipulator of the remote touch manipulation area 12a is acquired in S41 (similar to the processing in S1 of FIG. 9), it is determined whether the vehicle is in the predetermined travel state in S42 and S43 (the similar processing in S22, S23 of FIG. 11). When it is in the predetermined travel state, the processing proceeds to S44 and S45, where it is determined whether the manipulator of the remote touch manipulation area 12a is the driver (the similar processing in S32, 33 of FIG. 12).

When the vehicle is determined to be in the travel state and the manipulator of the remote touch manipulation area 12a is determined to be the driver in S42 to S45, the processing proceeds to S46 and S47. Herein, it is specified whether the manipulator's hand (manipulation hand) is in the predetermined finger state (herein, the manipulation intention expression-use finger state) (the processing similar to the processing in S2 and S3 of FIG. 9). When it is determined that the present finger state is the predetermined finger state, the processing proceeds to S48. When it is determined not to be the predetermined finger state, the processing proceeds to S51.

In S48, the display mode is assigned with the display permission mode. This is stored in the predetermined storage region (display mode storage section) in the storage section 18d of the control circuit 18. In subsequent S49, the control circuit 18 specifies the position relation between the display window of the display device 15 and the imge-captured hand. Further in S50, the position indication image 200H is displayed in superimposition on the main image 200B currently displayed in the display window of the display device 15 (a position indication image display section or means). Such processing is similar to the processing in S4 to S6 of F1G. 9.

In detail, when in S42 the vehicle is not in the vehicle travel state, or when in S44 the person other than the driver is specified as the manipulator of the manipulation panel 12a, in the processing in S48 to S50, the position indication image 200H based on the finger state is displayed regardless of the finger state of the manipulator (refer to (c) of FIG. 27, FIG. 7, and FIG. 6). In contrast, when in S42 the vehicle is determined to be in the vehicle travel state, when in S44 the driver is specified as a manipulator of the manipulation panel 12a, and when in S46 the predetermined finger state (herein, the manipulation intention expression-use finger state) is specified, the position indication image 200H based on the predetermined finger state which the driver executes is displayed through the processing in S48 to S50 (refer to (c) of FIG. 6 and FIG. 7).

In contrast, when it is determined in S47 that the present finger state is not the predetermined finger state (herein, the manipulation intention expression-use finger state), the processing proceeds to S51. In S51, the display mode is assigned with the display prohibition mode. This is stored in the predetermined storage region (display mode storage section) in the storage section 18d of the control circuit 18 The display of the position indication image 200H executed in S49 and S50 is thereby not executed, and as illustrated in FIG. 5 (c), for example, the position indication image 200H is not displayed on the display window of the display device 15.

S50 and S51 end; then, the present process is ended. It is noted that even after the end of the present process, the present process is repeatedly executed with predetermined intervals.

It is noted that when the vehicle is in the predetermined vehicle travel state (vehicle velocity higher than the threshold value), and, the manipulator is the driver in the process of FIG. 13, the above display mode switchover control is executed. In other cases, namely, when the vehicle is not in the predetermined vehicle travel state (when the vehicle has a velocity less than the vehicle velocity threshold value) or the manipulator is not the driver, the display permission mode is fixedly assigned. Alternatively, the following example may be provided That is, when the vehicle is in the predetermined vehicle travel state and, moreover, the manipulator is the driver, the display prohibition mode may be fixedly assigned. When the vehicle is not in the vehicle travel state and the manipulator is the driver, the above display mode switchover control may be executed. When another case (when the manipulator is not the driver), the display permission mode may be fixed assigned.

### 3.10 Tenth example

The following describes the tenth example of the present third embodiment.

In the above examples, the camera 12b serving as the hand image capture section or means is a camera which image-captures a fixed region of the vehicle compartment which the touch manipulation area (front face) 12a1 of the touch panel 12a opposes. As explained in the above examples, the camera is configured to capture an image from the side of the rear face 12a2 of the touch panel 12a The present third embodiment is not restricted to such a configuration. For instance, as shown in FIG. 15, a camera may be arranged at a center console portion C of the vehicle so as to image-capture the touch manipulation area 12a1 of the touch panel 12a slantly from the upper and to image-capture an approaching object approaching the touch manipulation area 12a1 from the side of the touch manipulation area 12a1. In such a case, unlike the above example, when a specific image (for example, hand image) in the capture image is extracted and displayed in the display section 15, the process of the right-and-left reversal can be eliminated. In addition, the camera 12b which serves as a hand image capture section or means can serve also as the camera 20 to capture an image of a peripheral region including the touch manipulation area 12a1 of the manipulation panel 12a.

### 3.11 Eleventh example

The following describes the eleventh example of the present third embodiment.

In all the manipulation display windows displayed on the display device 15, the configuration is provided which the above display mode switchover control is executed. Alternatively, such display mode switchover control may be executed only in a predetermined manipulation display window. In contrast, the display permission mode or the display prohibition mode may be fixedly assigned in another manipulation display window.

Based on the control instruction from the control circuit 18, the display device 15 can execute a switchover of, on the display window, several manipulation display windows 200, in which an input due to a press manipulation to the touch manipulation area 12a1 is accepted (a manipulation display window display section or means). For instance, the several manipulation display windows 200 include a menu selection window 2003 illustrated in FIG. 22; an air quantity set-up window 2004 of a car air-conditioner illustrated in FIG. 23; a volume set-up window 2005 of a car audio illustrated in FIG. 24; the already mentioned map display window 2002 (FIG. 7 (c)) of a car navigation; and a character input window 2001 (FIG. 27 (c)) etc. Those can be switched according to various inputs. There is provided a display mode execution applicability information which allows the specification of the manipulation display window of the execution target for the above display mode switchover control from among those several manipulation display windows The display mode execution applicability information is previously stored in a predetermined storage region (a display mode execution applicability information storage section or means) of the control circuit 18. The control circuit 18 refers to the display mode execution applicability information when executing the position indication image display process. Thereby, only when the manipulation display window displayed in the display device 15 is an execution target for the above display mode switchover control, the control circuit 18 may execute the display mode switchover control in the specified manipulation display window. Hereinafter, the specific flow of the process is explained using FIG. 21.

In S61, the control circuit 18 determines whether the image of the manipulator's hand is acquired. This is similar to the processing in S1 of FIG. 9. When the image of the manipulator's hand is acquired, the processing proceeds to S62. When the image of the manipulator's hand is not acquired, the present process is ended.

In S62, the control circuit 18 specifies a kind of the manipulation display window 200 being presently displayed, and specifies whether it is a predetermined execution target for the display mode switchover control. Herein, the above display mode execution applicability information stored in the predetermined storage region of the storage section 18d of the control circuit 18 is used. Among the manipulation display windows, a complicated manipulation display window including a manipulation in which a press manipulation to the touch manipulation area 12a1 exceeds a predetermined manipulation load level is determined to be the execution target for the display mode switchover control; a simple manipulation display window including only a manipulation in which a press manipulation to the touch manipulation area 12a1 does not exceed the predetermined manipulation load level is determined to a fixed assignment target of the display permission mode. The control circuit 18 refers to the display mode execution applicability information, thereby specifying whether the manipulation display window 200 being currency displayed is the execution target for the display mode switchover control.

It is noted that the display mode execution applicability information is stored as the information which classifies the window kinds as follows. The display device 15 displays more than one manipulation input image on the display window. SI is defined as a total area of the manipulation input images or a total area of the whole of the press manipulation regions defined on the touch manipulation area 12a1 in correspondence with the manipulation input images 2001 (manipulation icons). SA is defined as a total area of the whole of the display window or a total area of the whole region of the touch manipulation area 12a1. Herein, when the ratio SI/SA is greater than a predetermined ratio SO, such a manipulation display window is determined to be the complicated manipulation display window; when the ratio SI/SA is not greater than the predetermined ratio SO, such another manipulation window is determined to be the simple manipulation window, see e.g. 1 of FIG. 73). Further, KI is defined as the number of the manipulation input images or the number of the whole of the press manipulation regions defined on the touch manipulation area 12a1 in correspondence with the manipulation input images 2001 (manipulation icons). Herein, when the number KI is greater than a predetermined number KO, such a manipulation display window may be determined to be the complicated manipulation display window; when the number KI is not greater than the predetermined number KO, such another manipulation display window may be determined to be the simple manipulation display window (see e.g, 2 of FIG. 73). Yet further, LI is defined as an interval between the manipulation input images or an interval of the adjoining press manipulation regions defined on the touch manipulation area 12a1 in correspondence with the manipulation input images 2001 (manipulation icons). Herein, when the interval LI is narrower than a predetermined interval LO, such a manipulation display window may be determined to be the complicated manipulation display window; when the interval LI is not narrower than the predetermined interval LO, such another manipulation display window may be determined to be the simple manipulation display window (see e.g. 3 of FIG. 73). Herein, the simple manipulation display windows are exemplified as the windows 2003, 2004, and 2005 in FIG. 22 to FIG. 24, and FIG. 7 (c) The complicated manipulation display window is exemplified as the character input window 2001 (for example, destination name input window etc.) in FIG. 27 (c).

In S62, the control circuit 18 refers to the display mode execution applicability information that enables the specification of the above complicated manipulation display window and simple manipulation display window, thereby specifying whether the manipulation display window 200 displayed now is the execution target for the display mode switchover control (i.e., the complicated manipulation display window, herein). When specified, the processing proceeds to S63. When it is determined in S63 that the manipulation display window 200 presently displayed is the execution target of the display mode switchover control, the processing proceeds to S69. When it is determined that it is not the execution target of the display mode switchover control, the processing proceeds to S66.

In S64, it is specified whether the manipulator's hand (manipulation hand) is in the predetermined finger state (herein, the manipulation expression-use finger state) (similar to the processing in S2 of FIG. 9). When it is determined in subsequent S65 that the present finger state is the predetermined finger state, the processing proceeds to S66. When it is determined not to be the predetermined finger state, the processing proceeds to S69.

In S66, the display mode is assigned with the display permission mode in which the display of the position indication image is permitted. It is noted that the display permission mode is stored in a predetermined storage region (display mode storage section) provided in the storage section 18d of the control circuit 18. In subsequent S67, the control circuit 18 specifies the position relation between the display window 200 of the display device 15 and the image-captured hand (similar to S5 of FIG. 9). In subsequent S68, the position indication image 200H is displayed in superimposition on the main image 200B currently displayed in the display window 200 of the display device 15 (a position indication image display section or means: similar to S6 of FIG. 9).

In detail, when it is determined in S62 that the manipulation display window 200 being presently displayed is not the execution target of the display mode switchover control (when it is specified that it is the simple manipulation display window), in the processing in S67 and S68, the position indication image 200H based on the finger state is displayed regardless of the finger state of the manipulator (refer to (c) of FIG. 27, FIG. 7, and FIG. 6). When it is determined in S62 that the manipulation display window 200 being presently displayed is the execution target of the display mode switchover control (herein, when it is specified that it is the complicated manipulation display window), the position indication image 200H based on the manipulation intention expression-use finger state executed by the manipulator is displayed through the processing in S67 and S68 (refer to (c) of FIG. 6 and FIG. 7).

In contrast, when it is determined in S65 that the present finger state is not the predetermined finger state, the processing proceeds to S69. In S69, the display mode is assigned with the display prohibition mode which prohibits the display of the position indication window 200. This is stored in the predetermined storage region (display mode storage section) in the storage section 18d of the control circuit 18. The display of the position indication image 200H executed in S67 and S68 is thereby not executed, and as illustrated in FIG. 5 (c), for example, the position indication image 200H is not displayed on the display window 200 of the display device 15.

The present process is ended by the end of S68 and S69. The present process is repeatedly executed with predetermined intervals even after the end of the present process.

In the process of FIG. 21, the above display mode switchover control is executed in the complicated manipulation display window; the display permission mode is fixedly assigned in the simple manipulation display window. Another example may be provided as follows. The display prohibition mode may be fixedly assigned in the complicated manipulation display window; the above display mode switchover control may be executed in the simple manipulation display window.

### 3.12 Twelfth example

The following describes the twelfth tenth example of the present third embodiment.

The second to eleventh examples are configured as follows. In a case when the predetermined finger state is specified as the manipulator's finger state, the highlight display of the position indication image 200H in the above first example is executed only during a predetermined display permission period. In contrast, in other cases, the position indication image 200H is not displayed. Further, the manipulation intention expression-use finger state is defined as the predetermined finger state (example 1 of FIG. 75). Another characteristic finger state may be used. Further, alternatively, the simple manipulation-use finger state (the finger state which can manipulate it simply (state in which the number of fingers extended is a specific number or the kind of a finger extended is a specific kind): example 2 of FIG. 75) may be defined.

### 3.13 Other examples

Other examples of the third embodiment can be the same as "1.11 Other examples of the first embodiment. Explanation is omitted herein.

### 4. Aspects of Disclosure

Aspects of the disclosure described herein are set forth in the following clauses.

As a first aspect of the disclosure, a manipulation input apparatus for a vehicle may be provided as follows" A display section is included to have a display window for executing an operation of a device in the vehicle. A remote manipulation section is included to be arranged at a position separated from the display window, while having a remote manipulation area for remotely executing a manipulation input in the display window, An input acceptance section is included to accept an input corresponding to a press manipulation position based on a press manipulation to the remote manipulation area. A hand image capture section is included to capture an image of a hand that opposes the remote manipulation area. A position indication image display section is included to display a position indication image, which is generated based on the captured image of the hand, at a position on the display window, the position being indicated by the hand. A simple manipulation-use finger state specification section is included to specify whether a finger state of the hand opposing the remote manipulation area is a predetermined simple manipulation-use finger state. A display mode assignment section is included to execute a display mode switchover control of a display mode assigned to the position indication image display section. Herein, the display mode assignment section assigns the display mode with a display permission mode to permit a display of the position indication image when the simple manipulation-use finger state is specified, and assigns the display mode with a display prohibition mode to prohibit a display of the position indication image when the simple manipulation-use finger state is not specified.

According to the above-mentioned configuration, in cases that a manipulation against the remote manipulation section is a manipulation by the finger state using five fingers and having the high degree of difficulty, the display of the manipulation (displaying a manipulation state in the remote manipulation section as a position indication image on the manipulation window in the display section) is restricted, thereby urging the user to perform a manipulation by the finger state which is simpler and easier to manipulate (simple manipulation-use finger state). This can help prevent a mis-manipulation, which is made without an intention, to a remote manipulation section, and an incomprehensibility of the correspondence relation between displayed fingers and a finger that a manipulator actually wants to use for position indication.

Moreover, a vehicle velocity detection section which detects a vehicle velocity of the vehicle may be provided. In such a case, the display mode assignement section assigns as follows: when the vehicle is in the vehicle travel state exceeding a predetermined vehicle velocity level, the display mode switchover control may be executed; when it is not in the vehicle travel state, the display permission mode may be assigned to the display mode. In such a configuration, for example, in the vehicle stop state, a manipulation input by the finger state with a high degree of difficulty is permitted as the manipulation to the remote manipulation section, thus enabling manipulation inputs in various easy-to-manipulate manners. In contrast, in the vehicle traveling more than a predetermined speed, the manipulation display is restricted, therefore forcing a manipulation by a specific finger state simpler and easy-to-manipulate as a manipulation to a remote manipulation section and hardly causing the mis-manipulation especially by a driver, and an incomprehensibility of the correspondence relation between a displayed finger and a finger that is used for position indication.

In addition, a manipulator specification section may be configured to specify whether a manipulator of the remote manipulation area is a driver or not. In such a case, the display mode assignment section may execute as follows: when the driver is specified as a manipulator of the remote manipulation area, the display mode switchover control is executed; when the driver is not specified as the manipulator of the remote manipulation area, the display permission mode is assigned to the display mode. Under such a configuration, for instance, if the manipulator of the remote manipulation area is a person other than the driver, such as a passenger seat passenger, a manipulation input by the finger state with a high degree of difficulty may be permitted as the manipulation to the remote manipulation section, thus enabling manipulation inputs in various easy-to-manipulate manners. In contrast, when the manipulator of the remote manipulation area is a driver, the manipulation display is restricted, thereby forcing a manipulation by a specific finger state simpler and easy-to-manipulate as a manipulation to the remote manipulation section and hardly causing the mis-manipulation especially by a driver, and an incomprehensibility of the correspondence relation between a displayed finger and a finger that is used for position indication.

A manipulation input acceptance control section may be provided to execute a manipulation input acceptance control. Herein, when the display permission mode is assigned by the display mode assignment section, an acceptance of an input by the input acceptance section is permitted; when the display prohibition mode is assigned, an acceptance of an input by the input acceptance section is prohibited. If a manipulation display is not made in the manipulation input apparatus, the position indication manipulation from the remote manipulation section becomes very difficult. Under the above configuration, an acceptance of an input is permitted only in the display permission mode to display a position indication image. The mis-manipuiation to the remote manipulation section can be thus prevented certainly. Conversely, the display of a position indication image is enabled only when an acceptance of an input to the remote manipulation section is enabled. Useless display of a position indication image is reduced and an effectiveness is obtained in power-saving.

A manipulation input acceptance control section may be provided to execute a manipulation input acceptance control. Herein, when the simple manipulation-use finger state is specified by the simple manipulation-use finger state specification section, an acceptance of an input by the input acceptance section is permitted; when the simple manipultion-use finger state is not specified, an acceptance of an input by the input acceptance section is prohibited. In such a configuration, regardless of the display mode, only when the simple manipuiation-use finger state is specified, the acceptance of an input to the remote manipulation section is permitted. The mis-manipulation to the remote manipulation section can be thus prevented certainly.

In addition, the simple maniputation-use finger state specification section may be configured so that the simple manipulation-use finger state is specified based on the image of the hand captured by the hand image capture section. In detail, the simple manipulation-use finger state specification section includes a finger shape recognition section which recognizes a shape of a finger of a hand which opposes the remote manipulation area based on an image of the hand captured by the hand image image capture section. When the recognized finger shape is a predetermined finger shape for the simple manipulation use, the simple manipulation-use finger state is specified. In such a configuration, the hand image captured by the hand image capture section can be used not only for the display of the indication position but also for the specification of the simple manipulation-use finger statue. That is, a configuration is provided where the image capture section serves for more than one use. A useless additional element of the configuration can be eliminated, thus providing low costs.

The simple manipulation-use finger state specification section may include a finger number specification section to specify the number of fingers, which are in the state to be extended approximately parallel with the remote manipulation area, recognized by the finger shape recognition section. In cases that the specified number of fingers in the state to be extended approximately parallel with the remote manipulation area is a predetermined number for the simple manipulation use, the present finger state is specified as the simple manipulation-use finger state. Counting the finger in the state to be extended can be easily executed by image analysis with few errors in the counting. Moreover, the state where the finger is extended is a finger state which can be used for manipulation as it is. The manipulator can start the manipulation with the present simple manipulation-use finger state, thus providing the excellent manipulability.

The simple manipulation-use finger state specification section may include a manipulation number specification section, which specifies the number of inputs due to press manipulations made to different positions in the remote manipulation area, which the input acceptance section accepts during a predetermined period. When the number of inputs specified during the predetermined period is the number for the simple manipulation use, the present finger state is specified as the simple manipulation-use finger state In such a configuration, the simple manipulation-use finger state can be specified easily from the predetermined number of touch manipulations by the user.

The number of fingers for the above simple manipulation use may be defined as a single finger. In manipulating the remote manipulation section in the manipulation input apparatus to display a hand manipulation, as the number of fingers for position indication is more, the manipulation difficulty is lower. Therefore, the one-finger state having the smallest number of fingers becomes the simplest and intelligible finger state for manipulation use. In addition, the one-finger state has a simple hand shape, facilitating the process which specifies the one-finger state.

The number of fingers for the above simple manipulation use may be four, three (desirably), or two (more desirably). The two-finger state also has a comparatively simple hand shape, thus making easier the process which specifies the simple manipulation-use finger state. Further, each of the three-finger state and the four-finger state is also a comparatively simple finger state. In addition, those finger states do not have the shape of the hand which the user configures by chance, thus also executing prevention of the mis-manipulation certainly.

The simple manipulation-use finger state specification section may include a finger kind specification section, which specifies a kind of a finger, which is in the state to be extended approximately parallel with the remote manipulation area, recognized by the finger shape recognition section. In cases that the specified kind of the finger in the state to be extended approximately parallel with the remote manipulation area is a predetermined kind of a finger for the simple manipulation use, the present finger state is specified as the simple manipulation-use finger state. In addition, the hand shape in which only a specific firiger is extended does not have the shape of the hand which the user configures by chance, thus also executing prevention of the mis-manipuiation certainly. Moreover, the state where the finger is extended is a finger state which can be directly used for manipulation. The manipulator can start the manipulation with the present simple manipulation-use finger state, thus providing the excellent manipulability.

The finger kind for the above simple manipulation use can be the index finger alone. The one-finger state of the index finger has a simple hand shape, facilitating the process which specifies the one-finger state. Moreover, the index finger is mostly used for the manipulation, thus being convenient in starting the manipulation as it is.

The finger kind for the above simple manipulation use can be the middle finger alone. The one-finger state of the middle finger has a simple hand shape, facilitating the process which specifies the one-finger state. Moreover, the middle finger has a characteristic of the longest finger, thereby making the recognition of the kind easy. Moreover, the middle finger may be used for the manipulation, thus being convenient in starting the manipulation as it is.

The finger kind for the above simple manipulation use can only be the index finger and the middle finger. The two-finger state of the index finger and middle finger has a simple hand shape, facilitating the process which specifies the two-finger state. Moreover, the middle finger which is the longest finger is contained in the two-finger state, thus making the recognition of the kind easy. Moreover, both the fingers are used for the manipulation, thus being convenient in starting the manipulation as it is.

The position indication image display section may generate a real finger image, which allows at least the specification of the outline of the finger of the hand, based on the image of the hand captured by the hand image capture section, and display the generated real finger image as the above-mentioned position indication image. The position of the hand can be grasped from the outline of the hand on the display window; thus, it is easy to recognize the position and manipulability becomes easier.

The position indication image display section may display as a position indication image either a false finger image which allows at least the specification of the direction of an extended finger and the fingertip position, or a fingertip position image which allows at least the specification of the fingertip position of the finger. The position indication image uses an image, which is simplified to the extent that an indication position is recognized, thereby enabling the reduction of the processing load.

The display mode assignment section may execute the display mode switchover control when the vehicle is in the vehicle travel state exceeding a predetermined vehicle velocity level (vehicle velocity threshold value), and assign the display permission mode to the display mode when it is not in the vehicle travel state. In such a configuration, the predetermined vehicle velocity level can be defined as being 0km/h. In the vehicle stop state, a driver can concentrate on manipulation; thus, there is no need of restricting the manipulation. According to the above configuration, a position indication image is always displayed in the vehicle stop state; thus, the manipulator can execute the manipulation freely.

Further, the display mode assignment section may execute the display mode switchover control when the vehicle is in the vehicle travel state exceeding a predetermined vehicle velocity level (vehicle velocity threshold value), and assign the display permission mode to the display mode when it is not in the vehicle travel state. In such a configuration, the predetermined vehicle velocity level can be defined as being within the vehicle velocity range (reduced velocity state) greater than 0km/h and less than 5km/h, or within the vehicle velocity range (reduced velocity state) equal to or greater than 5km/h and less than 10km/h. Moreover, the predetermined vehicle velocity level can be defined as being within the vehicle velocity range (low velocity travel state) equal to or greater than 10km/h and less than 30km/h, within the vehicle velocity range (intermediate velocity travel state) equal to or greater than 30km/h and less than 60km/h, or within the vehicle velocity range (high velocity travel state) equal to or greater than 60km/h. The above definition may be made to define a suitable vehicle velocity threshold according to each manipulation difficulty (manipulation load level) of each manipulation window which is switched one after another in the display on the display window.

There may be provided a manipulation window display section and a display mode execution applicability information storage section. The manipulation window display section displays in a switching manner several manipulation display windows in which an input due to a press manipulation to the remote manipulation area is accepted by the input acceptance section. The display mode execution applicability information storage section stores a display mode execution applicability information which allows the specification of the manipulation display window of the execution target for the display mode switchover control from among several manipulation display windows. In such a case, the display mode assignment section may be configured to specify whether the manipulation window displayed by the manipulation window display section is an execution target for the display mode switchover control based on the display mode execution applicability information. Only when specifying that it is the execution target of the display mode switchover control, the display mode switchover control may be executed in the specified manipulation display window. In such a configuration, the display mode switchover control is executed only when the predetermined manipulation window is displayed. For example, in an easy-to-manipulate manipulation window even if the vehicle is during traveling, the display permission mode is fixedly assigned while the display mode switchover control is not assigned. Conversely, in a difficult-to-manipulate manipulation window when the vehicle is during traveling, the display prohibition mode is fixedly assigned while the display mode switchover control is not assigned. Useless display mode switchover control is thus omissible.

The display mode execution applicability information may define, among the manipulation display windows, a complicated manipulation window as an execution target for the display mode switchover control. In the complicated manipulation window, the press manipulation to the remote manipulation area which is accepted as an input by the input acceptance section includes the manipulation exceeding a predetermined manipulation load level. The display mode execution applicability information may define a simple manipulation window as a fixed assignment target for the display permission mode. In the simple manipulation window, the press manipulation to the remote manipulation area which is accepted as an input by the input acceptance section includes only a manipulation not exceeding a predetermined manipulation load level. According to such a configuration, the display permission mode is fixedly assigned in the simple manipulation window; therefore, the display mode switchover control can be omissible.

It is noted that the simple manipulation window may include at least one of a menu selection window, a volume adjustment window, and an air quantity adjustment window The menu window has a comparatively small number of manipulation input images (manipulation icons) displayed on the display window, and a certain amount of a distance between adjoining manipulation input images, thereby making manipulation comparatively easy. The volume adjustment window such as a sound volume adjustment or an air quantity adjustment is also displayed as a comparativelysimple manipulation window. Therefore, these manipulation windows are suitable for being defined as a simple manipulation window. In contrast, the complicated manipulation window may include as least a character input window. The character input of 50-character kana syllabary needs many manipulation input images displayed on the display window, and the distance between the adjoining manipulation input images is thereby close. It is thus difficult to manipulate a manipulation input image, which should be intentionally manipulated. Accordingly, such a manipulation window is suitable for being defined as a complicated manipulation window.

As a second aspect of the disclosure, a vehicular manipulation input apparatus may be provided as follows. A display section is included to have a display window for executing an operation of a device in the vehicle. A remote manipulation section is included to be arranged at a position separated from the display window, the remote manipulation section having a remote manipulation area for remotely executing a manipulation input in the display window. An input acceptance section is included to accept an input corresponding to a press manipulation position based on a press manipulation to the remote manipulation area A hand image capture section is included to capture an image of a hand that opposes the remote manipulation area. A position indication image display section is included to display a position indication image, which is generated based on the captured image of the hand, at a position on the display window, the position being indicated by the hand. A manipulation intention expression-use finger state specification section is included to specify whether a finger state of the hand opposing the remote manipulation area is a predetermined manipulation intention expression-use finger state. A display mode assignment section is included. The display mode assignment section may assigns a display mode, which is assigned to a position indication image display section, with a display prohibition mode which prohibits a display of a position indication image, while executing a switchover to a display permission mode to permit a display of a position indication image only during a predetermined display permission period when the manipulation intention expression-use finger state is specified.

The above configuration is restricted such that the manipulation of the remote manipulation section cannot be executed if a specific finger state is not made by a user who intends to manipulate. This can effectively help prevent a mis-manipulation, which is made without an intention, to the remote manipulation section.

The display mode assignment section may be configured to define, as a display permission period, a period from the time when the display mode is switched to the display permission mode to the time when a predetermined prohibition mode recovery time elapses, and to return the display mode to the display prohibition mode when the prohibition mode recovery time elapses. According to the configuration, the return from the display permission mode to the display prohibition mode can be executed by a simple process.

In contrast, the display mode assignment section may define as the display permission period a period up to the time when the manipulation intention expression-use finger state becomes not-specified. When the manipulation intention expression-use finger state is specified, the display permission mode may be assigned; when the manipulation intention expression-use finger state is not specified, the display prohibition mode may be assigned. In such a configuration, based on the determination of whether a manipulation intention expression-use finger state is specified, the switchover between the display permission mode and the display prohibition mode can be easily executed.

A manipulation input acceptance control section may be configured as follows. When the display permission mode is assigned, an acceptance of an input by the input acceptance section may be permitted; when the display prohibition mode is assigned, an acceptance of an input by the input acceptance section may be prohibited. In the manipulation input apparatus of the prompter type, the position indication manipulation becomes very difficult when the manipulation state in the remote manipulation section is not displayed using the position indication image. Under the above configuration, an acceptance of an input is permitted only in the display permission mode to display a position indication image. The mis-manipulation to the remote manipulation section can be thus prevented certainly. Conversely, the display of a position indication image is enabled only when an acceptance of an input to the remote manipulation section is enabled. Useless display of a position indication image is reduced and an effectiveness is provided in power-saving.

Further, a manipulation input acceptance control section may be configured as follows. When the manipulation intention expression-use finger state is specified, an acceptance of an input by the input acceptance section may be permitted; when the manipulation intention expression-use finger state is not specified, an acceptance of an input by the input acceptance section may be prohibited. In such a configuration, only when the manipulation intention expression-use finger state is specified, the acceptance of an input to the remote manipulation section is permitted regardless of the display mode. The mis-manipulation to the remote manipulation section can be thus prevented certainly.

The manipulation intention expression-use finger state specification section may include a finger shape recognition section which recognizes a shape of a finger of a hand which opposes the remote manipulation area based on an image of the hand captured by the hand image capture section. When the recognized finger shape is a predetermined finger shape for the manipulation intention expression use, the manipulation intention expression-use finger state may be specified. In such a configuration, the hand image captured by the hand image capture section can be used not only for the display of the indication position but also for the specification of the manipulation intention expression-use finger state. That is, a configuration is provided where the image capture section serves for more than one use. A useless additional element of the configuration can be eliminated, thus providing low costs.

The manipulation intention expression-use finger state specification may include a finger number specification section to specify the number of fingers when the fingers extended approximately parallel with the remote manipulation area are recognized by the finger shape recognition section. In cases that the specified number of fingers in the state to be extended approximately parallel with the remote manipulation area is a predetermined number for the manipulation intention expression use, the present finger state may be specified as the manipulation intention expression-use finger state. Counting the fingers in the state to be extended can be easily executed by image analysis with few errors in the counting. Moreover, the state where the finger is extended is a finger state which can be directly used for manipulation. The manipulator can start the manipulation with the present manipulation intention expression-use finger state, thus providing the excellent manipulability.

The manipulation intention expression-use finger state specification section may include a manipulation number specification section, which specifies the number of inputs due to press manipulations, which are made to different positions in the remote manipulation area and accepted by the input acceptance section during a predetermined period. When the number of inputs specified during the predetermined period is the number for the manipulation intention expression use, the present finger state may be specified as the manipulation intention expression-use finger state. In such a configuration, the manipulation intention expression-use finger state can be specified easily from the predetermined number of touch manipulations by the user.

The number of fingers for the above manipulation intention expression use may be defined as a single finger. The one-finger state has a simple hand shape, facilitating the process which specifies the one-finger state. Moreover, there is a configuration where an input to the remote manipulation section is permitted only when a manipulation intention expression-use finger state is specified. That is, there is a configuration where an input to the remote manipulation section cannot be allowed when the present finger state is not a manipulation intention expression-use finger state. In such a configuration, it is desirable to define a simplest and intelligible finger state as a manipulation intention expression-use finger state. In this case, it is desirably that the one-finger state having the smallest number of fingers is defined as a manipulation intention expression-use finger state.

The number of fingers for the above manipulation intention expression use may be four, three (desirably), or two (more desirably). The two-finger state also has a comparatively simple hand shape The process which specifies a manipulation intention expression-use finger state thereby becomes easy. Further, each of the three-finger state and the four-finger state is also a comparatively simple finger state. In addition, those finger states do not have the shape of the hand which the user configures by chance, thus also executing prevention of the mis-manipulation certainly.

The manipulation intention expression-use finger state specification may include a finger kind specification section to specify a kind of a finger when the finger extended approximately parallel with the remote manipulation area is recognized by the finger shape recognition section. In cases that the specified kind of the finger in the state to be extended approximately parallel with the remote manipulation area is a predetermined kind of a finger for the manipulation intention expression use, the present finger state is specified as the manipulation intention expression-use finger state. In addition, the hand shape in which only a specific finger is extended does not have the shape of the hand which the user configures by chance, thus also executing prevention of the mis-manipulation certainly. Moreover, the state where the finger is extended is a finger state which can be directly used for manipulation. The manipulator can start the manipulation with the present manipulation intention expression-use finger state, thus providing the excellent manipulability.

The finger kind for the above manipulation intention expression use can be the index finger alone. The one-finger state of the index finger has a simple hand shape, facilitating the process which specifies the one-finger state. Moreover, the index finger is mostly used for the manipulation, thus being convenient in starting the manipulation as it is.

The finger kind for the above manipulation intention expression use can be the middle finger alone. The one-finger state of the middle finger has a simple hand shape, facilitating the process which specifies the one-finger state. Moreover, the middle finger has a characteristic of the longest finger, thereby making the recognition of the kind easy. Moreover, the middle finger is used for the manipulation, thus being convenient in starting the manipulation as it is.

The finger kind for the above manipulation intention expression use can be only the two fingers of the index finger and the middle finger. The two-finger state of the index finger and middle finger has a simple hand shape, facilitating the process which specifies the two-finger state. Moreover, the middle finger which is the longest finger is contained in the two-finger state, thus making the recognition of the kind easy. Moreover, both the fingers are used for the manipulation, thus being convenient in starting the manipulation as it is.

The position indication image display section may generate a real finger image, which allows at least the specification of the outline of the finger of the hand, based on the image of the hand captured by the hand image capture section, and display the generated real finger image as the above-mentioned position indication image. The position of the hand can be grasped from the outline of the hand on the display window; thus, it is easy to recognize the position and manipulability becomes easier.

The position indication image display section may display as a position indication image either a false finger image which allows at least the specification of the direction of an extended finger and the fingertip position, or a fingertip position image which allows at least the specification of the fingertip position of the finger. The position indication image uses an image, which is simplified to the extent that an indication position is recognized, thereby enabling the reduction of the processing load. As a third aspect of the disclosure, a display method may be provided in a display apparatus as follows. The display device includes a display section having a display window and a remote manipulation section having a remote manipulation area for executing manipulation to the display window remotely. The display method is for displaying a position indication image in the display apparatus. As a finger opposes in front of the remote manipulation section, the position indication image is displayed at an on-window position on the display window corresponding to a position of the finger in such a manner to be combined to or superimposed on an image of a background. The method comprises: a finger specification step of specifying a finger in a hand opposing in front of the remote manipulation section; a manipulation target finger assignment step of assigning a manipulation target finger, which is used or estimated to be used for a manipulation to the remote manipulation section, from the specified finger; a display step of displaying the position indication image indicating an indication position of the specified finger in such a manner to be combined to or superimposed on an image of a background on the display window; and a position indication image highlight step of executing a highlight display of a position indication image corresponding to the assigned manipulation target finger among the displayed position indication images so as to relatively highlight more in comparison with a position indication image corresponding to a finger different from the manipulation target finger.

According to the above-mentioned configuration, even when all of many fingers, which oppose in front of the remote manipulation area, are displayed on the display window, a position indication image corresponding to a position of a manipulation target finger is specified according to a predetermined method and a predetermined rule. The specified position indication image is displayed in highlight rather than another finger. Thereby, the user can recognize easily from the display window the finger which should be used for the manipulation. Moreover, the correspondence relation between a finger presently displayed and an actual finger can be easily recognized as long as the user understands at least how to determine a manipulation target finger. Therefore, the display of a position indication image suitable for the remote position indication can be attained.

Moreover, a fingertip specification step may be configured to specify a fingertip in the hand which opposes the remote manipulation area. In detail, the above finger specification step may be a fingertip specification step which specifies a fingertip from the hand which opposes the remote manipulation area; it is a step which specifies the finger in a manner to specify the fingertip. In this case, the position indication image highlight display step may be a display step which is premised to display a position indication image on the position corresponding to the specified fingertip in a manner to be combined to or superimposed on a background image on the display window, thereby executing the above highlight display.

It is noted that a fingertip may be defined as a predetermined region in the side of the tip of a finger (for example, up to the first joint), or a specific position included in the region (for example, a gravity center of the region from the fingertip to the first joint).

In addition, the manipulation target finger assignment step may assign one finger to a manipulation target finger. When one finger is assigned, it is easy to clearly recognize the manipulation target finger, and it is suitable for the application to the remote manipulation section to which a touch manipulation including a push manipulation is made. In addition, the one finger state has a very simple hand shape, thus, facilitating each processing.

In addition, the manipulation target finger assignment step may assign two or three fingers to a manipulation target finger. When two or three fingers are assigned, it is suitable for the application to the remote manipulation section to which a pulling manipulation or a rotation manipulation is made.

Moreover, in the position indication image highlight display step, a finger different from the manipulation indication target finger is not made non-display. The correspondence relation between the displayed manipulation target finger and the actual manipulation target finger can be grasped while referring to the display state of the other fingers.

Moreover, an assignment finger information acquisition step may be configured which acquires finger shape information concerning a shape of a finger specified by the finger specification step as assignment finger information. In such a case, in the manipulation target finger assignment step, based on the acquired finger shape information, among the fingers specified by the finger specification step, a finger having the finger shape information which is most suitable for a predetermined selection condition concerning the shape of the finger may be preferentially assigned as a manipulation target finger. When only one manipulation target finger is specified, the finger which is most suitable for selection condition can be assigned as a manipulation target finger.

Under such a configuration, a finger of a predetermined kind is specified or estimated from the information on the shape of a finger, and then assigned to the manipulation target finger. There is a difference in shape between respective kinds of fingers, thereby enabling the specification or estimation of a finger. It also becomes possibly to specify or estimate the index finger or middle finger which is easy to use for position indication.

In detail, the assignment finger information acquisition step may be configured to acquire, as finger shape information, finger length information reflecting length relation of the fingers specified by the finger specification step in the direction of the remote manipulation area. In such a case, in the manipulation target finger assignment step, based on the acquired finger length information, among the fingers specified by the finger specification step, a finger having the finger length information which is most suitable for a predetermined selection condition concerning the finger length may be preferentially assigned as a manipulation target finger. Under such a configuration, the finger length relation becomes clear. From the comparison of the length, a predetermined kind of finger is specified or estimated and then assigned to the manipulation target finger. For example, the middle finger which is easy to use for position indication can be specified as a finger, which is specified or estimated as being longest. If whether a manipulation hand is right or left is determined, the index finger can be specified as a finger adjoining on the corresponding side of a finger specified or estimated as the longest finger. Moreover, there is generally a high possibility that the finger appearing longest is used for manipulation; thus, a finger which appears not longest and extended halfway is estimated as a finger which the user does not have an intention to use for manipulation; such a finger can be eliminated certainly.

Further, the assignment finger information acquisition step may be configured to acquire, as finger shape information, finger width information reflecting width relation of the fingers specified by the finger specification step in the direction of the remote manipulation area. In such a case, in the manipulation target finger assignment step, the manipulation target finger is assigned, among the fingers specified in the finger specification step, preferentially to a finger most suitable for the predetermined selection condition about the finger width information based on the acquired finger width information. Under such a configuration, the finger width (thickness) relation becomes clear. From the comparison of the width, a predetermined kind of finger is specified or estimated and then assigned to the manipulation target finger.

Moreover, an assignment finger information acquisition step may be configured to acquire, as assignment finger information, position relation information concerning position relation among the fingers specified by the finger specification step in a remote manipulation area direction (the direction where a remote manipulation area spreads, i.e., the direction perpendicular to the normal of the remote manipulation area). In such a case, in the manipulation target finger assignment step, based on the acquired position relation information, the manipulation target finger may be assigned, among the fingers specified by the finger specification step, preferentially to a finger having the position relation information most suitable for a predetermined selection condition about the position relation. When only one manipulation target finger is specified, the finger which is most suitable for selection condition can be assigned as a manipulation target finger.

Under such a configuration, a finger of a predetermined kind may be specified or estimated, for instance, from the position information of the specified several fingers on the remote manipulation area direction, and then assigned to the manipulation target finger. The position relation of respective fingers is determined for every kind; thus, a finger can be specified using it. For example, suppose the index finger easily used for position indication. After eliminating the thumb from the finger shape etc., the index finger can be specified as a finger located in the rightmost when the hand to manipulate is a left hand. When the hand to manipulate is a right hand, it can be specified as leftmost finger. Once the index finger can be specified, the finger which adjoins it can be also specified as the middle finger. Moreover, under such a configuration, a manipulation target finger can be selected according to the position relation of fingers; thus, it is easy for the user to understand which finger is selected.

In detail, in the assignment finger information acquisition step, the fingertip specified by the fingertip specification step may be projected in the direction opposing the remote manipulation section. One axis may be designated as a predetermined position on the projection plane to thereby define the one-dimensional coordinate system. The coordinate value in the coordinate system of the projected fingertip may be specified. The axis coordinate information reflecting the position coordinate may be acquired as position relation information. In such a case, in the manipulation target finger assignment step, based on the acquired axis coordinate information, among the fingers specified by the finger specification step, a finger most suitable for a predetermined selection condition concerning the axis coordinate information may be preferentially assigned as a manipulation target finger. In such a configuration, only using the coordinate where each fingertip is located in the above one-dimensional coordinate system, a manipulation target finger can be specified simply. Herein, for instance, an axis may be defined as a line segment which goes from a region in which the manipulation target finger is located most easily to a region where the manipulation target finger is located most hard. Otherwise, it can be defined as a line segment going reversely.

In the assignment finger information acquisition step, the fingertip specified by the fingertip specification step may be projected in the direction opposing the remote manipulation section; the distance information reflecting the distance between the reference region designated in a predetermined region on the projection plane and the projected fingertip may be acquired as position relation information. In such a case, in the manipulation target finger assignment step, based on the acquired distance information, among the fingers specified by the finger specification step, a finger most suitable for a predetermined selection condition concerning the distance information may be preferentially assigned as the manipulation target finger. According to this configuration, the manipulation target finger can be simply specified only with the computation of the distance with the reference region. The reference region in this case can be defined as a region in which a manipulation target finger is located most often in the remote manipulation area, or as a region reverse to the foregoing region, for example.

Moreover, an assignment finger information acquisition step may be configured which acquires, as assignment finger information, approach distance relation information reflecting an approach distance relation to the remote manipulation area among the fingers specified by the finger specification step. In such a case, in the manipulation target finger assignment step, a finger most suitable for a predetermined selection condition concerning the approach distance information may be preferentially assigned as the manipulation target finger. Under such a configuration, it becomes possible to specify the manipulation target finger from the position relation in the approach direction to the remote manipulation area of the two or more specified fingers. The manipulation to the remote manipulation area is accompanied by the contact by the fingertip of the hand. The finger of the fingertip most closest to the remote manipulation area has the highest possibility of being a finger for position indication. In the manipulation target finger assignment step, based on the acquired approach distance information, among the fingers specified by the finger specification step, the finger of the fingertip closer to the remote manipulation area may be assigned more preferentially to the manipulation target finger. In such a configuration, the finger most suitable for position indication can be assigned to the manipulation target finger.

Moreover, the assignment finger information acquisition step may be configured to acquire a brightness of an image of a hand captured by the image capture section as approach distance information. In such a case, in the manipulation target finger assignment step, a finger most suitable for a predetermined selection condition concerning the brightness may be preferentially assigned as the manipulation target finger. In order to realize the above configuration, an image capture step may be needed where while the light is radiated from a light source towards a hand approaching the remote manipulation area, the hand is image-captured from the side of the rear face of the manipulation area in a manner to capture the reflection light. The image capture section captures the reflection light from the hand which manipulates the remote manipulation area to thereby capture an image; thus, the finger most closest to the remote manipulation area appears in higher brightness. The approach distance information can be easily acquired using the brightness. A section or process to measure an approach distance actually can be omissible. The finger of the fingertip most closest to the remote manipulation area has the highest possibility of being a finger for position indication. In the manipulation target finger assignment step, the finger of the fingertip having the highest brightness among the fingers specified by the finger specification step may be assigned preferentially to the manipulation target finger.

Incidentally, each of the above assignment finger information acquisition steps may be configured to acquire assignment finger information based on the capture image by the image capture step. According to this configuration, the finger assignment information can be easily acquired using the information acquired from the capture image. In order to realize the above configuration, an image capture step may be needed where while the light is radiated from a light source towards a hand approaching the remote manipulation area, the hand is image-captured from the side of the rear face of the manipulation area in a manner to capture the reflection light

The image capture step may be provided where while the light is radiated from a light source towards a hand approaching the remote manipulation area, the hand is image-captured from the side of the rear face of the manipulation area in a manner to capture the reflection light. In such a case, the finger specification step can be configured to specify a finger from the image of the image-captured hand. Furthermore, the above fingertip specification step can be configured to specify a fingertip from the image of the image-captured hand. Furthermore, the display step which displays the position indication image can be a step to display a position indication image generated based on the image of the image-captured hand. Such a configuration enables the specification of a finger, the specification of a fingertip, the specification of a manipulation target finger, and the position indication display, using the capture image of a single image capture section such as a camera. The above configuration can be simple compared with the configuration including sections respectively dedicated for the above specifications or the like.

Incidentally, the remote manipulation section may be configured to be a touch manipulation section, such as a touch panel, in which a remote manipulation area is a touch manipulation area and detects presence or absence of a touch manipulation made to the touch manipulation area. In such a case, in the manipulation target finger assignment step, the finger which executed touch manipulation to the touch manipulation area among the fingers specified by the finger specification step may be assigned to the manipulation target finger. According to this configuration, after the position indication is actually made, the finger used for that position indication is specified as the manipulation target finger. A usual manipulator has a tendency to use a fixed finger as the manipulation target finger; thus, the manipulation target finger can be defined correctly and displayed in highlight. Moreover, the finger having executed the touch manipulation is displayed in highlight; thus, this touch manipulation triggers the clear recognition of the correspondence relation between multiple fingers displayed on the display window and actually fingers.

In addition, when the remote manipulation section is touched by mistake and touch manipulation has been carried out, the manipulation can be made not to be reflected on an input. Furthermore, it can be made not to be reflected on the highlight display. In detail, in the manipulation target finger assignment step, when there is a touch manipulation exceeding a predetermined press manipulation time, the finger which executed the touch manipulation may be assigned to the manipulation target finger. Further, in the manipulation target finger assignment step, when the first-time touch manipulation is a touch manipulation exceeding the predetermined press manipulation force, the finger which executed the touch manipulation may be assigned to the manipulation target finger. Under such a configuration, only a manipulaton with a load exceeding a fixed load can be effective; thus, a mis-manipulation can be prevented.

Incidentally, the position indication image highlight display step may be configured to execute the highlight display in a manner to change a highlight level step by step in a predetermined time. That is, during a period from starting a highlight display to completing the highlight display, a display may undergo more than one intermediate change state which is different from the state of starting the highlight display and the state of completing the highlight display. In such a configuration, since a change process of the highlight display is displayed, it is easy to recognize the correspondence relation between the finger (especially manipulation target finger) currently displayed and an actual finger by seeing the change process.

In addition, in the position indication image highlight display step, at the time of starting the highlight display, the position indication image corresponding to the manipulation target finger and the position indication image corresponding to the finger different from the finger for position indication are displayed in highlight in the same highlight level (highlight degree). As the time elapses since the time of starting the highlight display, the highlight level of the position indication image corresponding to the manipulation target finger may increase step by step. In this configuration, the highlight level of the position indication image corresponding to the manipulation target finger increases gradually (relatively). If the highlight level suddenly changes to that at the time of completing the highlight display, it becomes puzzled immediately thereafter to recognize which finger the manipulation target finger displayed in highlight actually corresponds to. Such puzzlement can be prevented when a highlight display is made to proceed gradually.

Thus, from the viewpoint of importance of the state prior to the highlight display, the position indication image highlight display step may be configured as follows. After a predetermined time elapses since the manipulation target finger is assigned by the manipulation target finger assignment step, the relative highlight display is started. It is noted, in the above configuration in which the highlight level is gradually increased, the change process over time can be visible. The position indication image highlight display step may be configured to start the relative highlight display along with the assignment of the manipulation target finger by the manipulation target finger assignment step.

A hand image capture step may be configured to capture an image of a hand which opposes the remote manipulation area. In such a case, the finger specification step may be configured to specify the finger of the hand which opposes the remote manipulation area based on the image of the image-captured hand. In addition, in this case, in the position indication image highlight display step, a real finger image to allow the specification of at least the outline of the specified finger of the hand may be generated based on the captured image of the hand, and the generated real finger image may be displayed as the above-mentioned position indication image. Since the outline of the actual hand is displayed on the manipulation window, the position of the hand can be recognized from the outline. Since it is an outline of the actual hand, it is easy to recognize a position, making the manipulation easier.

Further, the position indication image highlight display step may be configured to display as the position indication image either the false finger image which allows at least the specification of the direction of an extended finger and the fingertip position, or a fingertip position image which allows at least the specification of the fingertip position of the finger. The position indication image uses an image, which is simplified to the extent that an indication position is recognized, thereby enabling the reduction of the processing load.

Further, the highlight display may be made to the outline line of the position indication image. With the outline line highlighted, the indication position of a specific finger becomes more intelligible.

In addition, the highlight display may be made by changing the contrasting density of the display color of the position indication image, by changing the shape of the position indication image, by changing the transmittance degree of the position indication image, or by flashing the position indication image. By executing a highlight display by those simple image processes, a processing load is reducible. Moreover, those highlight displays can also highlight a specific finger sufficiently.

By the way, the finger which is used or estimated to be used for the manipulation to the remote manipulation section is assigned to the manipulation target finger. The position indication image displayed in correspondence with the assigned manipulation target finger is highlighted relatively, rather than the position indication image displayed in correspondence with other fingers. In this case, it is better in the aspect of manipulability to use constantly a fixed finger as the manipulation target finger. That is, it is desirable that the identical finger is continuously assigned to the manipulation target finger.

To achieve this, the display method may be configured to include a manipulation target finger trace step in which after the manipulation target finger is assigned by the manipulation target finger assignment step, the movement of the finger assigned to the manipulation target finger may be traced. In the manipulation target finger assignment step, based on the trace result by the manipulation target finger trace step, the same finger as the finger, which was assigned to the manipulation target finger, may be continuously assigned to the manipulation target finger. According to this configuration, since the movement of the finger assigned to the manipulation target finger is traced, the same finger can be assigned to the manipulation target finger. As compared with the case where the manipulation target finger is changed along with the movement of a finger, it is easy to manipulate it.

Moreover, the finger specification step may specify in order with predetermined time intervals a finger of a hand existing within a predetermined finger specification possible region in front of the remote manipulation section. For example, when specifying a finger from an image of a hand captured by the image capture section, the finger specification step specifies a finger from the hand image appearing in a frame for every moving image frame acquired one by one by the image capture every predetermined time interval. In such a case, a finger trace step may be configured to acquire the position information for every finger specified one by one by the finger specification step, and store the acquired position information in the predetermined trace information storage section as trace information, thereby tracing the movement of the finger specified one by one by the finger specification step for every finger. The manipulation target finger assignment step can thereby trace the movement of the finger assigned to the manipulation target finger based on the trace information of the manipulation target finger among the trace information for every finger stored by the finger trace step. This configuration can respond to any finger which is assigned to the manipulation target finger since the movement of all the fingers specified by the finger specification step is traced. Moreover, the movement of the manipulation target finger occurs in conjunction with the other fingers. If the trace information of not only the manipulation target finger but also other fingers are collected, using of the collected information for tracing the manipulation target finger can provide a more accurate trace.

In addition, the finger trace step may include a next position estimate step which computes, with respect to each finger under trace of which the trace information is stored in every finger specification step, a next position estimated to be located in the next finger specification step based on the corresponding trace information. In such a case, the manipulation target finger assignment step may execute as follows: specifying a pair having a position relation which satisfies a predetermined reference condition, the position relation being between the next position of each finger under trace computed in the next position estimate step and the actual position of each finger actually specified in the next finger specification step; also determining that the finger under trace, which is one finger of the pair, and the finger actually specified in the finger specification step are identical to each other and determining that the finger under trace is moved to a position of the actually specified finger; and continuing the movement trace of the finger. In detail, the position information of the finger, which is determined to be identical and actually specified, is stored as newest position information of the finger under trace; in such a manner, the trace information stored in the trace information storage section is updated, thereby continuing the movement trace of the finger. According to this configuration, the trace information is stored; thereby, the next movement destination of the finger under trace can be estimated from the past trace information. Furthermore, the position relation between the estimated position and the position where the finger is actually specified is compared. When both the positions are in the position relation that both are close to each other within a predetermined distance, it is determined that the finger under trace is moved as estimated. That is, the estimation of the movement destination under trace is made by using the past trace information, thereby providing high accuracy. Furthermore, the movement trace of the finger is made using the estimated result, thereby providing high trace accuracy.

The trace information can include each corresponding position information on the finger under trace specified by the multiple-time finger specification steps. In such a case, the next position estimate step may be configured to compute the next position of the finger under trace based on each position information. Such a configuration may estimate the next position from the positions of the past multiple times of the finger under trace, thus providing high estimate accuracy.

Further suppose a case that the trace information includes respective corresponding position information on the finger under trace specified by the finger specification steps of the previous time and the time before previous. In such a case, the next position estimate step can compute the next position of the finger under trace based on the position information of both the times. In contrast, suppose a case that the trace information includes the corresponding position information on the finger under trace specified by the finger specification step of the previous time but does not include the corresponding position information on the finger under trace specified by the finger specification step of the time before previous. In such a case, the next position estimate step can compute the next position of the finger under trace based on the position information specified by the finger specification step of the previous time, and a position of an edge portion of the finger specification possible range adjacent to a position indicated by the just forgoing position information. When the positions of the finger under trace of the previous time and the time before previous are used, using those, the next position can be estimated with a high accuracy. In contrast, when the position of the finger under trace of the previous time is only known, i.e., when the finger under trace is a finger which appeared newly in the previous time, only the one position is known; thus, the next position cannot be estimated in high accuracy. However, according to the above configuration, the position of the edge portion of the finger specification possible region adjacent to the previous position is used instead of the position of the time before previous. In such a case, the finger which just appeared newly at the previous time has a high possibility to have appeared from the closest edge portion in the finger specification possible range. The edge portion is used as a position before previous; even if there is no position before previous, the next position can be estimated in sufficient accuracy.

In the finger trace step, suppose a case that there is a finger under trace which does not satisfy the reference condition with the actually specified finger by the finger specification step. In such a case, such a finger is switched, in recognition, to a finger under trace impossible, and information on the finger at the time when the recognition is switched to the finger under trace impossible is stored as trace recovery determination information in a predetermined trace recovery determination information storage section In this case, the manipulation target finger assignment step may further execute as follows. When there is a finger actually specified by the finger specification step which does not satisfy the reference condition with the finger under trace, it is determined whether the actually specified finger is the same as the finger, which was defined as under trace impossible in the past, based on the trace recovery determination information stored in the trace recovery determination information storage section. When it is determined that it is the same, the finger, which was defined as under trace impossible and corresponds to the trace recovery determination information, is recognized as being again appearing at the position of the finger actually specified; thus, the movement trace of the finger is re-started. In contrast, when it is determined that it is not the same, the finger actually specified is recognized as newly appearing; thus, the movement trace of the finger is started newly. In detail, when it is determined that it is the same, the position information on the actually specified finger is stored in the trace information storage section as the newest position information on the finger, which was defined as under trace impossible. In such a manner, the trace information stored in the trace information storage section is updated; thereby, the movement trace of the finger is re-started. In contrast, when it is determined that it is not the same, the position information on the finger of the new appearance is stored as the trace information in the trace information storage section; thereby, the movement trace of the finger is newly started. The manipulation target finger is no longer specified when it moves out of the finger specification possible range in the finger specification step. It is undesirable that just because the manipulation target finger becomes not-specified, another finger other than it is assigned to the manipulation target finger. For example, suppose that the index finger used as the manipulation target finger is moved outside of the specification possible range. It is not so much desirable to change the manipulation target finger to a medicinal finger just because the medicinal finger is specified. It is better not to assign the manipulation target finger until the index finger is specified again. That is, it is easy to manipulate based on a manner to always assign the fixed finger to the manipulation target finger. In the above configuration, when the finger under trace is lost (trace impossible), the state at the time of losing is stored as the trace recovery determination information. When a finger which was not traced is newly specified, it is determined whether the newly specified finger is a finger which was lost in the past based on the accumulated trace recovery determination information. Thus, when a finger, which was once lost, appears again, this finger can be recognized as the same finger. In cases that a finger, which was lost, is the manipulation target finger, when the finger appears again, the finger can be assigned again to the manipulation target finger immediately, and the movement trace can be re-started as it is.

The trace information in this case can include at least the newest position information on the finger specified by the finger specification step. The trace recovery determination information also includes the position information of the last time before the corresponding finger was recognized as being under trace impossible. According to this configuration, comparison is made between the position just before being lost (trace impossible) and the position of appearing again in the finger trace step, and a pair having mutually close position relation is determined to be an identical finger. That is, the position just before being lost is stored and the position of re-appearing is stored; thus, only such a storage procedure enables the easy determination as to whether the newly specified finger is a re-appearing finger.

In the finger trace step, suppose a case that there is a finger actually specified by the finger specification step which does not satisfy the reference condition with the finger under trace, and there are several fingers on which the trace recovery determination information is stored in the trace recovery determination information storage section. In such a case, based on the position information on the actually specified finger, and the position information of the last time of each of the fingers under trace impossible included in the trace recovery determination information, it can be determined that the actually specified finger is identical to the finger under trace impossible while corresponding to the trace recovery determination information including the position information which indicates the position nearest to the actually specified finger. According to this configuration, even if there are several fingers under trace impossible, by comparing the position of the newly specified finger with the positions last specified in the respective fingers under trace impossible, the closest finger under trace impossible is determined to be identical to the newly specified finger. The finger which was lost has a high possibility of appearing from the same position as the position at which the finger was lost. By using this, it may be accurately specified whether the newly specified finger is a finger appearing newly, or a finger which was lost and is re-appearing.

In the finger trace step, suppose a case that there is a finger actually specified by the finger specification step which does not satisfy the reference condition with the finger under trace. Herein, a distance is defined as being between positions respectively indicated by the position information on the actually specified finger and the position information of the last time of the finger under trace impossible which is contained in the trace recovery determination information. When the above distance is less than a predetermined reference distance, it may be permitted to recognize that the actually specified finger and the finger under trace impossible corresponding to the trace recovery determination information is identical to each other. In contrast, when it is not less than the reference distance, it may be prohibited to recognize that the actually specified finger and the finger under trace impossible corresponding to the trace recovery determination information is identical to each other. When the last specified position of the finger in the lost (under trace impossible) is compared with the position of the newly specified finger, there is a possibility that both the fingers are different in case that the distance between them is far away. According to the above configuration, it may be accurately specified whether the newly specified finger is a finger appearing newly, or a finger which was lost and is re-appearing.

In the finger trace step, suppose a case that there is a finger under trace which does not satisfy the reference condition with the actually specified finger by the finger specification step and this finger under trace is switched in recognition from under trace to under trace impossible. In such a case, along with information concerning the finger when switched, in the recognition, to under trace impossible, a trace impossible recognition order may be stored as trace recovery determination information in the trace recovery determination information storage section. The trace impossible recognition order enables the specification of the anteroposterior relation with another finger under trace impossible in respect of the trace impossible recognition time. In this case, in the finger trace step, further suppose that there is a finger actually specified by the finger specification step which does not satisfy the reference condition with the finger under trace, and there are several fingers on which the trace recovery determination information is stored in the trace recovery determination information storage section. In such a case, based on the position information on the actually specified finger, and the position information of the last time of each of the fingers under trace impossible included in the trace recovery determination information, the trace recovery determination information including the position information which indicates the position nearest to the actually specified finger can be specified. Herein, when there is specified one piece of trace recovery determination information including the position information which indicates the position nearest to the actually specified finger, it is determined that the finger under trace impossible corresponding to the foregoing trace recovery determination information is identical to the actually specified finger. In contrast, when there are more than one piece of trace recovery determination information including the position information which indicates the position nearest to the actually specified finger, (when the positions indicated by the position information contained in the several pieces of trace recovery determination information have position information satisfying a predetermined proximity condition), by referring to the trace impossible recognition order included in the trace recovery determination information, it is determined that the actually specified finger is identical to the finger under trace impossible corresponding to the newest in the trace impossible recognition time among the several pieces of trace recovery determination information. From considering the row of the fingers of a human hand, when several fingers are lost (under trace impossible) at the approximately similar positions, there is a high possibility that the fingers re-appear in the order from the finger which was lost at the last. By providing the above configuration, even if there are several fingers under lost, it can be accurately specified which finger the newly specified finger accords with.

In addition, the trace recovery determination information can be defined as the trace information on the finger stored in the trace information storage section when the foregoing finger is recognized as being trace impossible. In such a configuration, when a finger under trace was lost (trace impossible), the trace information on the finger stored in the trace information storage section is stored only as it is as the trace recovery determination information. When the trace information storage section and the trace recovery determination information storage section are identical to each other, the stored trace information can remain as it it.

In the finger trace step, suppose a case that a finger is specified by the finger specification step and the specified finger is recognized as newly appearing. In such a case, new identification information may be assigned to the newly appearing finger and, in correspondence to the identification information, the trace information on each finger is stored in the trace information storage section. Since the identification information is thereby given to the finger specified by the finger specification step, the information management can be easily made to the fingers.

In addition, in the configuration having the trace recovery determination information storage section, the finger trace step may be configured as follows. When the finger under trace assigned with the identification information is switched in recognition from under trace to under trace impossible, the trace recovery determination information may be stored in correspondence with the identification information of the foregoing finger in the trace recovery determination information storage section. In this case, even if the finger under trace is lost (trace impossible), the identification information of the foregoing finger is kept stored; thus, after becoming lost, the information on the foregoing finger can be easily managed.

In the finger trace step, when the finger is specified by the finger specification step, based on the trace information stored in the trace information storage section and, furthermore, the trace recovery determination information further stored in the trace recovery determination information storage section, it is determined whether the finger actually specified by the finger specification step is the finger under trace, and, further, the finger under trace impossible for every finger assigned with the identification information. The determination result may be stored as a trace status in correspondence with the identification information in the predetermined trace status storage section. According to this configuration, the trace status (under trace, lost, etc.) of the finger to which the identification information is attached can be specified easily.

In the finger trace step, when the finger, which was specified by the finger specification step, is not specified, the identification information and the variety of information stored in correspondence with the identification information are erased and initialized. While the various information of the finger specified in order is updated in the storage in correspondence with the identification information, at the time when the finger is not specified, all the information can be initialized.

In addition, a display apparatus may be configured to include sections to realize the steps of the above display method. (The steps include the finger specification step, the manipulation target finger assignment step, the fingertip specification step, the position indication image highlight display step, and the assignment finger information acquisition step.). (The sections include a finger specification section, a manipulation target finger specification section, a fingertip specification section, a position indication image highlight display section, and an assignment finger information acquisition section.). Thereby, in the display apparatus, the above effect is realizable.

In addition, a manipulation input apparatus may be configured to include the above display apparatus including a display section having a display window and remote manipulation section having a remote manipulation area. In detail, the display window may be configured to be a display window for executing an operation of a device etc. The remote manipulation area may be configured to be a manipulation area provided at a position separated from the display window, the remote manipulation area for remotely executing a manipulation input in the display window. An input acceptance section is included to accept an input corresponding to a press manipulation position based on a press manipulation to the remote manipulation area. A hand image capture section may be included to capture an image of a hand that opposes the remote manipulation area. A position indication image highlight display section may be included to display a position indication image, which is generated based on the captured image of the hand, at a position on the display window, the position being indicated by the hand. The above can realize the manipulation input apparatus for remote manipulation use with the effect of the above display method.

In addition, the manipulation input apparatus can be a vehicular manipulation input apparatus. In detail, the above device may be an in-vehicle device. The display window may be arranged closer to the vehicle front than a driver so as to be seen by the driver. The remote manipulation area may be arranged closer to a driver than the display window. The display is made to allow the easy understanding of a manipulation target finger, thereby providing easy manipulation. In particular, this can contribute to simplification of the driver's manipulation.

In addition, the first aspect and second aspect may be provided as a broader concept. That is, a vehicular manipulation input apparatus may be provided as follows. A display section may be configured to have a display window for executing an operation of a device in the vehicle. A remote manipulation section may be provided at a position separated from the display window, the remote manipulation section having a remote manipulation area for remotely executing the manipulation input in the display window. An input acceptance section may be configured to accept an input corresponding to a press manipulation position based on a press manipulation to the remote manipulation area. A hand image capture section may be configured to capture an image of a hand that opposes the remote manipulation area. A position indication image display section may be configured to display a position indication image, which is generated based on the captured image of the hand, at a position on the display window, the position being indicated by the hand. A predetermined finger state specification section may be configured to specify whether a finger state of the hand opposing the remote manipulation area is a predetermined finger state. A display mode assignment section may be configured to execute a display mode switchover control of a display mode assigned to the position indication image display section. The display mode switchover control assigns the display mode with a display permission mode to permit a display of the position indication image when the predetermined finger state is specified, and assigns the display mode with a display prohibition mode to prohibit a display of the position indication image when the predetermined finger state is not specified.

In addition, as another aspect of the disclosure, the above can be provided as the following display method. That is, the method is used in a display apparatus having a display section with a display window, and a remote manipulation section with a remote manipulation area for executing manipulation to the display window remotely. The display method is for displaying a position indication image in the display apparatus. As a finger opposes in front of the remote manipulation section, the position indication image is displayed at an on-window position on the display window corresponding to a position of the finger in such a manner to be combined to or superimposed on an image of a background. The method includes: a predetermined finger state specification step to specify whether a finger state of the hand facing the remote manipulation area is a predetermined finger state; a step of assigning the display mode with a display permission mode to permit a display of the position indication image when the predetermined finger state is specified; and a step of assigning the display mode with a display prohibition mode to prohibit a display of the position indication image when the predetermined finger state is not specified.

Although particular embodiments of the invention have been described, it should be understood that these are not intended to limit the invention to the particular form disclosed, but on the contrary, the invention covers all modifications, equivalents, and alternatives falling within the scope of the present invention as defined by the appended claims.

### Explanation Of Signs

1 manipulation input apparatus
10 vehicular navigation apparatus
12 manipulation information input section (remote manipulation section) 12a manipulation panel
12b camera (hand image capture section or means)
12c light source
15 display device (display section or means, manipulation window display section or means)
15a touch panel
18 control circuit (input acceptance section or means, position indication image display section or means, predetermined finger state specification section or means, manipulation intention expression-use finger state specification section or means, simple manipulation-use finger state specification section or means, manipulation input control section or means, display mode assignment section or means, manipulator specification section or means, travel state specification section or means, position indication image highlight display section or means, finger specification section or means, manipulation target finger specification section or means, fingertip specification section or means, assignment finger information acquisition section or means, finger number specification section or means, hand shape recognition section or means, manipulation number specification section or means, display mode execution applicability information storage section or means).
18a image processing section
21 storage section
20 camera
30 vehicle velocity sensor (vehicle velocity detection section or means)
40 camera
41 and 42 camera
50 in-vehicle LAN
100 ECU
150 capture Image
200B main image
200I switch image (manipulation icon)
200H position indication image (hand image)
H approaching object (hand and finger)

## Claims

1. A method for displaying a position indication image in a display apparatus having a display section (15) with a display window, and a remote manipulation section (12, 12a) with a remote manipulation area for executing manipulation to the display window remotely,
the position indication image being displayed, when a finger opposes in front of the remote manipulation section, at an on-window position on the display window corresponding to a position of the finger in such a manner to be combined to or superimposed on an image of a background,
the method comprising:
a finger specification step (T1, T2) of specifying a finger in a hand opposing in front of the remote manipulation section;
a manipulation target finger assignment step (T3) of assigning, from the specified finger, a manipulation target finger, which is used or estimated to be used for a manipulation to the remote manipulation section;
a display step of displaying the position indication image indicating an indication position of the specified finger in such a manner to be combined to or superimposed on an image of a background on the display window; and
a position indication image highlight step (T4) of executing a highlight display of a position indication image corresponding to the assigned manipulation target finger among the displayed position indication image so as to relatively highlight more in comparison with a position indication image corresponding to a finger different from the manipulation target finger.

2. The method according to claim 1, wherein:
the finger specification step is a fingertip specification step (T2) of specifying a fingertip from the hand, and a step which specifies the finger in a manner to specify the fingertip.

3. The method according to claim 1 or claim 2, wherein
the manipulation target finger assignment step assigns one finger to the manipulation target finger.

4. The method according to claim 1 or claim 2, wherein
the manipulation target finger assignment step assigns two fingers or three fingers to the manipulation target finger.

5. The method according to any one of claims 1 to 4, further comprising:
an assignment finger information acquisition step (T2) of acquiring finger shape information concerning a shape of a finger specified by the finger specification step as assignment finger information,
the manipulation target finger assignment step assigning the manipulation target finger, among the finger specified by the finger specification step, preferentially to a finger having the finger shape information most suitable for a predetermined selection condition about the finger shape, based on the acquired finger shape information.

6. The method according to claim 5, wherein:
the assignment finger information acquisition step is acquiring, as the finger shape information, finger length information reflecting length relation among the finger specified by the finger specification step in the direction of the remote manipulation area; and
the manipulation target finger assignment step is assigning the manipulation target finger, among the finger specified by the finger specification step, preferentially to a finger having the finger shape information most suitable for a predetermined selection condition about the finger length information, based on the acquired finger length information.

7. The method according to claim 5, wherein:
the assignment finger information acquisition step is acquiring, as finger shape information, a finger width information reflecting width relation of the fingers specified by the finger specification step in the direction of the remote manipulation area; and
the manipulation target finger assignment step is assigning the manipulation target finger, among the finger specified by the finger specification step, preferentially to a finger having the finger shape information most suitable for a predetermined selection condition about the finger width information, based on the acquired finger width information.

8. The method according to claim any one of claims 1 to 4, further comprising:
an assignment finger information acquisition step (T2) of acquiring, as the assignment finger information, position relation information concerning a position relation in the direction of the remote manipulation area among fingers specified by the finger specification step,
the manipulation target finger assignment step assigning the manipulation target finger, among the finger specified by the finger specification step, preferentially to a finger having the position relation information most suitable for a predetermined selection condition about the position relation information, based on the acquired position relation information.

9. The method according to claim 8, wherein:
the finger specification step is a fingertip specification step (T2) of specifying a fingertip from the hand and a step which specifies the finger in a manner to specify the fingertip;
the assignment finger information acquisition step
projects the fingertip specified by the fingertip specification step in the direction opposing the remote manipulation section,
defines one axis at a predetermined position on a projection plane to define a one-dimensional coordinate system,
specifies a coordinate value of the projected fingertip in the coordinate system, and
acquires an axis coordinates information reflecting the coordinate value as the position relation information; and
the manipulation target finger assignment step is assigning the manipulation target finger, among the finger specified by the finger specification step, preferentially to a finger suitable for a predetermined selection condition about the axis coordinate information, based on the acquired axis coordinate information.

10. The method according to claim 8, wherein:
the finger specification step is a fingertip specification step (T2) of specifying a fingertip from the hand, and a step which specifies the finger in a manner to specify the fingertip;
the assignment finger information acquisition step
projects the fingertip specified by the fingertip specification step in the direction opposing the remote manipulation section, and
acquires, as the position relation information, distance information reflecting a distance between a reference region defined in a predetermined region on a projection plane and the projected fingertip; and
the manipulation target finger assignment step is assigning the manipulation target finger, among the finger specified by the finger specification step, preferentially to a finger suitable for a predetermined selection condition about the distance information, based on the acquired distance information.

11. The method according to any one of claims 1 to 4, further comprising:
an assignment finger information acquisition step of acquiring, as assignment finger information, approach distance relation information reflecting an approach distance relation to the remote manipulation area among the finger specified by the finger specification step,
the manipulation target finger assignment step assigning the manipulation target finger, among the finger specified by the finger specification step, preferentially to a finger having a fingertip closer to the remote manipulation area, based on the acquired approach distance information.

12. The method according to claim 11, further comprising:
an image capture step (T1) of radiating a light from a light source towards a hand approaching the remote manipulation area, and image-capturing, using an image capture section, a hand from a side of a rear face of the remote manipulation area in a manner to capture a reflection light from the hand,
the assignment finger information acquisition step acquiring a brightness of an image of a hand captured by the image capture section as the approach distance information,
the manipulation target finger assignment step assigning a finger of a fingertip having a highest brightness preferentially to the manipulation target finger among the finger specified by the finger specification step.

13. The method according to any one of claims 5 to 12, further comprising:
an image capture step (T1) of radiating a light from a light source towards a hand approaching the remote manipulation area, and image-capturing, using an image capture section, a hand from a side of a rear face of the remote manipulation area in a manner to capture a reflection light from the hand,
the assignment finger information acquisition step acquiring the assignment finger information based on a capture image by the image capture step.

14. The method according to any one of claims 1 to 13, further comprising:
an image capture step (T1) of radiating a light from a light source towards a hand approaching the remote manipulation area, and image-capturing, using an image capture section, a hand from a side of a rear face of the remote manipulation area in a manner to capture a reflection light from the hand,
the finger specification step specifying the finger from an image of the captured hand.

15. The method according to any one of claims 1 to 14, further comprising:
an image capture step of image-capturing, using an image capture section, a hand approaching the remote manipulation area, from a rear side of the remote manipulation area,
the display step displaying a position indication image generated based on the image of the captured hand.

16. The method according to any one of claims 1 to 4, wherein:
the remote manipulation section is a touch manipulation section (12a)
having a touch manipulation area being the remote manipulation area and
detecting presence or absence of a touch manipulation made to the touch manipulation area; and
the manipulation target finger assignment step assigns a finger which executed touch manipulation to the touch manipulation area among the finger specified by the finger specification step.

17. The method according to any one of claims 1 to 16, wherein
the position indication image highlight display step executes the highlight display in a manner to change a highlight level step by step during a predetermined time.

18. The method according to claim 17, wherein
the position indication image highlight display step executes the highlight display, in which:
at a time of starting the highlight display, the position indication image corresponding to the manipulation target finger and the position indication image corresponding to a finger different from the manipulation target finger are displayed in highlight with an identical highlight level; and
during a period starting from the time of starting the highlight display, as the period elapses, a relative highlight level of the position indication image corresponding to the manipulation target finger is increased step by step.

19. The method according to claim 17 or claim 18, wherein
the position indication image highlight display step starts the relative highlight display along with the assignment of the manipulation target finger by the manipulation target finger assignment step.

20. The method according to claim 17 or claim 18, wherein
the position indication image highlight display step starts the relative highlight display at a time when a predetermined time elapses since the manipulation target finger is assigned by the manipulation target finger assignment step.

21. The method according to any one of claims 1 to 20, further comprising:
a hand image capture step (T1) of capturing an image of a hand that opposes the remote manipulation area,
the finger specification step specifying a finger of a hand which opposes the remote manipulation area based on the image of the captured hand,
the position indication image highlight display step
generating a real finger image to allow a specification of at least an outline of a finger of the specified hand based on an image of the image-captured hand, and
displaying the generated real finger image as the position indication image.

22. The method according to any one of claims 1 to 20, wherein
the position indication image highlight display step displays as the position indication image one of a false finger image and a fingertip position image, the false finger image allowing a specification of at least a direction of an extended finger, the fingertip position image allowing a specification of at least a fingertip position of a finger.

23. The method according to any one of claims 1 to 22, wherein
the highlight display is applied to an outline line of the position indication image.

24. The method according to any one of claims 1 to 22, wherein
the highlight display is applied in a manner to change a display color of the position indication image.

25. The method according to any one of claims 1 to 22, wherein
the highlight display is applied in a manner to change a contrasting density of a display color of the position indication image.

26. The method according to any one of claims 1 to 22, wherein
the highlight display is applied in a manner to change a shape of the position indication image.

27. The method according to any one of claims 1 to 22, wherein
the highlight display is applied in a manner to change a transmittance degree of the position indication image.

28. The method according to any one of claims 1 to 22, wherein
the highlight display is applied in a manner to flash the position indication image.

29. The method according to any one of claims 1 to 28, further comprising:
a manipulation target finger trace step (R201 to R215) of tracing, after the manipulation target finger is assigned by the manipulation target finger assignment step, a movement of a finger assigned to the manipulation target finger,
the manipulation target finger assignment step continuously assigning a finger identical to a finger, which was assigned to the manipulation target finger based on a trace result by the manipulation target finger trace step.

30. The method according to claim 29,
the finger specification step specifying one by one with a predetermined time interval a finger of a hand existing within a predetermined finger specification possible range in front of the remote manipulation section,
the method further comprising:
a finger trace step (R201-R215) of
acquiring position information with respect to each finger specified one by one by the finger specification step and
storing as trace information the acquired position information in a predetermined trace information storage section to trace, with respect to the each finger, a movement of the each finger specified one by one by the finger specification step,
the manipulation target finger assignment step
specifying the trace information of the manipulation target finger from the trace information with respect to the each finger stored by the finger trace step, and
tracing a movement of a finger assigned to the manipulation target finger based on the trace information of the manipulation target finger.

31. The method according to claim 30, wherein:
the finger trace step includes a next position estimate step (R201 - R215) of computing a next position, where each finger under trace of which the trace information with respect to the each finger stored at each time of the finger specification step is estimated to be located at a next time of the finger specification step, based on the corresponding trace information;
the finger trace step specifies a pair of two fingers having a position relation which satisfies a predetermined reference condition, the position relation being between the next position of each finger under trace computed in the next position estimate step and an actual position of each finger actually specified at the next time of the finger specification step;
the finger trace step determines that a finger under trace, which is one of the two fingers of the pair, and a finger actually specified in the finger specification step are identical to each other; and
the finger trace step
determines that the finger under trace is moved to a position of a finger, which is determined to be identical and actually specified, and
continues a movement trace of the finger under trace.

32. The method according to claim 31, wherein:
the trace information is enabled to include each corresponding position information on the finger under trace specified at each of multiple times of the finger specification step; and
the next position estimate step computes the next position of the finger under trace based on each position information.

33. The method according to claim 32, wherein:
when the trace information contains position information on the finger under trace specified at a previous time of the finger specification step and position information on the finger under trace specified at a time before previous of the finger specification step,
the next position estimate step computes the next position of the finger under trace based on the position information at the previous time and the position information at the time before previous; and
when the trace information contains the position information on the finger under trace specified at the previous time of the finger specification step, but does not contain the information on the finger under trace specified at the time before previous by the finger specification step,
the next position estimate step computes the next position of the finger under trace based on the position information specified at the previous time of the finger specification step and a position of an edge portion of the finger specification possible range adjacent to a position indicated by the position information specified at the previous time.

34. The method according to any one of claims 31 to 33, wherein:
when there is a finger under trace which does not satisfy the reference condition with the actually specified finger by the finger specification step,
the finger trace step
makes a recognition switchover from the finger under trace to a finger under trace impossible, and
stores information on the finger under trace impossible at a time of the recognition switchover as trace recovery determination information in a predetermined trace recovery determination information storage section (18a);
when there is a finger, which is actually specified by the finger specification step and does not satisfy the reference condition with the finger under trace,
the finger trace step determines whether the actually specified finger is identical to a finger, which is recognized as under trace impossible in past based on the trace recovery determination information stored in the trace recovery determination information storage section;
when it is determined that it is identical,
the finger trace step
recognizes that the finger under trace impossible corresponding to the trace recovery determination information is a finger re-appearing at a position of the finger actually specified, and
re-starts a movement trace of the finger; and
when it is determined that it is not identical,
the finger trace step
recognizes that the finger actually specified is a finger newly appearing and
starts newly a movement trace of the finger.

35. The method according to claim 34, wherein:
the trace information includes at least newest position information on a finger specified by the finger specification step; and
the trace recovery determination information includes last position information at a last time before a corresponding finger is recognized as being under trace impossible.

36. The method according to claim 35, wherein:
when there is a finger, which is actually specified by the finger specification step and does not satisfy the reference condition with the finger under trace, and there are several fingers on which the trace recovery determination information is stored in the trace recovery determination information storage section,
the finger trace step determines that the actually specified finger is identical to a finger under trace impossible corresponding to the trace recovery determination information including the position information which indicates a position closest to the actually specified finger,
based on position information on the actually specified finger, and position information at a last time of each of the several fingers under trace impossible included in the trace recovery determination information.

37. The method according to claim 35 or claim 36, wherein
when there is a finger, which is actually specified by the finger specification step and does not satisfy the reference condition with the finger under trace, wherein a distance is defined as being between positions respectively indicated by the position information on the actually specified finger and the position information at the last time of the finger under trace impossible which is contained in the trace recovery determination information,
the finger trace step permits recognizing that the actually specified finger and the finger under trace impossible corresponding to the trace recovery determination information are identical to each other in cases that the distance is less than a predetermined reference distance,
whereas,
the finger trace step prohibits recognizing that the actually specified finger and the finger under trace impossible corresponding to the trace recovery determination information are identical to each other in cases that the distance is not less than the predetermined reference distance.

38. The method according to any one of claims 35 to claim 37, wherein:
when there is a finger under trace, which is recognized as under trace impossible by not satisfying the reference condition with the actually specified finger by the finger specification step,
the finger trace step stores a trace impossible recognition order as trace recovery determination information in the trace recovery determination information storage section,
the trace impossible recognition order enabling a specification of an anteroposterior relation with an other finger under trace impossible in respect of a trace impossible recognition time along with information on the finger at a time of being recognized as under trace impossible;
when there is a finger, which is actually specified by the finger specification step and does not satisfy the reference condition with the finger under trace, and the trace recovery determination information on several fingers is stored in the trace recovery determination information storage section,
the finger trace step specifies the trace recovery determination information including the position information which indicates a position closest to the actually specified finger,
based on position information on the actually specified finger, and position information at a last time of each of the several fingers under trace impossible included in the trace recovery determination information;
when one piece of the trace recovery determination information is specified,
the finger trace step determines that a finger under trace impossible corresponding to the one piece of the trace recovery determination information is identical to the actually specified finger;
when two pieces of the trace recovery determination information are specified,
the finger trace step
refers to the trace impossible recognition order included in the two pieces of the trace recovery determination information, and
determines that the actually specified finger is identical to a finger recognized as under trace impossible corresponding to a newest in the trace impossible recognition time among the two pieces of the trace recovery determination information.

39. The method according to any one of claims 35 to 38, wherein
the trace recovery determination information is the trace information on the finger stored in the trace information storage section when the finger is recognized as being trace impossible.

40. The method according to any one of claims 30 to 39, wherein
when a finger is specified by the finger specification step and the specified finger is recognized as a finger newly appearing,
the finger trace step
assigns new identification information to the newly appearing finger and
stores the trace information, in correspondence with the identification information, in the trace information storage section.

41. The method according to any one of claims 35 to 39, wherein:
the trace information includes at least newest position information on a finger specified by the finger specification step;
the trace recovery determination information includes last position information at a last time before a corresponding finger is recognized as being under trace impossible; and
when the finger under trace assigned with the identification information is recognized as a finger under trace impossible,
the finger trace step stores the trace recovery determination information in correspondence with the identification information in the trace recovery determination information storage section.

42. The method according to claim 41, wherein:
when a finger is specified by the finger specification step,
the finger trace step determines
whether the finger actually specified by the finger specification step is the finger under the trace, and
whether the finger actually specified by the finger specification step is the finger under trace impossible,
based on the trace information stored in the trace information storage section and, furthermore, the trace recovery determination information stored in the trace recovery determination information storage section; and
the finger trace step stores a determination result as a trace status in correspondence with the identification information in a predetermined trace status storage section.

43. The method according to any one of claims 40 to 42, wherein
when a finger, which was specified by the finger specification step, is not specified,
the identification information on the finger and various information stored in correspondence with the identification information are erased and initialized.

44. A display apparatus comprising:
a section to achieve each step of the display method according to any one of claims 1 to 43.

45. A manipulation input apparatus comprising:
the display apparatus according to claim 93, the display apparatus having the display section and the remote manipulation section, wherein the display window is for executing an operation of a device, wherein the remote manipulation area is provided at a position separated from the display window, the remote manipulation area for remotely executing a manipulation input in the display window;
an input acceptance section (18) configured to accept an input corresponding to a press manipulation position based on a press manipulation to the remote manipulation area;
a hand image capture section (12b) configured to capture an image of a hand that opposes the remote manipulation area; and
a position indication image display highlight section (18) configured to display a position indication image, which is generated based on the captured image of the hand, at a position on the display window, the position being indicated by the hand.

46. The manipulation input apparatus according to claim 45, wherein:
the device is an in-vehicle device;
the display window is arranged closer to a front side of the vehicle than a driver to be seen by the driver; and
the remote manipulation area is arranged closer to the driver than the display window.

47. A vehicular manipulation input apparatus (1) comprising:
a display section (15) including a display window for executing an operation of a device in a vehicle;
a remote manipulation section (12, 12a) provided at a position separated from the display window, the remote manipulation section having a remote manipulation area for remotely executing a manipulation input in the display window;
an input acceptance section (18) configured to accept an input corresponding to a press manipulation position based on a press manipulation to the remote manipulation area;
a hand image capture section (12b) configured to capture an image of a hand that opposes the remote manipulation area;
a position indication image display section (18) configured to display a position indication image, which is generated based on the captured image of the hand, at a position on the display window, the position being indicated by the hand;
a predetermined finger state specification section (18) configured to specify whether a finger state of the hand opposing the remote manipulation area is a predetermined finger state; and
a display mode assignment section (18) configured to execute a display mode switchover control of a display mode assigned to the position indication image display section,
the display mode switchover control
assigning the display mode with a display permission mode to permit a display of the position indication image when the predetermined finger state is specified, and
assigning the display mode with a display prohibition mode to prohibit a display of the position indication image when the predetermined finger state is not specified.

48. A method for displaying a position indication image in a display apparatus having a display section (15) with a display window, and a remote manipulation section (12, 12a) with a remote manipulation area for executing manipulation to the display window remotely,
the position indication image being displayed, when a finger opposes in front of the remote manipulation section, at an on-window position on the display window corresponding to a position of the finger in such a manner to be combined to or superimposed on an image of a background,
the method comprising:
a predetermined finger state specification step (S2, S3) of specifying whether a finger state of the hand opposing the remote manipulation area is a predetermined finger state;
a step (S4) of assigning a display permission mode to permit a display of the position indication image when the predetermined finger state is specified; and
a step (S7) of assigning a display prohibition mode to prohibit a display of the position indication image when the predetermined finger state is not specified.
